(19) Europäisches Patentamt / European Patent Office / Office européen des brevets

(11) **EP 4 693 984 A1**

(12) **EUROPEAN PATENT APPLICATION**

(43) Date of publication:
**11.02.2026 Bulletin 2026/07**

(21) Application number: **25194524.2**

(22) Date of filing: **07.08.2025**

(51) International Patent Classification (IPC):
**H04L 1/1829** (2023.01)

(52) Cooperative Patent Classification (CPC):
**H04L 1/1861; H04L 1/1864**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.08.2024 US 202463680068 P**

(71) Applicant: **Industrial Technology Research
Institute
310401 Hsinchu (TW)**

(72) Inventors:
• **Chen, Jen-Hsien
621 Minxiong Township, Chiayi County (TW)**
• **Lee, Chien-Min
324 Taoyuan City (TW)**
• **Lo, Li-Chung
407 Taichung City (TW)**
• **Wang, Hung-Hsiang
310 Zhudong Township, Hsinchu County (TW)**

(74) Representative: **Becker Kurig & Partner
Patentanwälte mbB
Bavariastraße 7
80336 München (DE)**

(54) **METHOD OF HARQ FEEDBACK AND USER EQUIPMENT USING THE SAME**

(57) A method of hybrid automatic repeat request (HARQ) feedback and a user equipment are provided. The method includes: receiving a first configuration from a network, wherein the first configuration indicates a reception behavior; receiving a second configuration from the network, wherein the second configuration indicates a multiple physical downlink shared channels (multi-PDSCHs) reception; receiving a third configuration from the network, wherein the third configuration indicates a HARQ acknowledgment (ACK) codebook type; and transmitting a HARQ feedback according to the first configuration, the second configuration, and the third configuration.

S6021
receiving a first configuration from a network, wherein the first configuration indicates a reception behavior

S6022
receiving a second configuration from the network, wherein the second configuration indicates a multiple physical downlink shared channels (multi-PDSCHs) reception

S6023
receiving a third configuration from the network, wherein the third configuration indicates a HARQ acknowledgment (ACK) codebook type

S6024
transmitting a HARQ feedback according to the first configuration, the second configuration, and the third configuration

**FIG. 62**

EP 4 693 984 A1

## Description

## BACKGROUND

Technical Field

The disclosure is directed to a method of hybrid automatic repeat request (HARQ) feedback and a user equipment (UE) using the same method.

Description of Related Art

In wireless communication systems, particularly in 5G communication systems, a base station (BS) may transmit and receive signals using different symbol types depending on the configuration of subcarrier allocation. One such configuration is referred to as a Subband-Fully-Duplex (SBFD) symbol, in which the BS (e.g., gNB) is capable of transmitting and receiving simultaneously within different subbands. To manage self-interference, spatial separation between transmission and reception may be required at the BS, resulting in distinct antenna configurations or beamforming settings for transmission and reception.

In contrast, a non-SBFD symbol does not support simultaneous transmission and reception. The BS must switch between transmission and reception in a time-division manner, eliminating the need for complex interference control. As a result, the antenna configuration of the BS during non-SBFD symbols may differ significantly from the antenna configuration used during SBFD symbols.

The contention-based random-access (RA) procedure may be supported in the SBFD symbol. In the SBFD scenario, the UE may experience increased interference when receiving the physical downlink shared channel (PDSCH) due to other UEs may transmit a physical random access channel (PRACH) in the same SBFD symbol, resulting interference that is unpredictable for the gNB. Additionally, when receiving the PDSCH in SBFD symbols, the number of available resource blocks may be reduced compared to non-SBFD symbols, leading to a higher coding rate. Consequently, the error rate of the PDSCH transmitted in SBFD symbols may be higher than the error rate of the PDSCH transmitted in non-SBFD symbols. Therefore, when an binary AND operation has to be performed on the decoding results of PDSCHs transmitted in SBFD symbol and non-SBFD symbols to generate HARQ acknowledgement (ACK) information bits, an effective method to mitigate the impact of the problems mentioned above becomes a critical issue in this technical field.

## SUMMARY

The disclosure is directed to a method of HARQ feedback and a UE using the same method.

The present disclosure is directed to a method of hybrid automatic repeat request (HARQ) feedback, used by a user equipment, including: receiving a first configuration from a network, wherein the first configuration indicates a reception behavior; receiving a second configuration from the network, wherein the second configuration indicates a multiple physical downlink shared channels (multi-PDSCHs) reception; receiving a third configuration from the network, wherein the third configuration indicates a HARQ acknowledgment (ACK) codebook type; and transmitting a HARQ feedback according to the first configuration, the second configuration, and the third configuration.

In one embodiment of the present disclosure, the method further including: determining whether the reception behavior is restricted to a first symbol type only; in response to the reception behavior being restricted to the first symbol type only, not receiving a first physical downlink shared channel (PDSCH) associated with a second symbol type, or determining whether a frequency domain resource of a second PDSCH associated with the first symbol type is overlapped with an uplink resource; and in response to the frequency domain resource being overlapped with the uplink resource, not receiving the second PDSCH.

In one embodiment of the present disclosure, the method further including: receiving an offset set and a time domain resource allocation (TDRA) table, wherein the reception behavior is associated with a first symbol type and a second symbol type, and the HARQ ACK codebook type is a type1 HARQ-ACK codebook type.

In one embodiment of the present disclosure, the method further including: allocating two bits for an occasion for a candidate physical downlink shared channel (PDSCH) reception, wherein the occasion is associated with a type-1 HARQ-ACK codebook.

In one embodiment of the present disclosure, the method further including: determining whether at least one physical downlink shared channel (PDSCH) of the multi-PDSCHs reception is associated with the first symbol type or the second symbol type; in response to at least one first PDSCH being associated with the first symbol type, performing binary AND operation on at least one first HARQ-ACK information bit corresponding to the at least one first PDSCH to determine a first bit of the two bits; in response to no PDSCH being associated with the first symbol type, setting the first bit as a negative-acknowledgment (NACK); in response to at least one second PDSCH being associated with the second symbol type, performing binary AND operation on at least one second HARQ-ACK information bit corresponding to the at least one second PDSCH to determine a second bit of the two bits; and in response to no PDSCH being associated with the second symbol type, setting the second bit as a NACK.

In one embodiment of the present disclosure, the method further including: determining whether time resources of the multi-PDSCHs reception are allocated across the first symbol type and the second symbol type, wherein the time resources are derived according to an offset of the offset set and at least one row of the TDRA table; in response to the time resources being allocated across the first symbol type and the second symbol type, allocating two bits for an occasion for a candidate physical downlink shared channel (PDSCH) reception associated with a type-1 HARQ-ACK codebook; and in response to the time resources not being allocated across the first symbol type and the second symbol type, allocating one bit for the occasion for the candidate PDSCH reception associated with the type-1 HARQ-ACK codebook.

In one embodiment of the present disclosure, the method further including: for an occasion for at least one candidate physical downlink shared channel (PDSCH) reception associated with a type-1 HARQ-ACK codebook, determining whether time resources of the multi-PDSCHs reception are allocated across the first symbol type and the second symbol type, wherein the time resources are derived by at least one row of the TDRA table, wherein the at least one row corresponds to at least one PDSCH associated with the occasion; in response to the time resources being allocated across the first symbol type and the second symbol type, allocating two bits for the occasion; and in response to the time resources not being allocated across the first symbol type and the second symbol type, allocating one bit for the occasion.

In one embodiment of the present disclosure, the method further including: receiving a first offset set, a second offset set, a first time domain resource allocation (TDRA) table, and a second TDRA table, wherein the reception behavior is associated with a first symbol type and a second symbol type, and the HARQ ACK codebook type is a type-1 HARQ-ACK codebook type.

In one embodiment of the present disclosure, the method further including: determining a first sub-codebook according to the first offset set and the first TDRA table; and determining a second sub-codebook according to the second offset and the second TDRA table.

In one embodiment of the present disclosure, the method further including: concatenating the first sub-codebook and the second sub-codebook to generate the type-1 HARQ-ACK codebook.

In one embodiment of the present disclosure, the method further including: allocating one bit for an occasion associated with the first sub-codebook.

In one embodiment of the present disclosure, the method further including: allocating two bits for an occasion associated with the second sub-codebook.

In one embodiment of the present disclosure, the method further including: receiving a number of bundling groups, wherein the reception behavior is associated with a first symbol type and a second symbol type, and the HARQ ACK codebook type is a type-2 HARQ-ACK codebook type.

In one embodiment of the present disclosure, a part of M bits of the HARQ feedback is used for at least one physical downlink shared channel (PDSCH) associated with the first symbol type of the multi-PDSCHs reception, and a remaining part of M bits of the HARQ feedback is used for at least one PDSCH associated with the second symbol type of the multi-PDSCHs reception, wherein M is the number of bundling groups.

In one embodiment of the present disclosure, the method further including: receiving a number of bundling groups and a value N, wherein the reception behavior is associated with a first symbol type and a second symbol type, and the HARQ ACK codebook type is a type-2 HARQ-ACK codebook type, wherein N is a positive integer.

In one embodiment of the present disclosure, N bits of the HARQ feedback is used for at least one physical downlink shared channel (PDSCH) associated with the first symbol type of the multi-PDSCHs reception, and (M-N) bits of the HARQ feedback is used for at least one PDSCH associated with the second symbol type of the multi-PDSCHs reception, wherein M is the number of bundling groups.

In one embodiment of the present disclosure, the method further including: receiving a first number of bundling groups and a second number of bundling groups, wherein the reception behavior is associated with a first symbol type and a second symbol type, and the HARQ ACK codebook type is a type-2 HARQ-ACK codebook type.

In one embodiment of the present disclosure, the method M1 bits of the HARQ feedback is used for at least one physical downlink shared channel (PDSCH) associated with the first symbol type of the multi-PDSCHs reception, and M2 bits of the HARQ feedback is used for at least one PDSCH associated with the second symbol type of the multi-PDSCHs reception, wherein M1 is the first number of bundling groups, and M2 is the second number of bundling groups.

In one embodiment of the present disclosure, the method further including: receiving an offset set and a time domain resource allocation (TDRA) table, wherein the reception behavior is restricted to a first symbol type only, and the HARQ ACK codebook type is a type-1 HARQ-ACK codebook type.

In one embodiment of the present disclosure, the method further including: determining whether at least one time resource of the multi-PDSCHs is associated with a second symbol type, wherein the at least one time resource are derived according to a row of the TDRA table; and in response to the at least one time resource being associated with the second symbol type, removing the row from the TDRA table.

In one embodiment of the present disclosure, the method further including: in response to the reception behavior is restricted to the first symbol type only, performing binary AND operation on at least one HARQ-ACK information bit corresponding to at least one physical downlink shared channel (PDSCH) associated with the multi-PDSCHs reception, wherein the at least one PDSCH is associated with the first symbol type only.

The present disclosure is directed to a user equipment for hybrid automatic repeat request (HARQ) feedback. The user equipment includes a transceiver and a processor. The processor is coupled to the transceiver, wherein the processor is configured to: receive a first configuration from a network via the transceiver, wherein the first configuration indicates a reception behavior; receive a second configuration from the network via the transceiver, wherein the second configuration indicates a multiple physical downlink shared channels (multi-PDSCHs) reception; receive a third configuration from the network via the transceiver, wherein the third configuration indicates a HARQ acknowledgment (ACK) codebook type; and transmitting a HARQ feedback via the transceiver according to the first configuration, the second configuration, and the third configuration.

To make the aforementioned more comprehensible, several embodiments accompanied with drawings are described in detail as follows.

**BRIEF DESCRIPTION OF THE DRAWINGS**

The accompanying drawings are included to provide a further understanding of the disclosure, and are incorporated in and constitute a part of this specification. The drawings illustrate exemplary embodiments of the disclosure and, together with the description, serve to explain the principles of the disclosure.

FIG. 1 illustrates a schematic diagram of RA procedure according to one embodiment of the present disclosure.

FIG. 2 illustrates a schematic diagram of PDSCHs reception in both SBFD symbols and non-SBFD symbols according to one embodiment of the present disclosure.

FIG. 3 illustrate a schematic diagram of offset $K_1$ according to one embodiment of the present disclosure.

FIG. 4 illustrates a schematic diagram of a time domain resource allocation (TDRA) table 410 according to one embodiment of the present disclosure.

FIG. 5 illustrates a flowchart of pseudo code of creating occasions for candidate PDSCH reception according to one embodiment of the present disclosure.

FIG. 6 illustrates a schematic diagram of the pruning procedure according to one embodiment of the present disclosure.

FIG. 7 illustrates a schematic diagram of HARQ-ACK information according to one embodiment of the present disclosure.

FIG. 8 illustrates a schematic diagram of a binary AND operation according to one embodiment of the present disclosure.

FIG. 9 illustrates a schematic diagram of binary AND operations according to one embodiment of the present disclosure.

FIG. 10 illustrates a schematic diagram of multi-PDSCHs according to one embodiment of the present disclosure.

FIG. 11 illustrates a schematic diagram of symbol types of ISCA operation according to one embodiment of the present disclosure.

FIG. 12 illustrates a schematic diagram of multi-PDSCHs according to one embodiment of the present disclosure.

FIG. 13 illustrates a schematic diagram of HARQ feedback for multi-PDSCHs reception according to one embodiment of the present disclosure.

FIG. 14 illustrates a schematic diagram of HARQ-ACK bits allocation according to one embodiment of the present disclosure.

FIG. 15 illustrates a schematic diagram of HARQ feedback for multi-PDSCHs reception according to one embodiment of the present disclosure.

FIG. 16 illustrates s flowchart of pseudo code of bit allocation for occasions according to one embodiment of the present disclosure.

FIG. 17 illustrates a schematic diagram of multi-PDSCHs across different symbol types according to one embodiment of the present disclosure.

FIG. 18 illustrates a schematic diagram of generating a HARQ-ACK bit according to one embodiment of the present disclosure.

FIG. 19 illustrates a schematic diagram of generating HARQ-ACK bits based on Floor operation according to one embodiment of the present disclosure.

FIG. 20 illustrates a schematic diagram of generating HARQ-ACK bits based on Mod operation according to one embodiment of the present disclosure.

FIG. 21 illustrates a schematic diagram of generating one HARQ-ACK bit according to one embodiment of the present disclosure.

FIG. 22 illustrates a schematic diagram of generating two HARQ-ACK bits according to one embodiment of the present disclosure.

FIG. 23 illustrates s flowchart of pseudo code of bit allocation for occasions according to one embodiment of the present disclosure.

FIG. 24 illustrates a schematic diagram of generating one HARQ-ACK bit according to one embodiment of the present disclosure.

FIG. 25 illustrates a schematic diagram of generating one HARQ-ACK bit according to one embodiment of the present disclosure.

FIG. 26 illustrates s flowchart of pseudo code of bit allocation for occasions according to one embodiment of the present disclosure.

FIG. 27 illustrates a schematic diagram of HARQ-ACK bits allocation according to one embodiment of the present disclosure.

FIG. 28 illustrates a schematic diagram of HARQ-ACK bits allocation according to one embodiment of the present disclosure.

FIG. 29 illustrates a flowchart of obtaining a type-1 HARQ-ACK codebook according to one embodiment of the present disclosure.

FIG. 30 illustrates a schematic diagram of PDSCHs grouping according to one embodiment of the present disclosure.

FIG. 31 illustrates a schematic diagram of PDSCHs grouping according to one embodiment of the present disclosure.

FIG. 32 illustrates a schematic diagram of PDSCHs grouping according to one embodiment of the present disclosure.

FIG. 33 illustrates a schematic diagram of the ratio of PDSCH EPRE to DMRS EPRE according to one embodiment of the present disclosure.

FIG. 34 illustrates a schematic diagram of Case 2 according to one embodiment of the present disclosure.

FIG. 35 illustrates a schematic diagram of the HARQ process ID according to one embodiment of the present disclosure.

FIG. 36 illustrates a schematic diagram of Case 2 according to one embodiment of the present disclosure.

FIG. 37 illustrates a schematic diagram of PUCCH transmission according to one embodiment of the present disclosure.

FIG. 38 illustrates a schematic diagram of the HARQ process ID according to one embodiment of the present disclosure.

FIG. 39 illustrates a schematic diagram of PUCCH transmission according to one embodiment of the present disclosure.

FIG. 40 illustrates a schematic diagram of separate PUCCH occasions determination according to one embodiment of the present disclosure.

FIG. 41 illustrates a schematic diagram of PUCCH occasions scheduling according to one embodiment of the present disclosure.

FIG. 42 illustrates a schematic diagram of PUCCH occasions scheduling according to one embodiment of the present disclosure.

FIG. 43 illustrates a schematic diagram of type-1 HARQ-ACK codebook report according to one embodiment of the present disclosure.

FIG. 44 illustrates a schematic diagram of type-2 HARQ-ACK codebook report according to one embodiment of the present disclosure.

FIG. 45 illustrates a schematic diagram of type-2 HARQ-ACK codebook report according to one embodiment of the present disclosure.

FIG. 46 illustrates a schematic diagram of HARQ feedback according to one embodiment of the present disclosure.

FIG. 47 illustrates a schematic diagram of HARQ feedback according to one embodiment of the present disclosure.

FIG. 48 illustrates a schematic diagram of HARQ feedback according to one embodiment of the present disclosure.

FIG. 49 illustrates a schematic diagram of HARQ feedback according to one embodiment of the present disclosure.

FIG. 50 illustrates a schematic diagram of HARQ feedback according to one embodiment of the present disclosure.

FIG. 51 illustrates a schematic diagram of HARQ feedback according to one embodiment of the present disclosure.

FIG. 52 illustrates a schematic diagram of HARQ feedback according to one embodiment of the present disclosure.

FIG. 53 illustrates a schematic diagram of HARQ feedback according to one embodiment of the present disclosure.

FIG. 54 illustrates a schematic diagram of HARQ feedback according to one embodiment of the present disclosure.

FIG. 55 illustrates a schematic diagram of HARQ feedback according to one embodiment of the present disclosure.

FIG. 56 illustrates a schematic diagram of PUSCH transmission according to one embodiment of the present disclosure.

FIG. 57 illustrates a schematic diagram of HARQ feedback according to one embodiment of the present disclosure.

FIG. 58 illustrates a schematic diagram of HARQ feedback according to one embodiment of the present disclosure.

FIG. 59 illustrates a schematic diagram of PUSCH transmission according to one embodiment of the present disclosure.

FIG. 60 illustrates a schematic diagram of determining QCL assumption according to one embodiment of the present disclosure.

FIG. 61 illustrates a schematic diagram of redundant occasion according to one embodiment of the present disclosure.

FIG. 62 illustrates a flowchart of a method of HARQ feedback according to one embodiment of the present disclosure.

FIG. 63 illustrates a schematic diagram of a UE according to one embodiment of the present disclosure.

## DESCRIPTION OF THE EMBODIMENTS

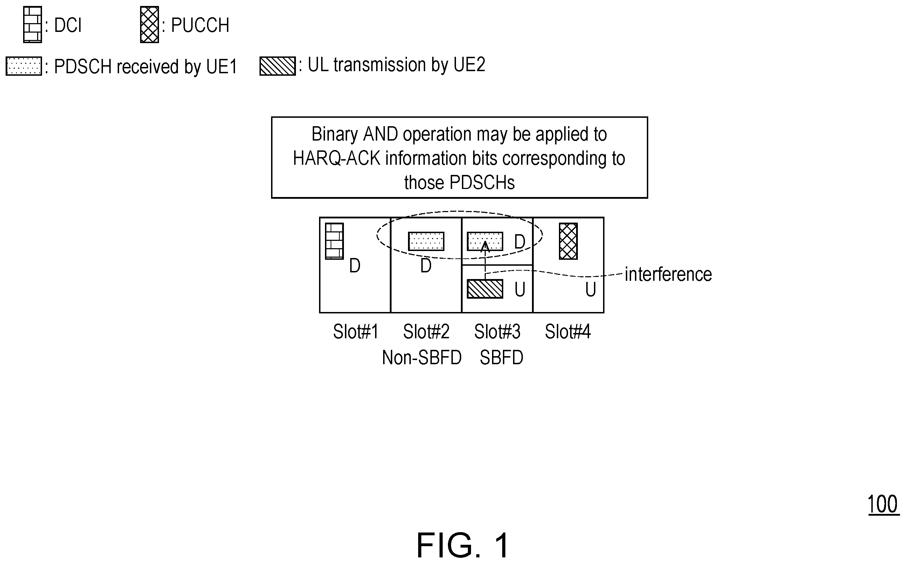

FIG. 1 illustrates a schematic diagram 100 of RA procedure according to one embodiment of the present disclosure. From the perspective of the network (or BS, gNB), downlink (DL) reception and uplink (UL) transmission may be performed in a SBFD symbol simultaneously. For multiple PDSCHs (multi-PDSCHs) scheduling, a binary AND operation may be applied to HARQ acknowledge (ACK) information bits. Since the UL transmission in the SBFD symbol may cause interference to the DL reception in the same SBFD symbol, the error rate of the PDSCH reception in the SBFD symbol may increase. If the PDSCH reception fails, the UE may have to feedback a HARK negative-acknowledgement (NACK) to the network.

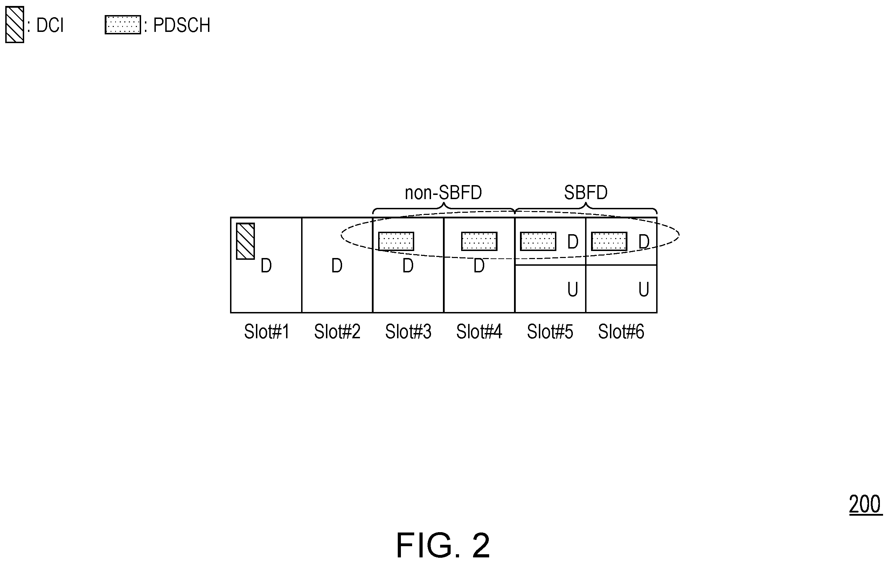

For UL transmissions and DL receptions across SBFD symbols and non-SBFD symbols in different slots (each transmission/reception within a slot has either all SBFD or all non-SBFD symbols) for an SBFD aware UE, the SBFD-aware UE may be provided with one of the following configurations: Configuration 1: the transmissions/receptions could be in SBFD symbols and non-SBFD symbols; Configuration 2: the transmissions/receptions may be restricted to SBFD symbols only or non-SBFD symbols only. FIG. 2 illustrates a schematic diagram 200 of PDSCHs reception in both SBFD symbols and non-SBFD symbols according to one embodiment of the present disclosure. Multiple PDSCHs (e.g., four PDSCHs) scheduled by a single downlink control information (DCI) may across non-SBFD symbol type (e.g., slot#3 and slot#4) and SBFD symbol type (e.g., slot#5 and slot#6).

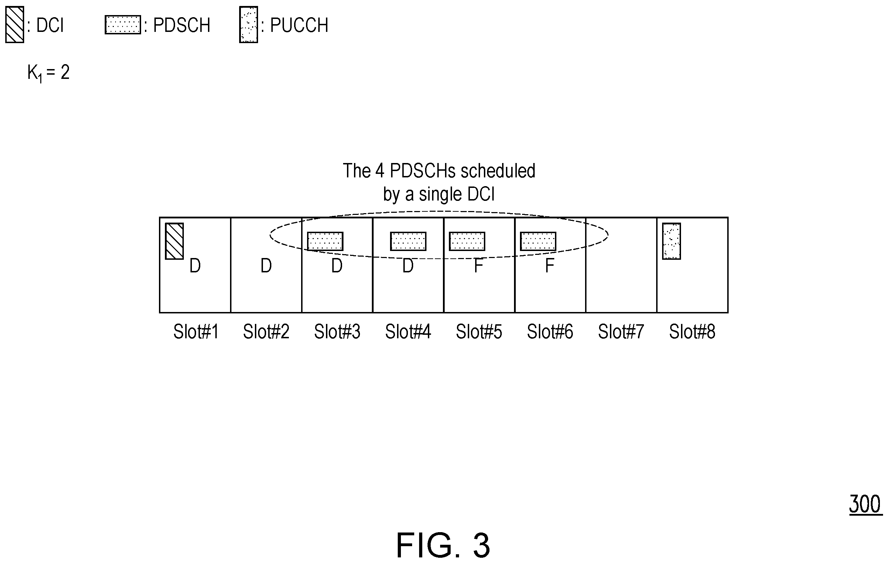

For a DCI scheduling multiple PDSCHs, HARQ-ACK information bits corresponding to PDSCHs scheduled by the DCI may be transmitted with a single physical uplink control channel (PUCCH) in a slot that is determined based on $K_1$, where $K_1$ (indicated by *PDSCH-to-HARQ_feedback* timing indicator field in the DCI, or provided by *dl-DataToUL-ACK* if the *PDSCH-to-HARQ_feedback* timing indicator field is not present in the DCI) may indicate the slot offset between the slot of the last PDSCH scheduled by the DCI and the slot carrying the HARQ-ACK information bits corresponding to the scheduled PDSCHs. FIG. 3 illustrate a schematic diagram 300 of offset $K_1$ according to one embodiment of the present disclosure. $K_1 = 2$ may indicate the slot offset between the slot (e.g., slot#6) of the last PDSCH scheduled by the DCI and the slot (e.g., slot#8) carrying the HARQ-ACK information corresponding to the scheduled PDSCHs.

In one embodiment, a UE may be configured to monitor DCI formats including a first DCI format and a second DCI format. The first DCI format may be associated with a first set of slot timing values $K_1$ (i.e., offset set of $K_1$) and a first time domain resource allocation (TDRA) table, and the second DCI format may be associated with a second set of slot timing values $K_1$ and a second TDRA table. A codebook (e.g., type-1 HARQ-ACK codebook or type-2 HARQ-ACK codebook) or a codebook type may be configured to the UE. For a PUCCH occasion, a type-1 HARQ-ACK codebook may be associated with a third set of slot timing values $K_1$ and a set of row indexes. The third set of timing values $K_1$ may be determined by the union of the first set of timing values $K_1$ and the second set of timing values $K_1$. The set of row indexes may be determined by the union of the first TDRA table and a second TDRA table.

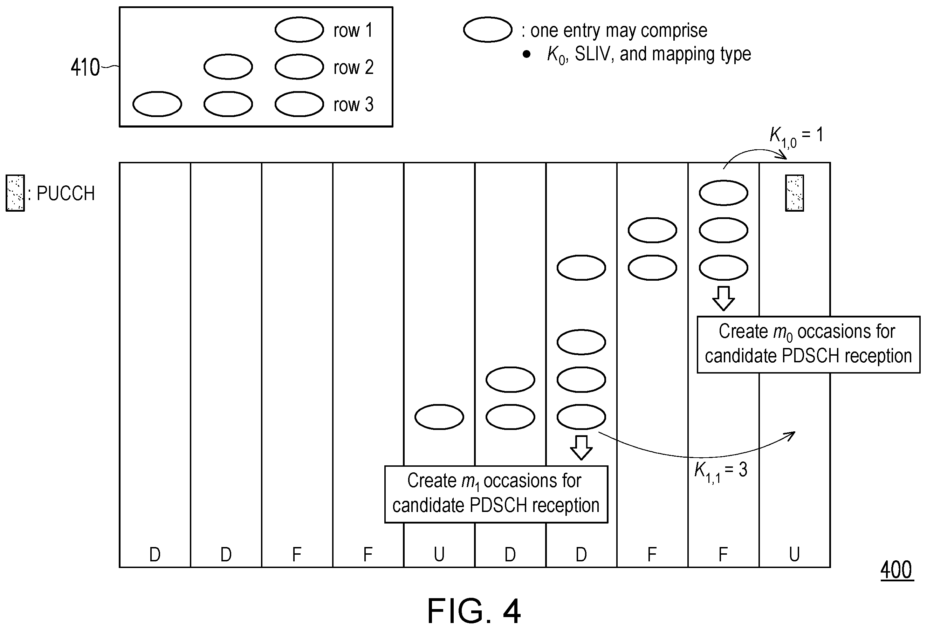

FIG. 4 illustrates a schematic diagram 400 of a time domain resource allocation (TDRA) table 410 according to one embodiment of the present disclosure, wherein the TDRA table 410 may be associated with a type-1 HARQ-ACK codebook. A UE may be configured with the TDRA 410 and a set of slot timing values $K_1$, wherein the TDRA table 410 may include one or more rows. For example, the TDRA table 410 may include row 1, row 2, and row 3. Each row may be associated with a reception corresponding to one or more PDSCHs. For example, row 1 may be associated with a reception corresponding to one PDSCH allocated in a slot, row 2 may be associated with a reception corresponding to two PDSCHs allocated in two slots respectively, and row 3 may be associated with a reception corresponds to three PDSCHs allocated in three slots respectively.

A row may indicate one or more entries. Each entry may include information of time resource allocation for the corresponding PDSCH, wherein the information may include a slot offset $K_0$, a start and length indicator value (SLIV), and a mapping type. $K_0$ may be the slot offset between a slot of a DCI and a slot corresponding to an entry scheduling by the DCI (e.g., the DCI received by the UE may include a configuration indicating a multi-PDSCHs reception).

One or more PUCCH occasions may be created (e.g., from the perspective of the UE or the network) based on the TDRA table 410 and/or the set of slot timing values $K_1$. A PUCCH may be scheduled for feedbacking the HARQ-ACK/NACK information for the occasion.

Assume that the $K_1$ includes $K_{1,0} = 1$ and $K_{1,1} = 3$. In one example, $m_0$ occasions may be created for the candidate PDSCH reception based on $K_{1,0} = 1$, where $m_0$ is a positive integer. Each of $m_0$ occasions may be associated with the reception for one or more PDSCHs, wherein the slot offset between the last one of the PDSCHs and the corresponding PUCCH may be equal to $K_{1,0} = 1$, as shown in FIG. 4. In one example, $m_1$ occasions may be created for the candidate PDSCH reception based on $K_{1,1} = 3$, where $m_1$ is a positive integer. Each of $m_1$ occasions may be associated with the reception for one or more PDSCHs, wherein the slot offset between the last one of the PDSCHs and the corresponding PUCCH may be equal to $K_{1,1} = 3$, as shown in FIG. 4. It should be noted that, $m_1$ may or may not be the same as $m_0$.

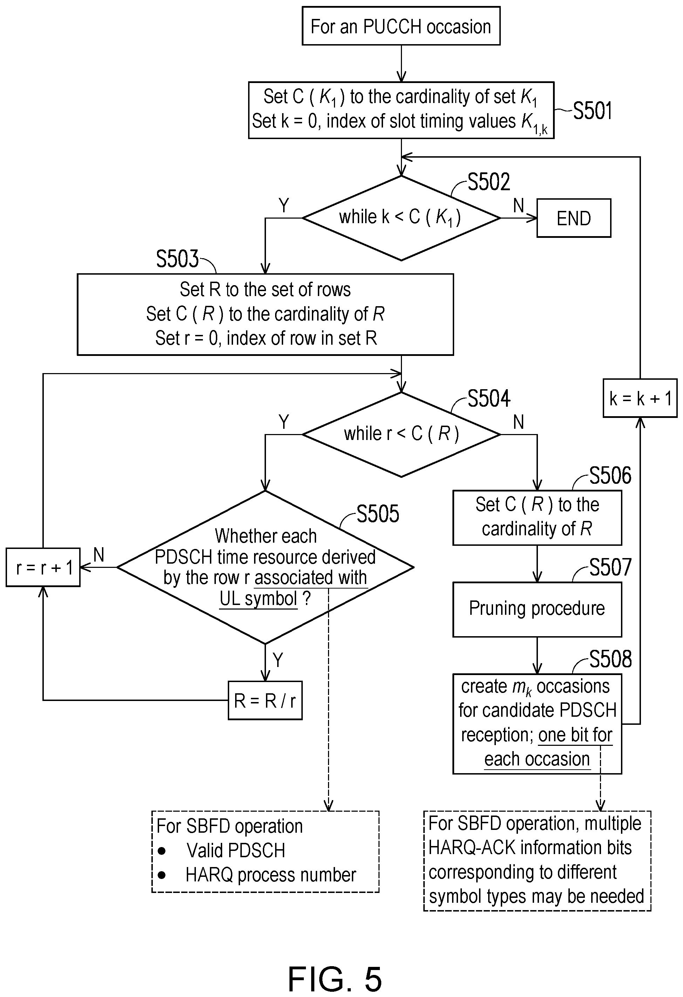

FIG. 5 illustrates a flowchart of pseudo code of creating occasions for candidate PDSCH reception according to one embodiment of the present disclosure. In step S501, the UE may set $C(K_1)$ to the cardinality of set $K_1$ and set k = 0, where k represents an index of a slot timing value $K_{1,k}$ in set $K_1$.

In step S502, the UE may determine whether $k < C(K_1)$. If $k < C(K_1)$, the UE may execute step S503. If $k \geq C(K_1)$, the UE may end the procedure.

In step S503, the UE may set R to the set of rows of a TDRA table, set $C(R)$ to the cardinality of R, and set r = 0, where r represents an index of a row.

In step S504, the UE may determine whether $r < C(R)$. If $r < C(R)$, the UE may execute step S505. If $r \geq C(R)$, the UE may execute step S506.

In step S505, the UE may derive one or more time resources for a PDSCH reception based on the row r and the offset $K_{1,k}$, and the UE may determine whether each PDSCH time resource associated with a UL symbol. If each PDSCH time resource derived by the row r is associated with the UL symbol, the UE may make $R = R/r$ and $r = r + 1$, and execute step S504 again, where $R = R/r$ represents removing row r from the set of rows R. If no time resource derived by the row r is associated with the UL symbol, the UE may make $r = r + 1$ and execute step S504 again.

In step S506, the UE may set $C(R)$ to the cardinality of R.

In step S507, the UE may perform pruning procedure for generating a codebook (e.g., a type-1 HARQ-ACK codebook) based on row r and timing values $K_{1,k}$.

In step S508, as the result of the pruning procedure, the UE may create $m_k$ occasions for the candidate PDSCH reception. The UE may make $k = k + 1$ and execute step S502 again. In one embodiment, one bit may be allocated for HARQ-ACK information for each occasion. In one embodiment, if the PDSCH reception across different symbol types (e.g., SBFD and non-SBFD symbols), multiple HARQ-ACK information bits may be allocated for the corresponding occasion.

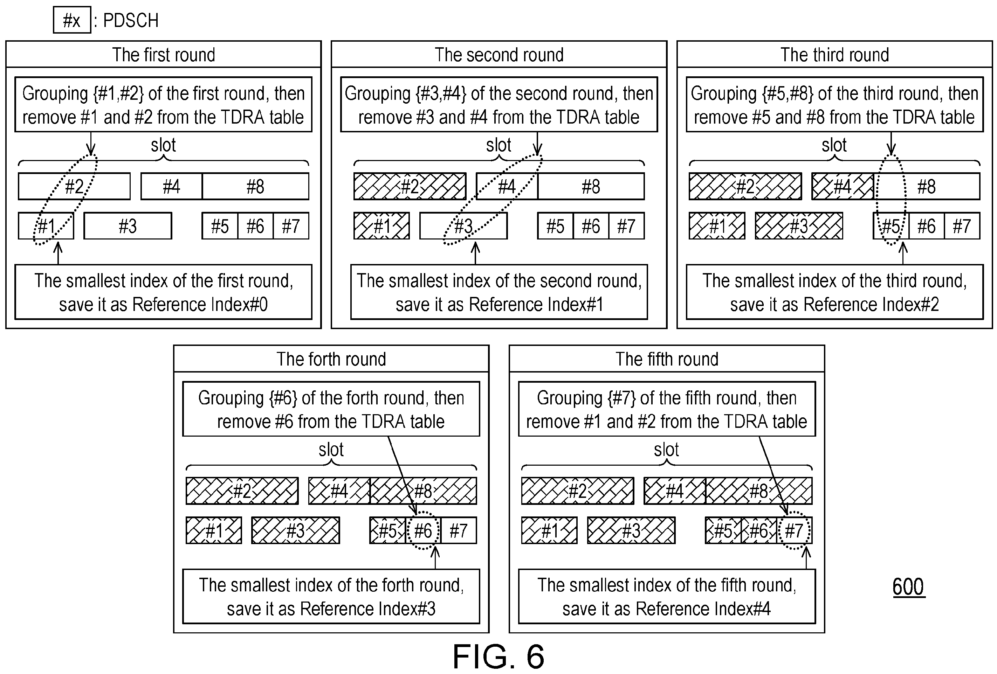

FIG. 6 illustrates a schematic diagram 600 of the pruning procedure according to one embodiment of the present disclosure. A row of the TDRA table (e.g., corresponding to type-1 codebook type) may indicate multiple PDSCHs. The PDSCHs may overlap with each other in time domain. In one embodiment, the UE may preferentially group PDSCHs that overlap in the time domain to share the same HARQ-ACK information bit. In one embodiment, the UE may perform grouping for the PDSCH with the smaller index earlier and perform grouping for the PDSCH with the larger index later.

For example, assume that a row of the TDRA table indicating multiple PDSCHs including PDSCH #1 to PDSCH#8. In the first round of the pruning procedure, the UE may perform grouping for PDSCH#1 since PDSCH#1 has the smallest index. In response to PDSCH#1 overlapping with PDSCH#2 in time, the UE may group PDSCH#1 and PDSCH#2 to obtain a group corresponding to Reference Index#0. PDSCH#1 and PDSCH#2 may be removed accordingly.

In the second round of the pruning procedure, the UE may perform grouping for PDSCH#3 since PDSCH#3 has the smallest index in the TDRA table. In response to PDSCH#3 overlapping with PDSCH#4 in time, the UE may group PDSCH#3 and PDSCH#4 to obtain a group corresponding to Reference Index#1. PDSCH#3 and PDSCH#4 may be removed accordingly.

In the third round of the pruning procedure, the UE may perform grouping for PDSCH#5 since PDSCH#5 has the smallest index in the TDRA table. In response to PDSCH#5 overlapping with PDSCH#8 in time, the UE may group PDSCH#5 and PDSCH#8 to obtain a group corresponding to Reference Index#2. PDSCH#5 and PDSCH#8 may be removed accordingly.

In the fourth round of the pruning procedure, the UE may perform grouping for PDSCH#6 since PDSCH#6 has the smallest index in the TDRA table. In response to PDSCH#6 not overlapping with any PDSCH in time, the UE may group PDSCH#6 alone to obtain a group corresponding to Reference Index#3. PDSCH#6 may be removed accordingly.

In the fifth round of the pruning procedure, the UE may perform grouping for PDSCH#7 since PDSCH#7 is the only PDSCH remains in the TDRA table. In response to PDSCH#7 not overlapping with any PDSCH in time, the UE may group PDSCH#7 alone to obtain a group corresponding to Reference Index#4. PDSCH#7 may be removed accordingly.

The UE may allocate one HARQ-ACK information bit for one reference index. Since 5 reference indexes have been obtained, the UE may allocate 5 bits for the 5 occasions respectively, so as to feedback HARQ-ACK information for the PDSCH reception.

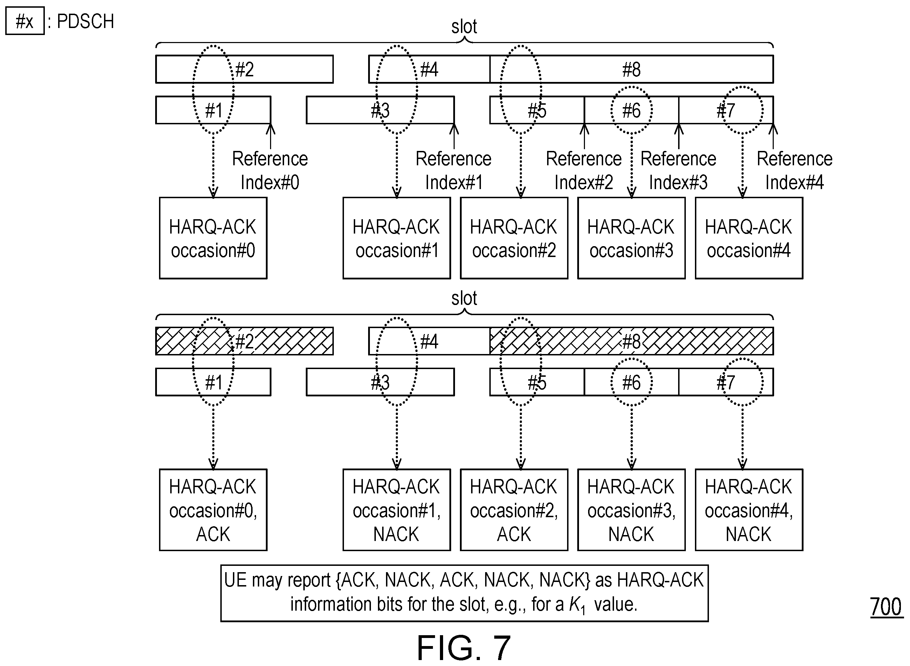

FIG. 7 illustrates a schematic diagram 700 of HARQ-ACK information according to one embodiment of the present disclosure. The group with Reference Index#0 may share the same HARQ-ACK occasion#0, the group with Reference Index#1 may share the same HARQ-ACK occasion#1, the group with Reference Index#2 may share the same HARQ-ACK occasion#2, the group with Reference Index#3 may share the same HARQ-ACK occasion#3, and the group with Reference Index#4 may share the same HARQ-ACK occasion#4. Assume that the UE receives PDSCH#2 and PDSCH#8. The UE may determine that the HARQ-ACK occasion #0 is corresponded to an ACK based on the received PDSCH#2, and determine that the HARQ-ACK occasion #2 is corresponded to an ACK based on the received PDSCH#8. Since the UE does not receive any PDSCH in the time resources corresponding to Reference Index#1, #3, and #4, the UE may determine that the HARQ-ACK occasion #1, #3, and #4 are corresponded to a NACK. Accordingly, the UE may report {ACK, NACK, ACK, NACK, NACK} as HARQ-ACK information bits for the slot (e.g., the slot corresponding to a $K_1$ value and type-1 codebook type). The HARQ feedback including the HARQ-ACK information bits may be transmitted from the UE to the network.

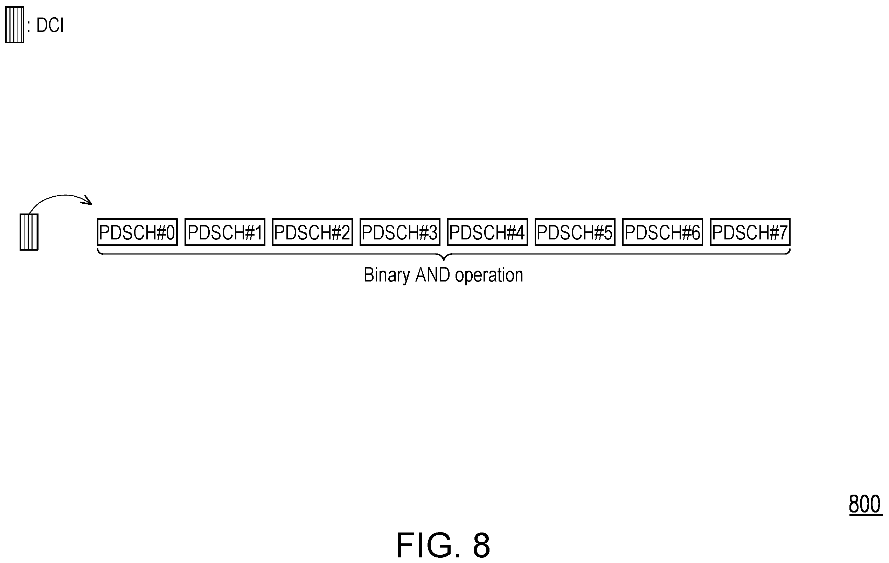

In one embodiment a binary AND operation may be performed for multiple PDSCHs scheduling corresponding to type-1 HARQ-ACK codebook. FIG. 8 illustrates a schematic diagram 800 of a binary AND operation according to one embodiment of the present disclosure. A PDSCH may be associated with an occasion, and the PDSCH may be scheduled by a DCI format indicating a TDRA row that includes more than one SLIV entry. A binary AND operation of the HARQ-ACK information bits corresponding to all transport blocks in PDSCHs may be scheduled by a DCI format, wherein the PDSCHs do not overlap with uplink symbols indicated by *tdd-UL-DL-ConfigurationCommon* or *tdd-UL-DL-ConfigurationDedicated.* If the PDSCHs (e.g., frequency domain resources of the PDSCHs) are overlapped with the UL symbols or UL resources, the UE may not receive the PDSCHs. In one embodiment, for SBFD operation, the binary AND operation may be applied per symbol type. For example, a binary AND operation may be applied to the SBFD symbol type, and the other binary AND operation may be applied to the non-SBFD symbol type.

A binary AND operation may be applied to HARQ-ACK information bits corresponding to multiple PDSCHs. If all the PDSCHs correspond to ACKs (e.g., value "1"), the result of the binary AND operation is an ACK (e.g., value "1"). If at least one of PDSCH correspond to a NACK (value "0"), the result of the binary AND operation is a NACK (e.g., value "0").

A UE may be scheduled with N PDSCHs reception by a single DCI, where N is a positive integer. A type-2 HARQ-ACK codebook with the number of bundling groups (parameter *numberOfHARQ-ACK-BundlingGroups*) M for the N PDSCHs may be configured to the UE, where M is a positive integer. N PDSCHs are indexed from n = 0 to n = N-1, wherein index n = 0 may be the first scheduled PDSCH and index n = N-1 may be the last scheduled PDSCH. A binary AND operation may be applied to HARQ-ACK information bits corresponding to PDSCHs satisfying Mod (n, M) = 0, 1, 2, ..., (M-1) to create the first, the second, ..., the M-th HARQ-ACK bit.

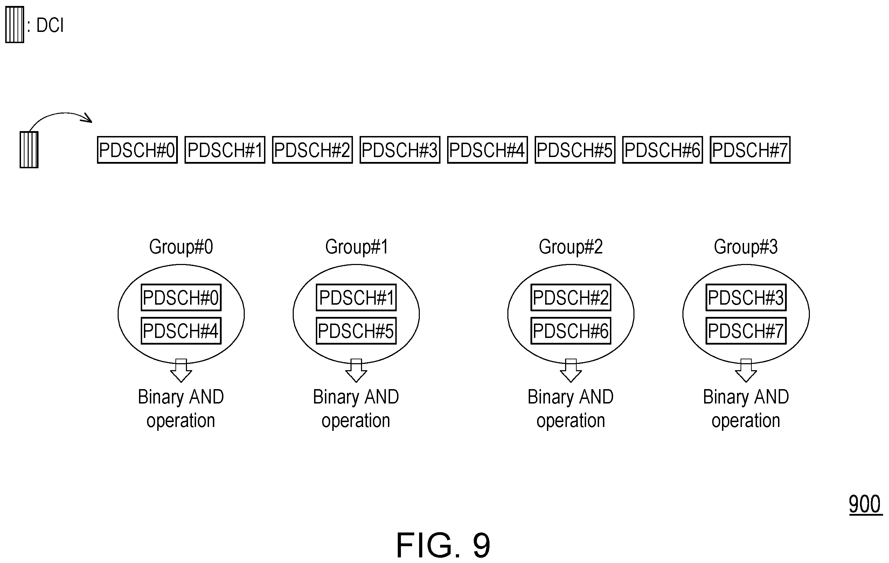

FIG. 9 illustrates a schematic diagram 900 of binary AND operations according to one embodiment of the present disclosure. Assume that Group#0 include PDSCH#0 and #4, Group#1 include PDSCH#1 and #5, Group#2 include PDSCH#2 and #6, Group#3 include PDSCH#3 and #7, and M = 4. A binary AND operation may be applied to PDSCH#0 and PDSCH#4 satisfying Mod (n, 4) = 0 to create the first HARQ-ACK bit. A binary AND operation may be applied to PDSCH#1 and PDSCH#5 satisfying Mod (n, 4) = 1 to create the second HARQ-ACK bit. A binary AND operation may be applied to PDSCH#2 and PDSCH#6 satisfying Mod (n, 4) = 2 to create the third HARQ-ACK bit. A binary AND operation may be applied to PDSCH#3 and PDSCH#7 satisfying Mod (n, 4) = 3 to create the fourth HARQ-ACK bit.

In one embodiment, for SBFD operation, one or more HARQ-ACK information bits of PDSCHs associated with the same symbol type (e.g., SBFD or non-SBFD) may be jointly considered, so as to perform the binary AND operation.

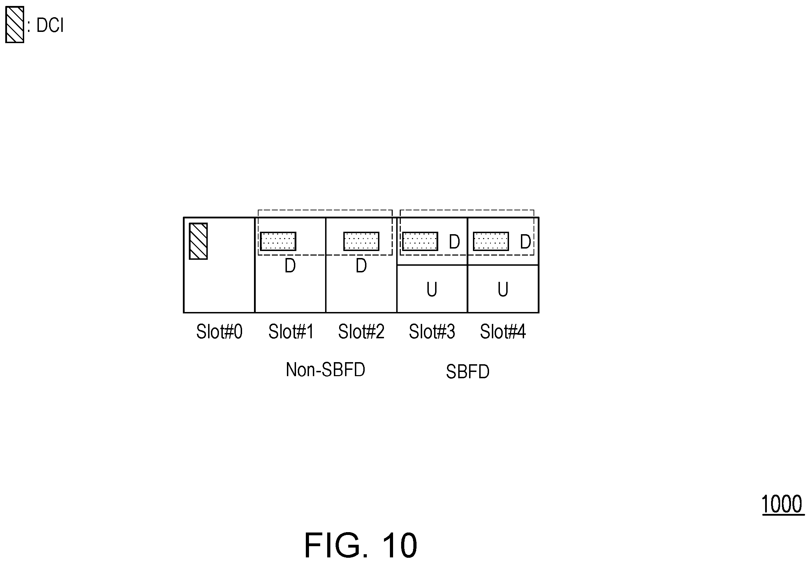

FIG. 10 illustrates a schematic diagram 1000 of multi-PDSCHs according to one embodiment of the present disclosure, where "D" represents the slot for downlink reception and "U" represent the slot for uplink transmission. Multiple PDSCHs (e.g., four PDSCHs) may be scheduled by a single DCI, wherein some PDSCHs (e.g., two PDSCHs) are scheduled in slots (e.g., slot#1 and slot#2) corresponding to a symbol type (e.g., non-SBFD symbol), and the other PDSCHs (e.g., two PDSCHs) are scheduled in slots (slot#3 and slot#4) corresponding to the other symbol type (e.g., SBFD symbol). One or more HARQ-ACK information bits of PDSCHs in slots (e.g., slot#1 and slot#2) corresponding to the same symbol type may be jointly considered. For example, a binary AND operation may be applied to the PDSCHs in slot#1 and slot#2. One or more HARQ-ACK information bits of PDSCHs in slot#3 and slot#4 may be jointly considered. For example, a binary AND operation may be applied to the PDSCHs in slot#3 and slot#4.

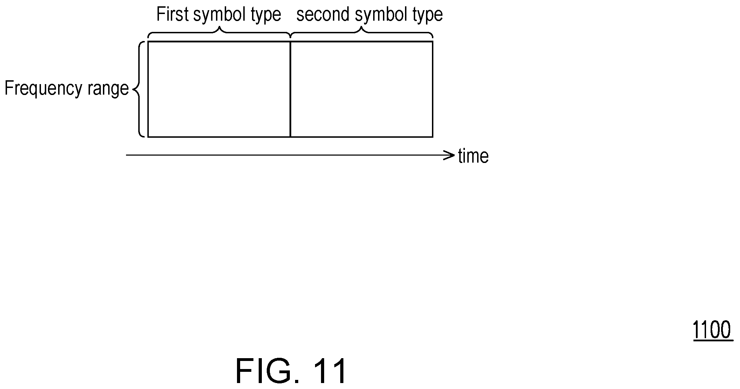

FIG. 11 illustrates a schematic diagram 1100 of symbol types of ISCA operation according to one embodiment of the present disclosure. For integrated sensing and communication (ISAC) operation, a gNB may perform communication only within a first symbol type, and may perform both of communication and sensing within a second symbol type, wherein the first symbol type may have a first interference level, and the second symbol type may have a second interference level.

In one embodiment, for SBFD operation, one or more HARQ-ACK information bits of PDSCHs associated with the same symbol type (e.g., communication and sensing symbol or communication symbol) may be jointly considered, so as to perform the binary AND operation.

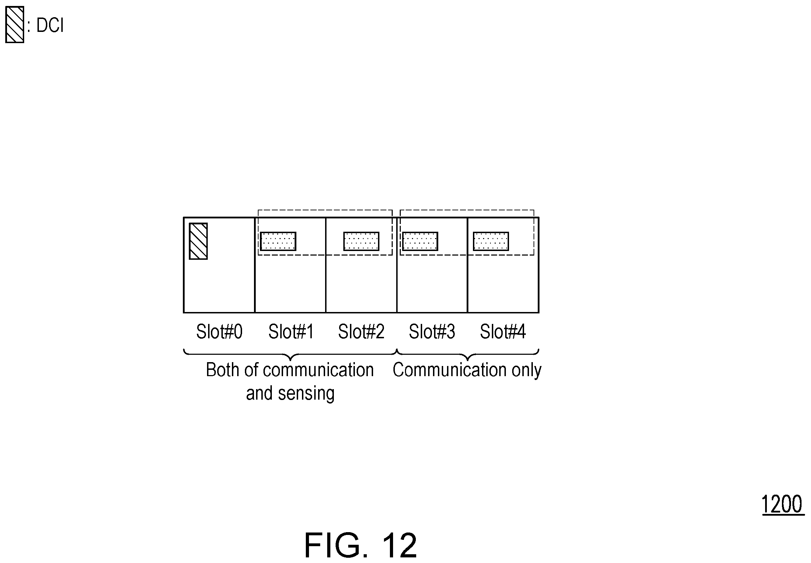

FIG. 12 illustrates a schematic diagram 1200 of multi-PDSCHs according to one embodiment of the present disclosure. Multiple PDSCHs (e.g., four PDSCHs) may be scheduled by a single DCI, wherein some PDSCHs (e.g., two PDSCHs) are scheduled in slots (e.g., slot#1 and slot#2) corresponding to a symbol type (e.g., the communication and sensing symbols), and the other PDSCHs (e.g., two PDSCHs) are scheduled in slots (e.g., slot#3 and slot#4) corresponding to the other symbol type (e.g., communication symbols (e.g., symbols for communication only)). One or more HARQ-ACK information bits of PDSCHs in slots (e.g., slot#1 and slot#2) corresponding to the same symbol type may be jointly considered. For example, a binary AND operation may be applied to the PDSCHs in slot#1 and slot#2. One or more HARQ-ACK information bits of PDSCHs in slot#3 and slot#4 may be jointly considered. For example, a binary AND operation may be applied to the PDSCHs in slot#3 and slot#4.

In one embodiment, separate HARQ-ACK bits may be allocated for PDSCHs associated with different symbol types. A UE may be scheduled with multiple PDSCHs reception by a single DCI, and the single DCI may indicate a $K_1$ value for transmitting corresponding HARQ-ACK information, wherein some PDSCHs of the multiple PDSCHs may be associated with a first symbol type (e.g., non-SBFD symbol), and the other PDSCHs of the multiple PDSCHs may be associated with a second symbol type (e.g., SBFD symbol). PDSCHs associated with the first symbol type may be jointly operated for one or more first HARQ-ACK bits, and the one or more first HARQ-ACK bits may be transmitted by the UE according to the $K_1$ value. PDSCHs associated with the second symbol type may be jointly operated for one or more second HARQ-ACK bits, and the one or more second HARQ-ACK bits may be transmitted by the UE according to the $K_1$ value.

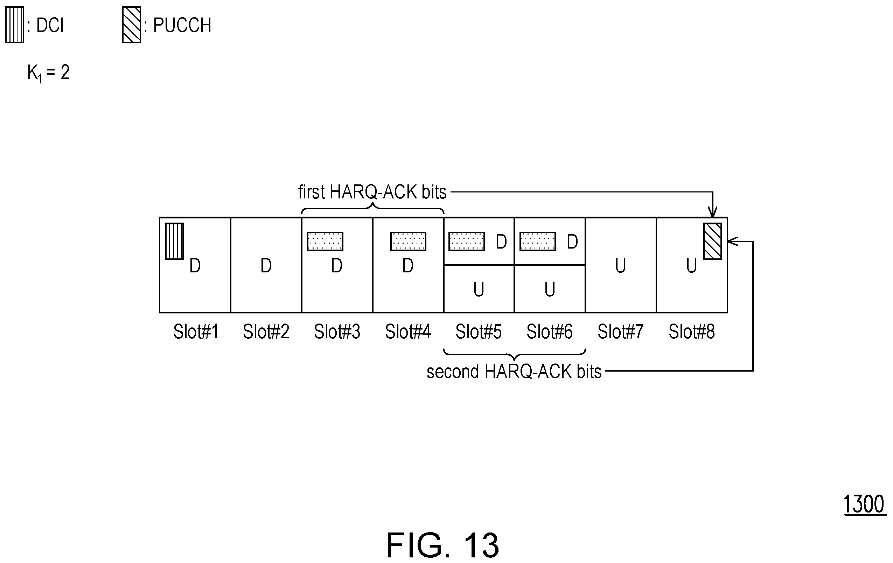

FIG. 13 illustrates a schematic diagram 1300 of HARQ feedback for multi-PDSCHs reception according to one embodiment of the present disclosure. Assume that four PDSCHs are scheduled by a single DCI, and $K_1$ = 2. Two PDSCHs are allocated in slot#3 and slot#4 associated with the non-SBFD symbols. The other two PDSCHs are allocated in slot#5 and slot#6 associated with the SBFD symbols. Since some PDSCH (e.g., PDSCHs in slot#3 and slot#4) correspond to a symbol type (e.g., non-SBFD symbol type), one or more first HARQ-ACK information bits corresponding to those PDSCHs may be jointly considered to create one or more first HARQ-ACK bits. The one or more first HARQ-ACK bits may be transmitted in a slot (e.g., slot#8) according to $K_1$, where $K_1$ ($K_1$ = 2) represents the slot offset between the slot (e.g., slot#6) of the last PDSCH scheduled by the DCI and the slot (e.g., slot#8) carrying the HARQ-ACK information corresponding to the scheduled PDSCHs. Since some PDSCH (e.g., PDSCHs in slot#5 and slot#6) correspond to the other symbol type (e.g., SBFD symbol type), one or more second HARQ-ACK information bits corresponding to those PDSCHs may be jointly considered to create one or more second HARQ-ACK bits. The one or more second HARQ-ACK bits may be transmitted in a slot (e.g., slot#8) according to $K_1$.

In one embodiment, multiple HARQ-ACK bits may be allocated for an occasion for a candidate PDSCH reception. A UE may be configured with a reception behavior associated with multiple symbol types. For example, a UE may be configured with *SBFD-ConfigurationCommon* (e.g., SBFD operation). A UE may be configured with a type-1 HARQ-ACK codebook. For an occasion for the candidate PDSCH reception determined by the type-1 HARQ-ACK codebook, the UE may create more than one bit (e.g., 2 bits) for the occasion.

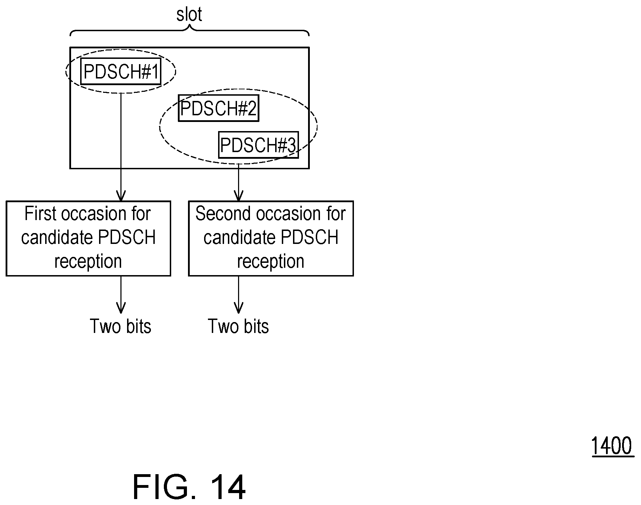

FIG. 14 illustrates a schematic diagram 1400 of HARQ-ACK bits allocation according to one embodiment of the present disclosure. Assume that a UE is configured with a TDRA table, and the PDSCH time resources derived by at least one row of the TDRA table may across two symbol types. The UE may allocate two bits for a first occasion for the candidate PDSCH reception corresponding to PDSCH#1 if the corresponding time resource of the candidate PDSCH reception across two symbol types. The UE may allocate two bits for a second occasion for the candidate PDSCH reception corresponding to PDSCH#2 and #3 if the corresponding time resource of the candidate PDSCH reception across two symbol types.

In one embodiment, a UE may be scheduled with multiple PDSCHs reception by a single DCI, and the UE may be configured with type-1 HARQ-ACK codebook for the multiple PDSCHs. Some PDSCHs of the multiple PDSCHs may be associated with a first symbol type (e.g., non-SBFD symbol), and the other PDSCHs of the multiple PDSCHs may be associated with a second symbol type (e.g., SBFD symbol). The UE may create 2 HARQ-ACK bits for the multiple PDSCHs. The first HARQ-ACK bit may be determined by a binary AND operation, and the binary AND operation may be applied to HARQ-ACK information bits corresponding to all PDSCHs associated with the first symbol type. The second HARQ-ACK bit may be determined by a binary AND operation, and the binary AND operation may be applied to HARQ-ACK information bits corresponding to all PDSCHs associated with the second symbol type.

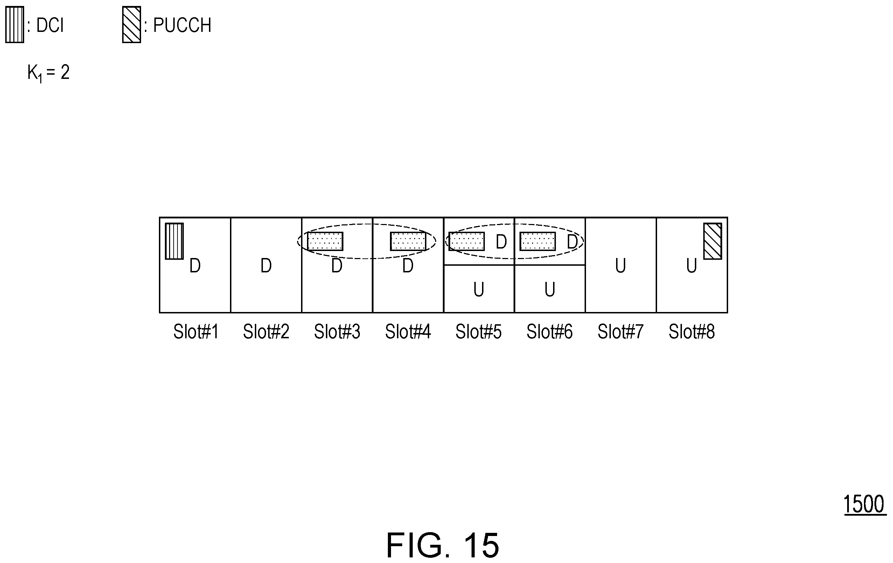

FIG. 15 illustrates a schematic diagram 1500 of HARQ feedback for multi-PDSCHs reception according to one embodiment of the present disclosure. Assume that multiple PDSCHs (e.g., four PDSCHs) are scheduled by a single DCI, the four PDSCH across two symbol types (e.g., non-SBFD symbol and SBFD symbol), and $K_1$ = 2. Some PDSCHs (e.g., two PDSCHs) are allocated in slots (e.g., slot#3 and slot#4) associated with the non-SBFD symbols. The other PDSCHs (e.g., two PDSCHs) are allocated in slots (e.g., slot#5 and slot#6) associated with the SBFD symbols. Since some PDSCHs (e.g., PDSCHs in slot#3 and slot#4) correspond to a symbol type (e.g., non-SBFD symbol type), a binary AND operation may be applied to HARQ-ACK information bits corresponding to those PDSCHs to create a first HARQ-ACK bit. The first HARQ-ACK bit may be transmitted in a slot (e.g., slot#8) according to $K_1$, where $K_1$ ($K_1$ = 2) represents the slot offset between the slot (e.g., slot#6) of the last PDSCH scheduled by the DCI and the slot (e.g., slot#8) carrying the HARQ-ACK information corresponding to the scheduled PDSCHs. Since some PDSCHs (e.g., PDSCHs in slot#5 and slot#6) correspond to the other symbol type (e.g., SBFD symbol type), a binary AND operation may be applied to HARQ-ACK information bits corresponding to those PDSCHs to create a second HARQ-ACK bit. The second HARQ-ACK bit may be transmitted in a slot (e.g., slot#8) according to $K_1$.

If the result of the first HARQ-ACK bit is ACK, it means that the UE decodes PDSCHs in slot#3 and slot#4 successfully. If the result of the first HARQ-ACK bit is NACK, it means that the UE decodes at least one PDSCH in slot#3 and slot#4 unsuccessfully. If the result of the second HARQ-ACK bit is ACK, it means that the UE decodes PDSCHs in slot#5 and slot#6 successfully. If the result of the second HARQ-ACK bit is NACK, it means that the UE decodes at least one PDSCH in slot#5 and slot#6 unsuccessfully. If there are no PDSCH being associated with a symbol type (e.g., non-SBFD symbol type), the UE may set the first HARQ-ACK bit as a NACK. If there are no PDSCH being associated with the other symbol type (e.g., SBFD symbol type), the UE may set the second HARQ-ACK bit as a NACK.

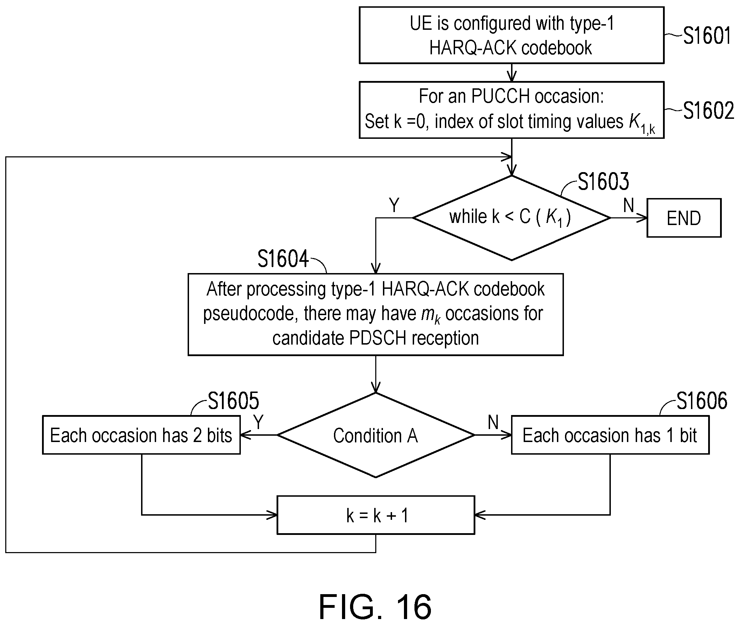

FIG. 16 illustrates s flowchart of pseudo code of bit allocation for occasions according to one embodiment of the present disclosure. In step S 1601, the UE may be configured with type-1 HARQ-ACK codebook.

In step S1602, for an PUCCH occasion, the UE may set $C(K_1)$ to the cardinality of set $K_1$ and set k = 0, where k represents an index of a slot timing value $K_{1,k}$ in set $K_1$.

In step S1603, the UE may determine whether $k < C(K_1)$. If $k < C(K_1)$, the UE may execute step S1604. If $k \geq C(K_1)$, the UE may end the procedure.

In step S1604, after processing type-1 HARQ-ACK codebook pseudo code (e.g., the pruning procedure as shown in FIG. 6), there may have $m_k$ occasions for the candidate PDSCH reception, where $m_k$ represents the number of occasions for the candidate PDSCH reception, and $m_k$ is corresponded to $k_{1,k}$. The UE may determine whether a condition A is met. If the condition A is met, the UE may execute step S1605. If the condition A is not met, the UE may execute step S1606.

In one embodiment, the UE may determine whether the UE is configured with *SBFD-Configuration-Common* and *pdsch-TimeDomainAllocationListForMultiPDSCH.* If the UE is configured with *SBFD-ConfigurationCommon* and *pdsch-TimeDomainAllocationListForMultiPDSCH,* the UE may determine that the condition A is met. If the UE is not configured with *SBFD-ConfigurationCommon* or *pdsch-TimeDomainAllocationListForMultiPDSCH,* the UE may determine that the condition A is not met.

In step S1605, the UE may allocate 2 bits for each occasion of the $m_k$ occasions. The UE may make $k = k + 1$ and execute step S1603 again.

In step S1606, the UE may allocate 1 bit for each occasion of the $m_k$ occasions. The UE may make $k = k + 1$ and execute step S1603 again.

In one embodiment, a UE may be scheduled with multiple PDSCHs reception by a single DCI and the UE may be configured with type-1 HARQ-ACK codebook for the multiple PDSCHs. The multiple PDSCHs may be associated with one symbol type (e.g., non-SBFD symbol or SBFD symbol). The UE may create 2 HARQ-ACK bits for the multiple PDSCHs, wherein the first HARQ-ACK bit may be determined by a binary AND operation, and the binary AND operation may be applied to the HARQ-ACK information bits corresponding to the multiple PDSCHs. The second HARQ-ACK bit may be determined as a NACK.

In one embodiment, if the UE is configured to be restricted to one symbol type, the UE may determine whether the frequency domain resource of a PDSCH associated with the symbol type is overlapped with a UL resource. If the PDSCH is overlapped (e.g., totally overlapping) with the UL resource, the UE may not receive the PDSCH. If the PDSCH is overlapped (e.g., partially overlapping) with the UL resource, the UE may receive the PDSCH by assuming that physical resource blocks (PRBs) of the PDSCH associated with DL subband are valid only.

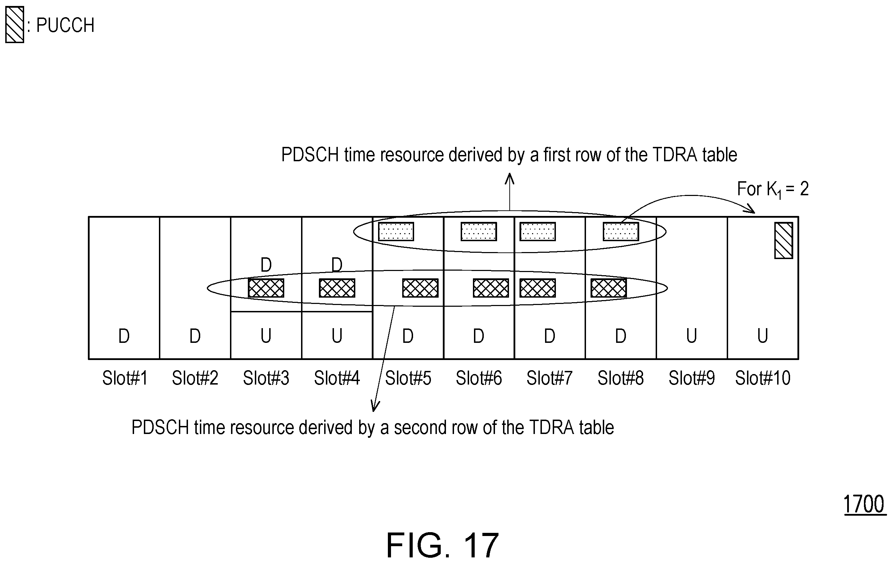

FIG. 17 illustrates a schematic diagram 1700 of multi-PDSCHs across different symbol types according to one embodiment of the present disclosure. Assume that the UE is configured with a TDRA table, wherein the TDRA table includes a first row and a second row. The PDSCH time resources derived by the first row may be associated with one symbol type only (e.g., non-SBFD symbol type). The PDSCH time resources derived by the second row may be associated with multiple symbol types (e.g., two symbol types including non-SBFD symbol type and SBFD symbol type). In other words, The PDSCH time resources derived by the second row may across two symbol types.

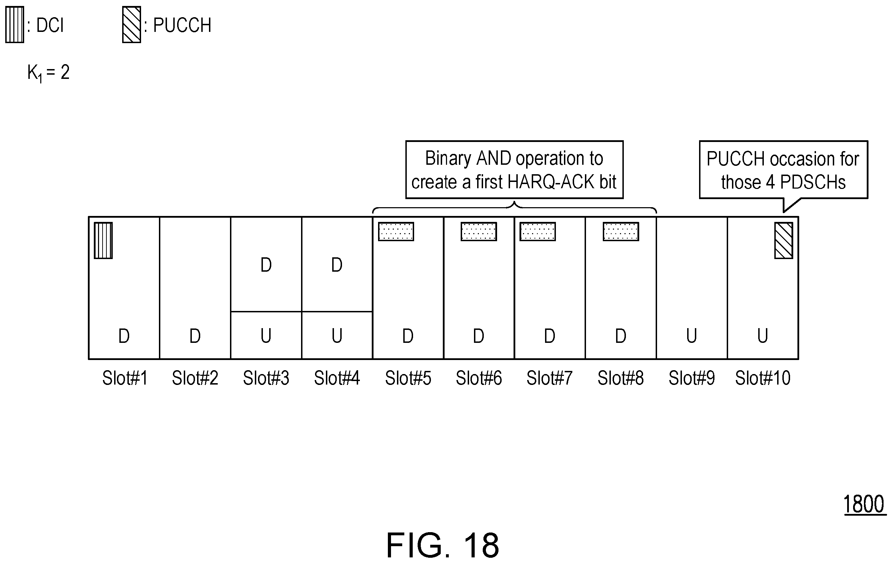

FIG. 18 illustrates a schematic diagram 1800 of generating a HARQ-ACK bit according to one embodiment of the present disclosure. Assume that multiple PDSCHs (e.g., four PDSCHs) scheduled by a DCI are allocated in the slots (e.g., slot#5, #6, #7, and #8) of the same symbol type (e.g., non-SBFD symbol type), a binary AND operation may be applied to the HARQ-ACK information bits corresponding to those four PDSCHs to create the first HARQ-ACK bit. Since no PDSCH is associated with the other symbol type (e.g., SBFD symbol type), the second HARQ-ACK bit may be determined as a NACK. The UE may report the first HARQ-ACK bit and the second HARQ-ACK bit on the PUCCH occasion for those four PDSCHs.

In one embodiment, a UE may be scheduled with N PDSCHs reception by a single DCI and the UE may be configured with type-1 HARQ-ACK codebook for the N PDSCHs, where N is a positive integer. The N PDSCHs may be associated with one symbol type (e.g., non-SBFD symbol or SBFD symbol). The UE may create 2 HARQ-ACK bits for the N PDSCHs. The first HARQ-ACK bit may be determined by a binary AND operation, and the binary AND operation may be applied to one or more HARQ-ACK information bits corresponding to some PDSCHs of the N PDSCHs. The second HARQ-ACK bit may be determined by a binary AND operation, and the binary AND operation may be applied to HARQ-ACK information bits corresponding to the other PDSCHs of the N PDSCHs.

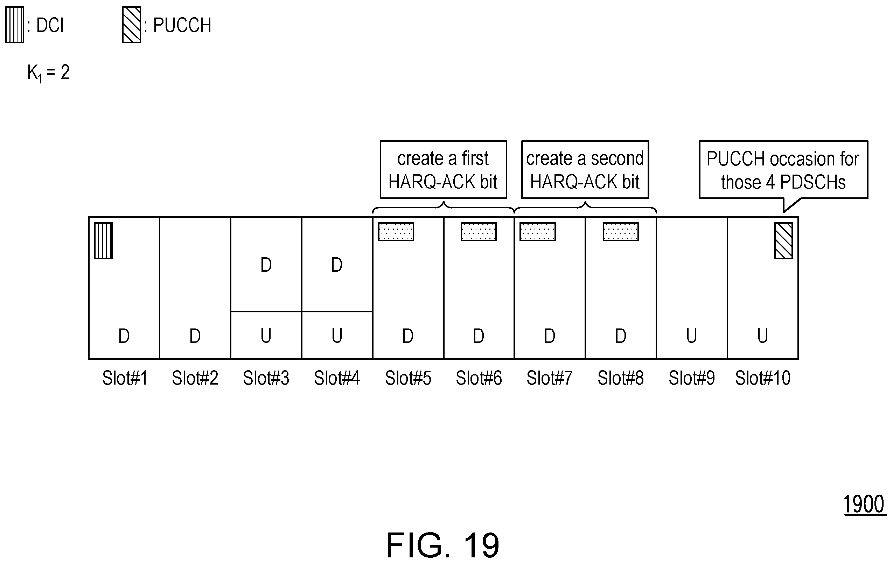

FIG. 19 illustrates a schematic diagram 1900 of generating HARQ-ACK bits based on Floor operation according to one embodiment of the present disclosure. Assume that N (N is a positive integer) PDSCHs (e.g., four PDSCHs) scheduled by a DCI are allocated in the slots (e.g., slot#5, #6, #7, and #8) of different symbol types (e.g., non-SBFD and SBFD symbol type), separate binary AND operations may be applied to the HARQ-ACK information bits corresponding to those four PDSCHs to create a first HARQ-ACK bit and a second HARQ-ACK bit. A binary AND operation may be applied to HARQ-ACK information bits corresponding to first $\lfloor N/2 \rfloor$ or $(\lfloor N/2 \rfloor + 1)$ PDSCHs to create a first HARQ-ACK bit. A binary AND operation may be applied to HARQ-ACK information bits corresponding to the remain PDSCHs to create a second HARQ-ACK bit. The UE may report the first HARQ-ACK bit and the second HARQ-ACK bit on the PUCCH occasion for those N PDSCHs.

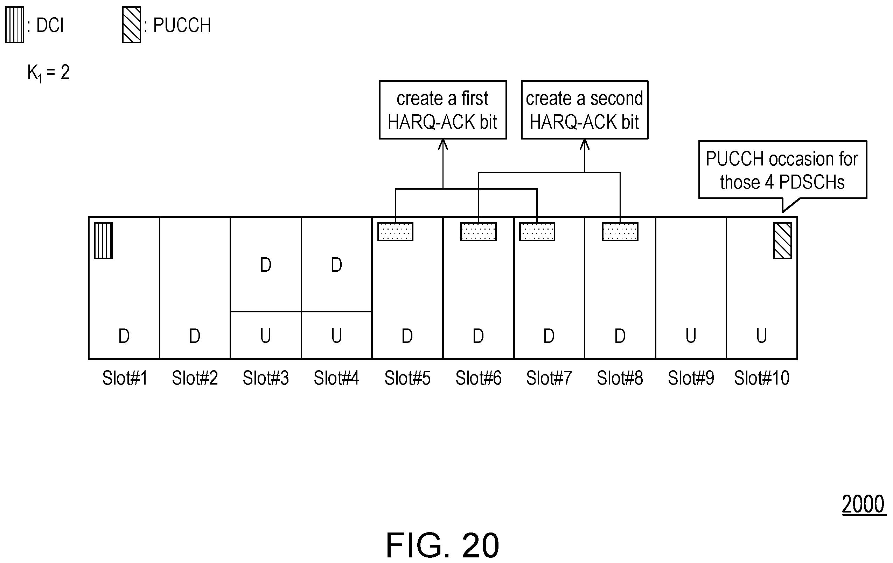

FIG. 20 illustrates a schematic diagram 2000 of generating HARQ-ACK bits based on Mod operation according to one embodiment of the present disclosure. Assume that N (N is a positive integer) PDSCHs (e.g., four PDSCHs) scheduled by a DCI are allocated in the slots (e.g., slot#5, #6, #7, and #8) of the same symbol type (e.g., non-SBFD), N PDSCHs are indexed from n = 0 to n = (N-1), wherein index n = 0 may be associated with the first scheduled PDSCH and index n= N-1 may be associated with the last scheduled PDSCH. A binary AND operation may be applied to HARQ-ACK information bits corresponding to PDSCHs satisfying Mod (n,2) = 0 to create a first HARQ-ACK bit. A binary AND operation may be applied to HARQ-ACK information bits corresponding to PDSCHs satisfying Mod (n,2) = 1 to create a second HARQ-ACK bit. For example, since Mod (1, 2) =1 and Mod (3, 2) = 1, a binary AND operation may be applied to HARQ-ACK information bits corresponding to the first and the third PDSCHs to create a first HARQ-ACK bit. Since Mod (2, 2) = 0 and Mod (4, 2) = 0, a binary AND operation may be applied to HARQ-ACK information bits corresponding to the second and the fourth PDSCHs to create a second HARQ-ACK bit. The UE may report the first HARQ-ACK bit and the second HARQ-ACK bit on the PUCCH occasion for those N PDSCHs.

In one embodiment, for a PUCCH occasion and a $K_1$ value, if PDSCH time resources derived by all rows of a TDRA table belong to one symbol type only (e.g., the reception behavior of the UE is configured to be restricted to one symbol type only, the UE may not receive the PDSCHs corresponding to the other symbol type), then for an occasion for candidate PDSCH reception, the UE may create one bit for the occasion.

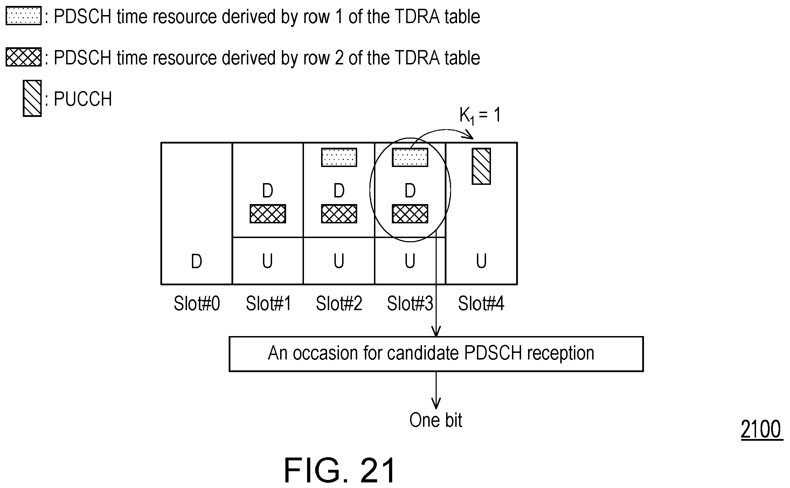

FIG. 21 illustrates a schematic diagram 2100 of generating one HARQ-ACK bit according to one embodiment of the present disclosure. Assume that the UE is configured with a TDRA table. One or more PDSCH time resources may be derived by row 1 of the TDRA table, and one or more PDSCH time resources may be derived by row 2 of the TDRA table, as shown in FIG. 21. Since the PDSCHs derived by all rows belong to one symbol type (e.g., SBFD symbol type) only, the UE may create one bit for an occasion for the candidate PDSCH reception. The UE may report the one bit (e.g., the HARQ-ACK bit) on the PUCCH occasion for those PDSCHs derived from the TDRA table.

In one embodiment, for a PUCCH occasion and a $K_1$ value, if PDSCH time resources derived by at least one row of a TDRA table across two symbol types, then for an occasion for candidate PDSCH reception, the UE may create two bits for the occasion.

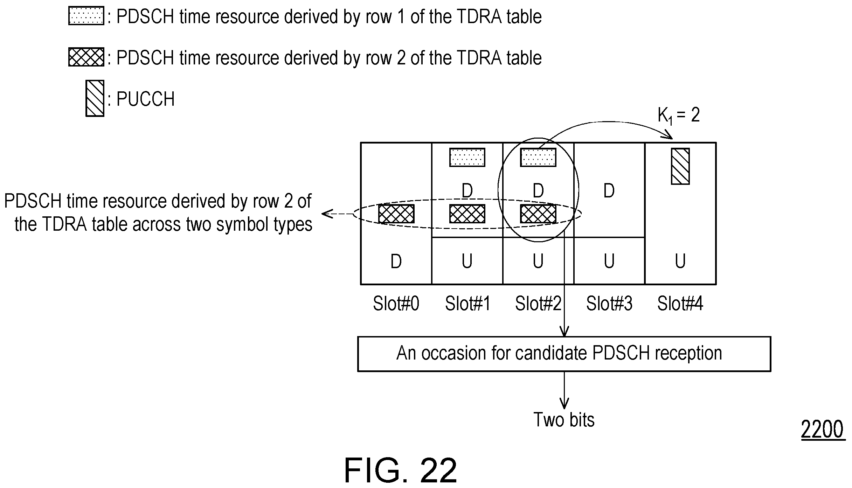

FIG. 22 illustrates a schematic diagram 2200 of generating two HARQ-ACK bits according to one embodiment of the present disclosure. Assume that the UE is configured with a TDRA table. One or more PDSCH time resources may be derived by row 1 of the TDRA table, and one or more PDSCH time resources may be derived by row 2 of the TDRA table, as shown in FIG. 22. Since the PDSCHs derived by row 2 across two symbol types, the UE may create two bits for an occasion for the candidate PDSCH reception. The UE may report the two bits (e.g., the HARQ-ACK bits) on the PUCCH occasion for those PDSCHs derived from the TDRA table.

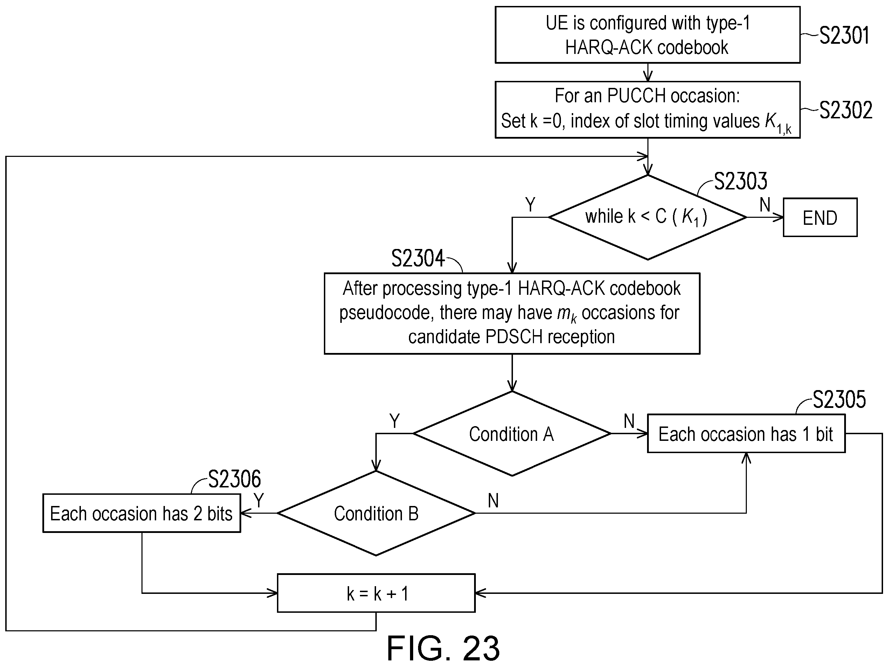

FIG. 23 illustrates s flowchart of pseudo code of bit allocation for occasions according to one embodiment of the present disclosure. In step S2301, the UE may be configured with type-1 HARQ-ACK codebook.

In step S2302, for an PUCCH occasion, the UE may set $C(K_1)$ to the cardinality of set $K_1$ and set k = 0, where k represents an index of a slot timing value $K_{1,k}$ in set $K_1$.

In step S2303, the UE may determine whether $k < C(K_1)$. If $k < C(K_1)$, the UE may execute step S2304. If $k \geq C(K_1)$, the UE may end the procedure.

In step S2304, after processing type-1 HARQ-ACK codebook pseudo code (e.g., the pruning procedure as shown in FIG. 6), there may have $m_k$ occasions for the candidate PDSCH reception, where $m_k$ represents the number of occasions for the candidate PDSCH reception, and $m_k$ is corresponded to $K_{1,k}$. The UE may determine whether a condition A is met. If the condition A is met, the UE may further determine whether a condition B is met. If the condition A is not met, the UE may execute step S2305.

In one embodiment, the UE may determine whether the UE is configured with *SBFD-Configuration-Common* and *pdsch-TimeDomainAllocationListForMultiPDSCH*. If the UE is configured with *SBFD-ConfigurationCommon* and *pdsch-TimeDomainAllocationListForMultiPDSCH,* the UE may determine that the condition A is met. If the UE is not configured with *SBFD-ConfigurationCommon* or *pdsch-TimeDomainAllocationListForMultiPDSCH,* the UE may determine that the condition A is not met.

In step S2305, the UE may allocate 1 bit for each occasion of the $m_k$ occasions. The UE may make k = k + 1 and execute step S2303 again.

In one embodiment, the UE may determine whether PDSCH time resources derived by at least one row of the TDRA table across two symbol types. If the PDSCH time resources across two symbol types, the UE may determine that the condition B is met. If the PDSCH time resources belong to one symbol type, the UE may determine that the condition B is no met.

In step S2306, the UE may allocate 2 bits for each occasion of the $m_k$ occasions. The UE may make k = k + 1 and execute step S2303 again.

In one embodiment, for an occasion for the candidate PDSCH reception, there may have at least one PDSCH associated with the occasion. If at least one PDSCH time resource derived by at least one row of a TDRA table belong to one symbol type only, the UE may create one bit for the occasion.

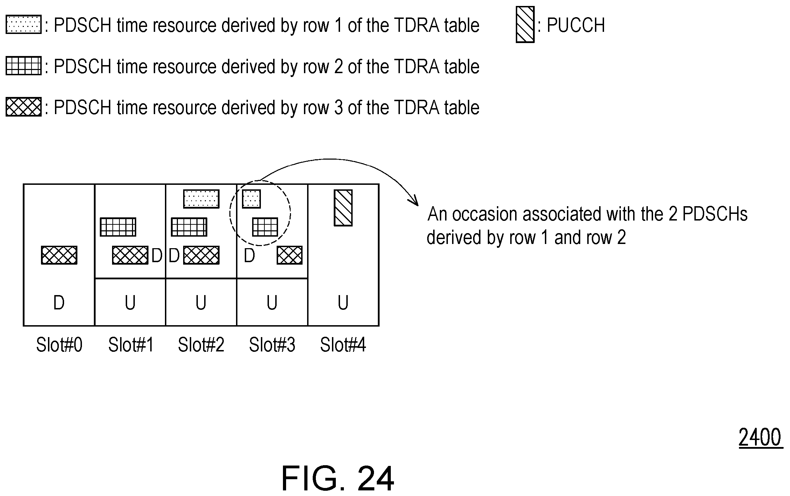

FIG. 24 illustrates a schematic diagram 2400 of generating one HARQ-ACK bit according to one embodiment of the present disclosure. Assume that the UE is configured with a TDRA table, wherein at least one PDSCH time resource is derived by row 1 of the TDRA table, at least one PDSCH time resource is derived by row 2 of the TDRA table, and at least one PDSCH time resource is derived by row 3 of the TDRA table. For an occasion associated with 2 PDSCHs corresponding to row 1 and row 2, the UE may create one bit for the occasion since PDSCH time resources derived by row 1 and row 2 belong to one symbol type (e.g., SBFD symbol type) only.

In one embodiment, for an occasion for the candidate PDSCH reception, there may have at least one PDSCH associated with the occasion. If at least one PDSCH time resource derived by at least one row of a TDRA table across different symbol types, the UE may create two bits for the occasion.

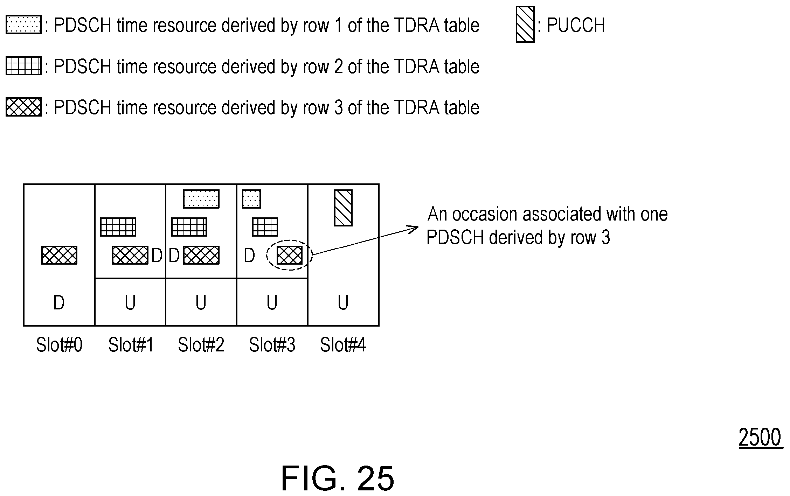

FIG. 25 illustrates a schematic diagram 2500 of generating one HARQ-ACK bit according to one embodiment of the present disclosure. Assume that the UE is configured with a TDRA table, wherein at least one PDSCH time resource is derived by row 1 of the TDRA table, at least one PDSCH time resource is derived by row 2 of the TDRA table, and at least one PDSCH time resource is derived by row 3 of the TDRA table. For an occasion associated with one PDSCH corresponding to row 3, the UE may create two bits for the occasion since PDSCH time resources derived by row 3 across different symbol types (e.g., non-SBFD and SBFD symbol type).

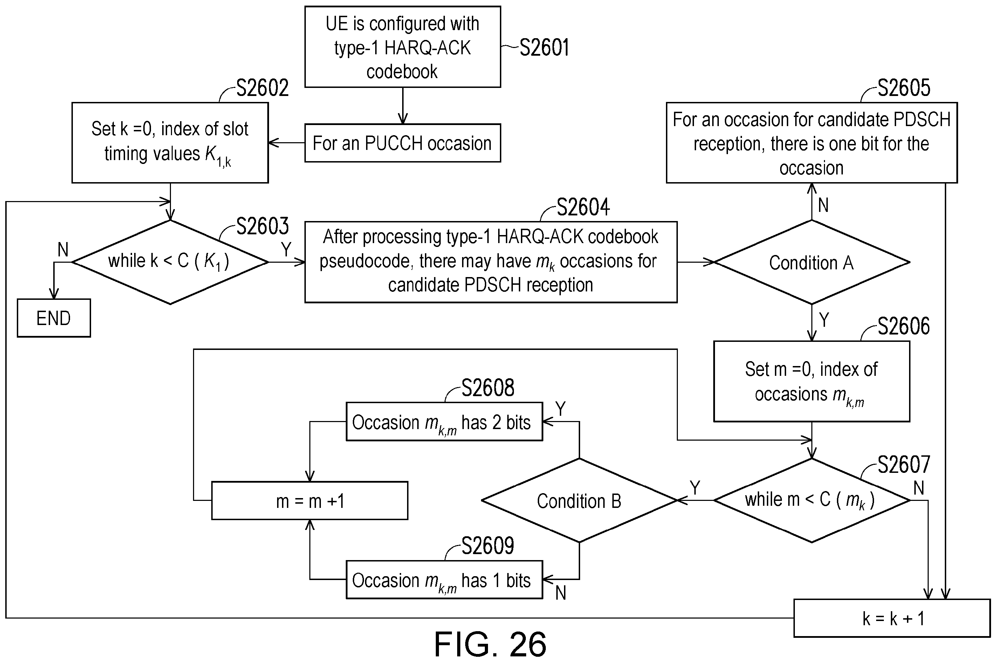

FIG. 26 illustrates s flowchart of pseudo code of bit allocation for occasions according to one embodiment of the present disclosure. In step S2601, the UE may be configured with type-1 HARQ-ACK codebook.

In step S2602, for an PUCCH occasion, the UE may set $C(K_1)$ to the cardinality of set $K_1$ and set k = 0, where k represents an index of a slot timing value $K_{1,k}$ in set $K_1$.

In step S2603, the UE may determine whether $k < C(K_1)$. If $k < C(K_1)$, the UE may execute step S2304. If $k \geq C(K_1)$, the UE may end the procedure.

In step S2604, after processing type-1 HARQ-ACK codebook pseudo code (e.g., the pruning procedure as shown in FIG. 6), there may have $m_k$ occasions for the candidate PDSCH reception, where $m_k$ represents the number of occasions for the candidate PDSCH reception, and $m_k$ is corresponded to $K_{1,k}$. The UE may determine whether a condition A is met. If the condition A is met, the UE may execute step S2606. If the condition A is not met, the UE may execute step S2605.

In one embodiment, the UE may determine whether the UE is configured with *SBFD-Configuration-Common* and *pdsch-TimeDomainAllocationListForMul-*

*tiPDSCH.* If the UE is configured with *SBFD-Configuration-Common* and *pdsch-TimeDomainAllocationListForMultiPDSCH,* the UE may determine that the condition A is met. If the UE is not configured with *SBFD-ConfigurationCommon* or *pdsch-TimeDomainAllocationListForMultiPDSCH,* the UE may determine that the condition A is not met.

In step S2605, for an occasion for the candidate PDSCH reception, the UE may create one bit for the occasion. The UE may make k = k + 1 and execute step S2603 again.

In step S2606, the UE may set $C(m_k)$ to the cardinality of $m_k$ and set m = 0, where m represents an index of an occasion $m_{k,m}$, and the occasion $m_{k,m}$ represents the PUCCH occasion for the PDSCHs corresponding to $K_{1,k}$ and the m-th row of the TDRA table. For a slot timing value $K_{1,k}$, there may have $m_k$ occasions for the candidate PDSCH reception.

In step S2607, the UE may determine whether $m < C(m_k)$. If $m < C(m_k)$, the UE may further determine whether a condition B is met. If $m \geq C(m_k)$, the UE may make k = k + 1 and execute step S2603 again.

If the condition B is met, the UE may execute step S2608. If the condition B is not met, the UE may execute step S2609.

In one embodiment, the UE may determine whether PDSCH time resources derived by at least one row of the TDRA table across two symbol types, wherein the at least one row corresponds to one or more PDSCHs associated with the occasion $m_{k,m}$. If the PDSCH time resources across two symbol types, the UE may determine that the condition B is met. If the PDSCH time resources belong to one symbol type, the UE may determine that the condition B is no met.

In step S2608, the UE may create 2 bits for the occasion $m_{k,m}$. The UE may make m = m + 1 and execute step S2603 again.

In step S2609, the UE may create 1 bit for the occasion $m_{k,m}$. The UE may make m = m + 1 and execute step S2603 again.

In one embodiment, a UE may be configured with *SBFD-ConfigurationCommon* (e.g., SBFD operation), *pdsch-TimeDomainAllocationListForMultiPDSCH,* and type-1 HARQ-ACK codebook. The UE may determine a first $K_1$ set and a second $K_1$ set, or a first TDRA table and a second TDRA table configured to the UE.

The first $K_1$ set may be associated with at least one first DCI format (e.g., not associated with *pdsch-TimeDomainAllocationListForMultiPDSCH*) and the second $K_1$ set may be associated with at least one second DCI format (e.g., associated with *pdsch-TimeDomainAllocationListForMultiPDSCH*).

The first TDRA table may be associated with at least one first DCI format (e.g., not associated with *pdsch-TimeDomainAllocationListForMultiPDSCH*) and the second TDRA table may be associated with at least one second DCI format (e.g., associated with *pdsch-TimeDomainAllocationListForMultiPDSCH).*

The UE may use the first $K_1$ set and the first TDRA table to obtain a first type-1 HARQ-ACK sub-codebook. The UE may use the second $K_1$ set and the second TDRA table to obtain a second type-1 HARQ-ACK sub-codebook. The UE may concatenate the first and the second Type-1 HARQ-ACK sub-codebooks to obtain the Type-1 HARQ-ACK codebook.

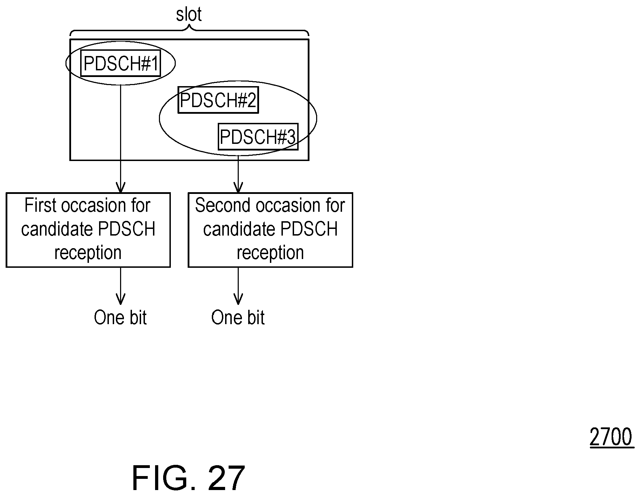

FIG. 27 illustrates a schematic diagram 2700 of HARQ-ACK bits allocation according to one embodiment of the present disclosure. Assume that a UE is configured with a first TDRA table, wherein each row of the first TDRA table may include only one entry. That is, PDSCH reception corresponding to PDSCH#1, #2, or #3 may be associated with only one PDSCH. For the first sub-codebook, (e.g., the sub-codebook not associated with *pdsch-TimeDomainAllocationListForMultiPDSCH*), there may have one bit for an occasion for the candidate PDSCH reception. For example, the UE may allocate one bit for a first occasion for the candidate PDSCH reception corresponding to PDSCH#1, and the UE may allocate one bit for a second occasion for the candidate PDSCH reception corresponding to PDSCH#2 and #3.

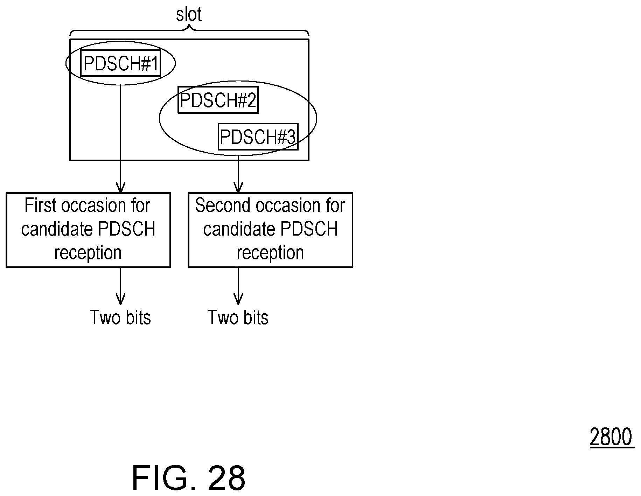

FIG. 28 illustrates a schematic diagram 2800 of HARQ-ACK bits allocation according to one embodiment of the present disclosure. Assume that a UE is configured with a second TDRA table, wherein at least one row of the second TDRA table may include more than one entry. That is, the multi-PDSCHs reception corresponding to PDSCH#1, #2, or #3 may be associated with more than one PDSCHs. For the second sub-codebook, (e.g., the sub-codebook associated with *pdsch-TimeDomainAllocationListForMultiPDSCH*), there may have more than one bit (e.g., two bits) for an occasion for the candidate PDSCH reception. For example, the UE may allocate two bits for a first occasion for the candidate PDSCH reception corresponding to PDSCH#1, and the UE may allocate two bits for a second occasion for the candidate PDSCH reception corresponding to PDSCH#2 and #3.

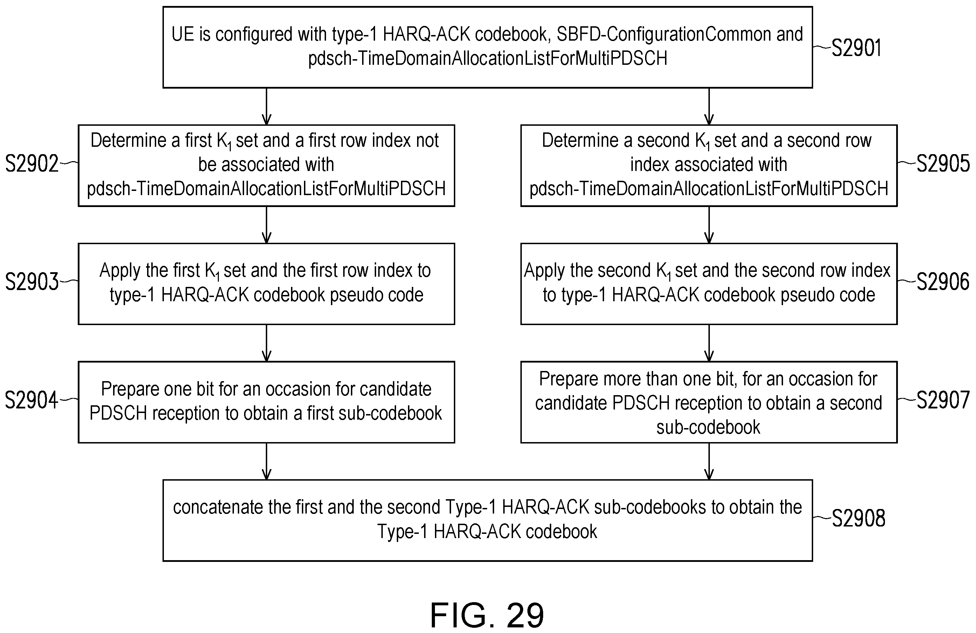

FIG. 29 illustrates a flowchart of obtaining a type-1 HARQ-ACK codebook according to one embodiment of the present disclosure. In step S2901, UE may be configured with type-1 HARQ-ACK codebook, *SBFD-ConfigurationCommon* and *pdsch-TimeDomainAllocationListForMultiPDSCH*.

In step S2902, the UE may determine a first $K_1$ set and a first TDRA table not associated with *pdsch-TimeDomainAllocationListForMultiPDSCH*.

In step S2903, the UE may apply the first $K_1$ set and the first TDRA table to type-1 HARQ-ACK codebook pseudo code.

In step S2904, the UE may prepare one bit for an occasion for the candidate PDSCH reception to obtain a first sub-codebook. For example, the UE may execute the type-1 HARQ-ACK codebook pseudo code to generate the first sub-codebook.

In step S2905, the UE may determine a second $K_1$ set and a second TDRA table associated with *pdsch-TimeDomainAllocationListForMultiPDSCH*.

In step S2906, the UE may apply the second $K_1$ set and the second TDRA table to type-1 HARQ-ACK codebook pseudo code.

In step S2907, the UE may prepare more than one bit (e.g., two bits) for an occasion for the candidate PDSCH reception to obtain a second sub-codebook. For example, the UE may execute the type-1 HARQ-ACK codebook pseudo code to generate the second sub-codebook.

In step S2908, the UE may concatenate the first and the second Type-1 HARQ-ACK sub-codebooks to obtain the Type-1 HARQ-ACK codebook.

In one embodiment, for the second sub-codebook (e.g., sub-codebook associated with *pdsch-TimeDomainAllocationListForMultiPDSCH*), for an occasion for the candidate PDSCH reception, the UE may follow embodiments mentioned above (e.g., FIG. 21) to create one bit for the occasion.

In one embodiment, for the second sub-codebook (e.g., sub-codebook associated with *pdsch-TimeDomainAllocationListForMultiPDSCH*), for an occasion for the candidate PDSCH reception, the UE may follow embodiments mentioned above (e.g., FIG. 22) to create two bits for the occasion.

In one embodiment, for the second sub-codebook (e.g., sub-codebook associated with *pdsch-TimeDomainAllocationListForMultiPDSCH*), for an occasion for the candidate PDSCH reception, the UE may follow embodiments mentioned above (e.g., FIG. 24) to create one bit for the occasion.

In one embodiment, for the second sub-codebook (e.g., sub-codebook associated with *pdsch-TimeDomainAllocationListForMultiPDSCH*), for an occasion for the candidate PDSCH reception, the UE may follow embodiments mentioned above (e.g., FIG. 25) to create two bits for the occasion.

In one embodiment, a UE may be scheduled with multiple PDSCHs reception by a single DCI and the UE may be configured with type-2 HARQ-ACK codebook with the number of bundling groups (*numberOfHARQ-ACK-BundlingGroups*) M for the multiple PDSCHs, where M is a positive integer. Some PDSCHs of the multiple PDSCHs may be associated with a first symbol type (e.g., non-SBFD symbol), and the other PDSCHs of the multiple PDSCHs may be associated with a second symbol type (e.g., SBFD symbol). The HARQ-ACK information bits corresponding to PDSCHs associated with the first symbol type may be allocated to a set of groups of *numberOfHARQ-ACK-BundlingGroups* M. The HARQ-ACK information bits corresponding to PDSCHs associated with the second symbol type may be allocated to the other groups of *numberOfHARQ-ACK-BundlingGroups* M.

For example, assume that one bit is allocated to one group, and M bits are allocated to M groups respectively. A part of M bits of the HARQ feedback may be used for one or more PDSCHs associated with the first symbol type of the multi-PDSCHs reception. The remaining part of M bits (e.g., (M-N) bits) of the HARQ feedback may be used for one or more PDSCHs associated with the second symbol type of the multi-PDSCHs reception.

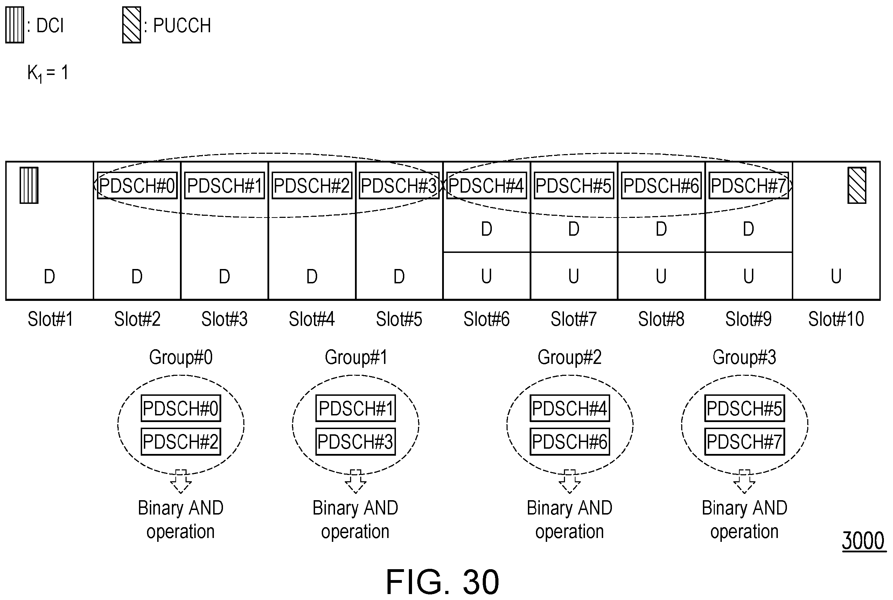

FIG. 30 illustrates a schematic diagram 3000 of PDSCHs grouping according to one embodiment of the present disclosure. Assume that *numberOfHARQ-ACK-BundlingGroups* M = 4, group#0, group#1, group#2, and group#3 are created for a type-2 HARQ-ACK codebook, group#0 and group#1 may be specific for PDSCHs associated with the non-SBFD symbols, and group#2 and group#3 may be specific for PDSCHs associated with the SBFD symbols. 8 PDSCHs (e.g., PDSCH#0 to PDSCH#7) may be scheduled by a DCI. Since PDSCH#0 to PDSCH#3 are associated with the non-SBFD symbol type, the HARQ-ACK information bits corresponding to those PDSCHs may be allocated to group#0 or group#1. Since PDSCH#4 to PDSCH#7 are associated with the SBFD symbol type, the HARQ-ACK information bits corresponding to those PDSCHs may be allocated to group#2 or group#3.

The UE may perform a binary AND operation on a group to obtain one or more HARQ-ACK information bits for the group. For example, PDSCH#0 and PDSCH#2 may be allocated to group#0. The UE may perform a binary AND operation on group#0 to obtain a one or more HARQ-ACK information bits for group#0. PDSCH#1 and PDSCH#3 may be allocated to group#1. The UE may perform a binary AND operation on group#1 to obtain a one or more HARQ-ACK information bits for group#1. PDSCH#4 and PDSCH#6 may be allocated to group#2. The UE may perform a binary AND operation on group#2 to obtain a one or more HARQ-ACK information bits for group#2. PDSCH#5 and PDSCH#7 may be allocated to group#3. The UE may perform a binary AND operation on group#3 to obtain a one or more HARQ-ACK information bits for group#3.

In one embodiment, a UE may be scheduled with multiple PDSCHs reception by a single DCI and the UE may be configured with type-2 HARQ-ACK codebook with the number of bunding groups (*numberOfHARQ-ACK-BundlingGroups*) M and a value N for the multiple PDSCHs, where M and N are positive integer. Some PDSCHs of the multiple PDSCHs may be associated with a first symbol type (e.g., non-SBFD symbol), and the other PDSCHs of the multiple PDSCHs may be associated with a second symbol type (e.g., SBFD symbol).

The HARQ-ACK information bits corresponding to PDSCHs associated with the first symbol type may be allocated to the first N groups of *numberOfHARQ-ACK-BundlingGroups* M. The HARQ-ACK information bits corresponding to PDSCHs associated with the second symbol type may be allocated to the rest groups of *numberOfHARQ-ACK-BundlingGroups* M.

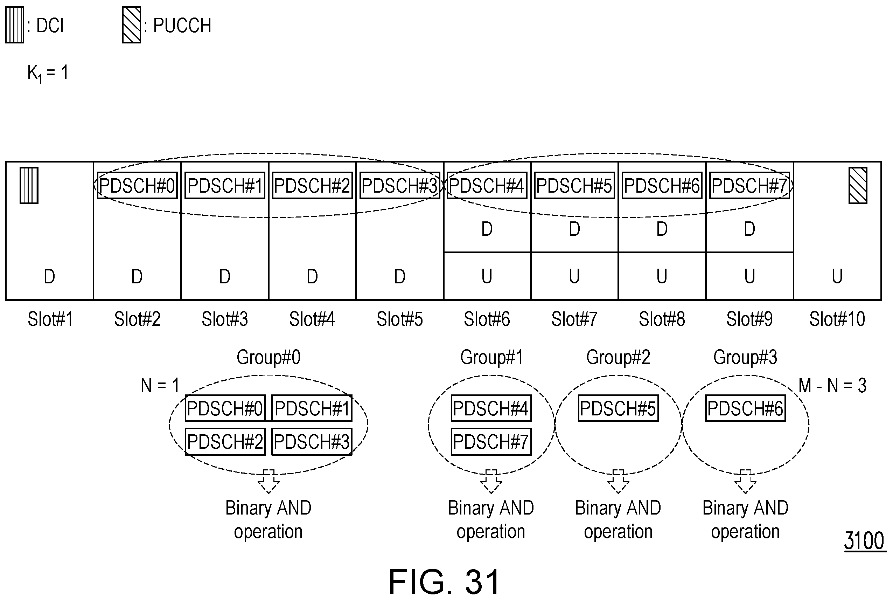

FIG. 31 illustrates a schematic diagram 3100 of PDSCHs grouping according to one embodiment of the present disclosure. Assume that *numberOfHARQ-ACK-BundlingGroups* M = 4, group#0, group#1, group#2, and group#3 are created for a type-2 HARQ-ACK codebook, and value N = 1, wherein N groups may be specific for PDSCHs associated with the non-SBFD symbols, and (M-N) groups may be specific for PDSCHs associated with the SBFD symbols. 8 PDSCHs (e.g., PDSCH#0 to PDSCH#7) may be scheduled by a DCI, where PDSCH#0 to PDSCH#3 are allocated to group#0, PDSCH#4 and PDSCH#7 are allocated to group#1, PDSCH#5 is allocated to group#2, and PDSCH#6 is allocated to group#3. Since PDSCH#0 to PDSCH#3 are associated with the non-SBFD symbol type, N = 1 HARQ-ACK information bit corresponding to those PDSCHs may be allocated to group#0. Since PDSCH#4 to PDSCH#7 are associated with the SBFD symbol type, (M-N) = 3 HARQ-ACK information bits corresponding to those PDSCHs may be allocated to group#1, #2, and #3, respectively.

In one embodiment, a UE may be scheduled with multiple PDSCHs reception by a single DCI and the UE may be configured with type-2 HARQ-ACK codebook report with a first *numberOfHARQ-ACK-BundlingGroups* M1 and a second *numberOfHARQ-ACK-BundlingGroups* M2 for the multiple PDSCHs, wherein M1 or M2 is a positive integer. Some PDSCHs of the multiple PDSCHs may be associated with a first symbol type (e.g., non-SBFD symbol), and the other PDSCHs of the multiple PDSCHs may be associated with a second symbol type (e.g., SBFD symbol). The HARQ-ACK information bits (e.g., M1 bits for M1 groups) corresponding to PDSCHs associated with the first symbol type may be allocated to the first *numberOfHARQ-ACK-BundlingGroups* M1 groups. The HARQ-ACK information bits (e.g., M2 bits for M2 groups) corresponding to PDSCHs associated with the second symbol type may be allocated to the second *numberOfHARQ-ACK-BundlingGroups* M2 groups.

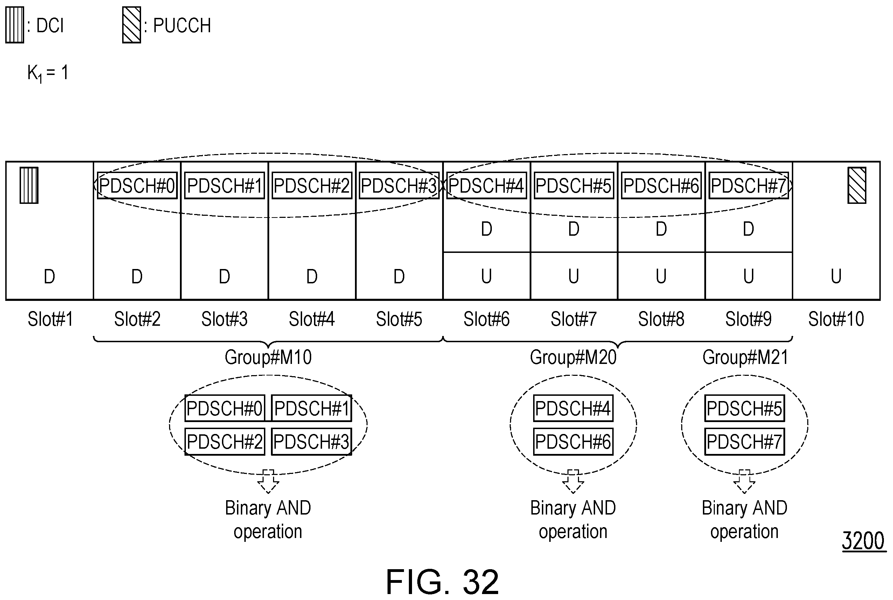

FIG. 32 illustrates a schematic diagram 3200 of PDSCHs grouping according to one embodiment of the present disclosure. Assume that the first *numberOfHARQ-ACK-BundlingGroups* M1 = 1, the second *numberOfHARQ-ACK-BundlingGroups* M2 = 2, group#M10 corresponding to a first symbol type (e.g., non-SBFD symbol) is created for the type-2 HARQ-ACK codebook, and group#M20 and group#M21 corresponding to a second symbol type (e.g., SBFD symbol) are created for the type-2 HARQ-ACK codebook. M1 may be specific for the first symbol type (e.g., non-SBFD symbol), and M2 may be specific for the second symbol type (e.g., SBFD symbol). 8 PDSCHs (e.g., PDSCH#0 to PDSCH#7) may be scheduled by a DCI, where PDSCH#0 to PDSCH#3 are allocated to group#M10, PDSCH#4 and PDSCH#6 are allocated to group#M20, and PDSCH#5 and PDSCH#7 are allocated to group#M21. M1 =1 HARQ-ACK information bit corresponding to the first symbol type may be allocated to group#M10 corresponding to the first symbol type. M2 = 2 HARQ-ACK information bits corresponding to the second symbol type may be allocated to group#M20 and group#M21 corresponding to the second symbol type.

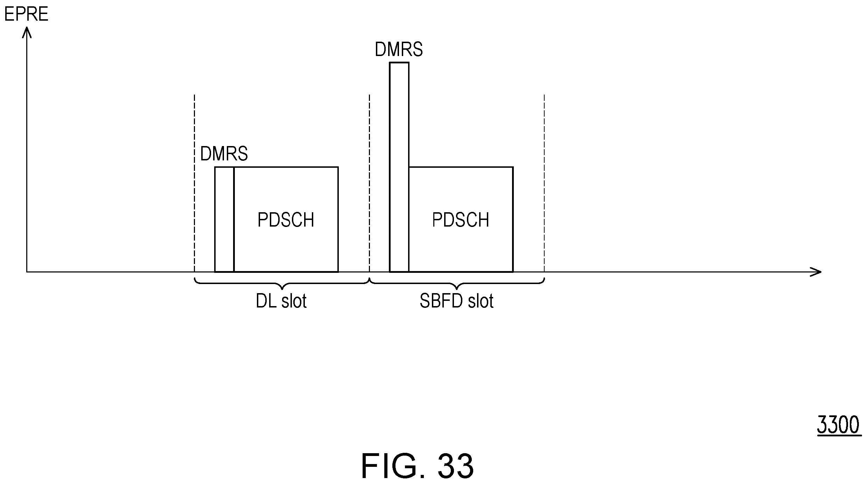

In one embodiment, a UE may be configured with *SBFD-ConfigurationCommon* (e.g., SBFD operation). For a first PDSCH reception associated with a first symbol type (e.g., non-SBFD symbol), the UE may be configured with a first ratio of PDSCH energy per resource element (EPRE) to de-modulation reference signal (DMRS) EPRE. For a second PDSCH reception associated with a second symbol type (e.g., SBFD symbol), the UE may be configured with a second ratio of PDSCH EPRE to DMRS EPRE. FIG. 33 illustrates a schematic diagram 3300 of the ratio of PDSCH EPRE to DMRS EPRE according to one embodiment of the present disclosure. The ratio corresponding to the DL slot (e.g., non-SBFD slot) may be greater than the ratio corresponding to the SBFD slot.

In one embodiment, if a PDSCH among multiple PDSCHs scheduled by a single DCI satisfies at least one of following cases, the UE may not receive the PDSCH. Case 1: the PDSCH collides with one or more UL symbols indicated by *tdd-UL-DL-ConfigurationCommon* or *tdd-UL-DL-ConfigurationDedicated;* or Case 2: the PDSCH overlaps (e.g., partially overlap or totally overlap) with UL subband of one or more SBFD symbols indicated by *SBFD-ConfigurationCommon.* More specifically for case 2, for example, if the PDSCH partially overlaps with UL subband, the UE may receive the PDSCH by assuming that only PRBs of the PDSCH not associated with the UL subband are valid. On the other hand, if the PDSCH totally overlaps with UL subband, the UE may not receive the PDSCH.

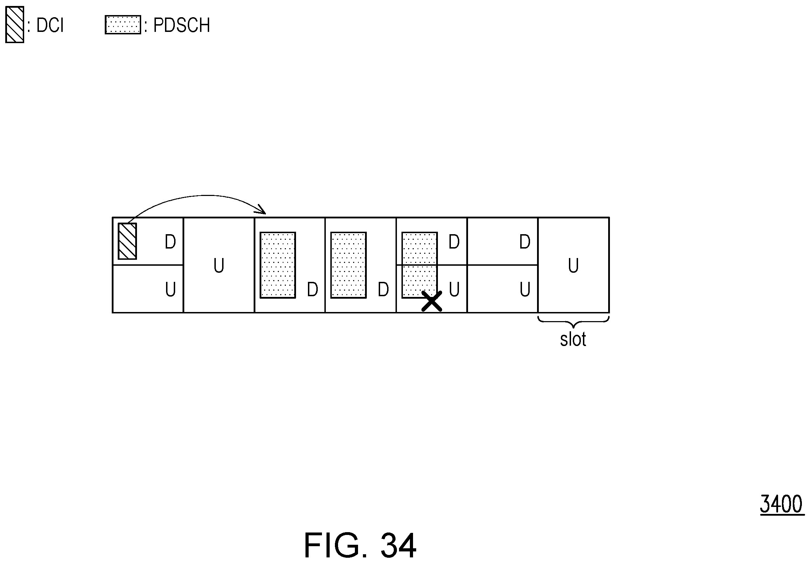

FIG. 34 illustrates a schematic diagram 3400 of Case 2 according to one embodiment of the present disclosure. 3 PDSCHs may be scheduled by a single DCI. However, the last PDSCH is collided (e.g., partially overlap) with a UL subband indicated by *SBFD-ConfigurationCommon.* Accordingly, the UE may receive the last PDSCH and assuming that the PRBs of the PDSCH associated with the UL subband is invalid, and PRBs associated with the PDSCH (e.g., the PDSCH not associated with the UL subband) is valid.

In one embodiment, when the UE is scheduled with multiple PDSCHs by a DCI, and the multiple PDSCHs across the SBFD symbol and the non-SBFD symbol, the HARQ process identity (ID) indicated by the DCI may apply to the first PDSCH not overlapping with a UL symbol, wherein the UL symbol may be indicated by *tdd-UL-DL-ConfigurationCommon* (if provided) or by *tdd-UL-DL-ConfigurationDedicated* (if provided). In one embodiment, the HARQ process ID indicated by the DCI may apply to the first PDSCH not overlapping (e.g., partially overlap or totally overlap) with a UL subband indicated by *SBFD-ConfigurationCommon.* For example, the HARQ process ID may apply to the first PDSCH not "totally" overlapping with the UL subband, which means the HARQ process ID may apply to the first PDSCH even the first PDSCH being "partially" overlapped with the UL subband. For another example, the HARQ process ID may apply to the first PDSCH not "partially" overlapping with the UL subband, which means the HARQ process ID may not apply to the first PDSCH associated with the UL subband.

After applying to the first PDSCH, the HARQ process ID may be incremented by 1 for each subsequent PDSCH in the scheduled order. The HARQ process ID may be updated based on a modulo operation (if needed).

The HARQ process ID may not be incremented for one or more PDSCHs that are not received. In one embodiment, a PDSCH may be considered not received if at least one of the symbols indicated by the indexed row of the used resource allocation table in the slot overlaps with a UL symbol, wherein the UL symbol may be indicated by *tdd-UL-DL-ConfigurationCommon* (if provided) or by *tdd-UL-DL-ConfigurationDedicated* (if provided). In one embodiment, the PDSCH may be considered not received if at least one of the symbols indicated by the indexed row of the used resource allocation table in the slot overlaps (e.g., partially overlap or totally overlap) with a UL subband indicated by *SBFD-ConfigurationCommon.* For example, the PDSCH may be considered not received if the PDSCH totally overlaps with the UL subband, which means the PDSCH may be considered to receive if the PDSCH partially overlaps with the UL subband. For another example, the PDSCH may be considered not received if the PDSCH partially overlaps with the UL subband, which means the PDSCH may not be received if the PDSCH is associated with the UL subband.

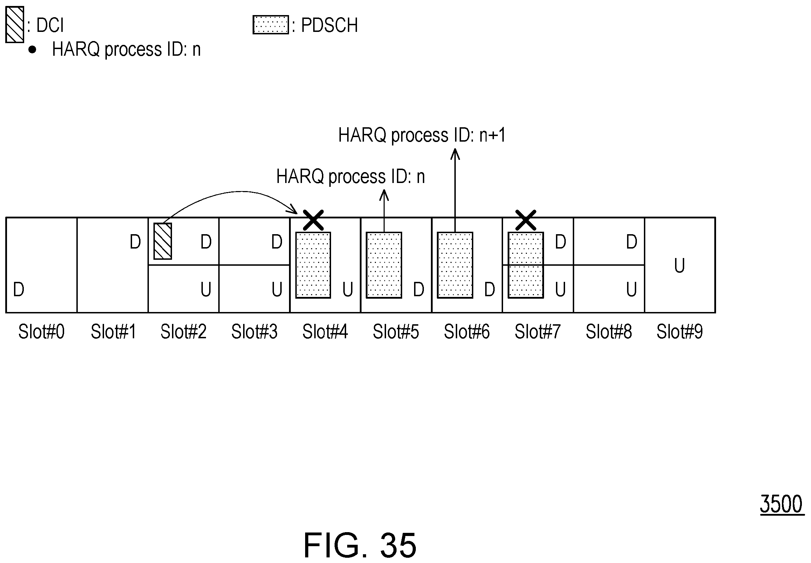

FIG. 35 illustrates a schematic diagram 3500 of the HARQ process ID according to one embodiment of the present disclosure. Assume that multiple PDSCHs (e.g., 4 PDSCHs from slot#4 to slot#7) are scheduled by the DCI, the multiple PDSCHs across two symbol types (e.g., non-SBFD symbol type and SBFD symbol type), and the HARQ process ID indicated by the DCI is n. Since the first PDSCH (e.g., PDSCH in slot#4) is associated with a UL symbol, the HARQ process ID may not be applied to the first PDSCH. Since the second PDSCH (e.g., PDSCH in slot#5) is associated with a DL symbol, the HARQ process ID may be applied to the second PDSCH. Since the third PDSCH (e.g., PDSCH in slot#6) is associated with a DL symbol, the HARQ process ID may be incremented by 1 for the third PDSCH. Since the fourth PDSCH (e.g., PDSCH in slot#7) is associated with a UL subband, the HARQ process ID may not be incremented for the fourth PDSCH, or since the fourth PDSCH (e.g., PDSCH in slot#7) not totally overlaps with the UL subband, the HARQ process ID may be incremented for the fourth PDSCH.

In one embodiment, if a PDSCH among multiple PDSCHs scheduled by a single DCI satisfies at least one of following cases, the HARQ process number (HPN) increment may be skipped for the PDSCH: Case 1: the PDSCH collides with one or more UL symbols indicated by *tdd-UL-DL-ConfigurationCommon* or *tdd-UL-DL-*

*ConfigurationDedicated;* or Case 2: the PDSCH overlaps (e.g., partially overlap or totally overlap) with one or more UL subbands of SBFD symbols indicated by *SBFD-ConfigurationCommon.* For example, the PDSCH totally overlaps with one or more UL subbands, HPN may be skipped for the PDSCH, which means the HPN may not be skipped if the PDSCH partially overlaps with the one or more UL subband. For another example, the PDSCH partially overlaps with one or more UL subbands, HPN may be skipped for the PDSCH, which means the HPN may be skipped if the PDSCH is associated with the one or more UL subbands.

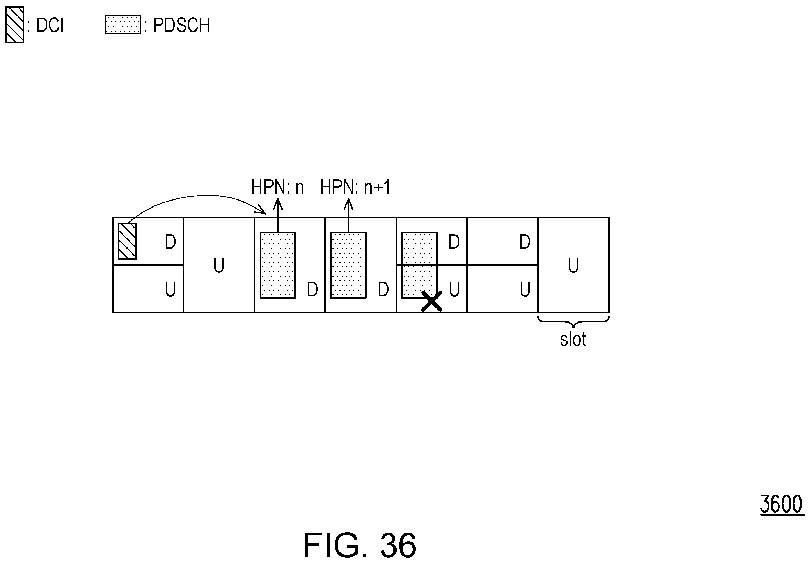

FIG. 36 illustrates a schematic diagram 3600 of Case 2 according to one embodiment of the present disclosure. 3 PDSCHs may be scheduled by a single DCI. However, the last PDSCH is collided with a UL subband indicated by *SBFD-ConfigurationCommon.* Accordingly, the HARQ process number (e.g., HARQ process ID) increment may be skipped for the last PDSCH.

In one embodiment, if a physical uplink shared channel (PUSCH) among multiple PUSCHs scheduled by a single DCI satisfies at least one of following cases, the UE may not transmit the PUSCH: Case 1: the PUSCH collides with one or more DL symbols indicated by *tdd-UL-DL-ConfigurationCommon* or *tdd-UL-DL-ConfigurationDedicated.* If the DL symbol further be configured as the SBFD symbols, and the PUSCH is within (e.g., partially within or totally within) a UL subband of the SBFD symbol, the UE may transmit the PUSCH; or Case 2: the PUSCH overlaps (e.g., partially overlap or totally overlap) with one or more DL subbands of SBFD symbols indicated by *SBFD-ConfigurationCommon.*

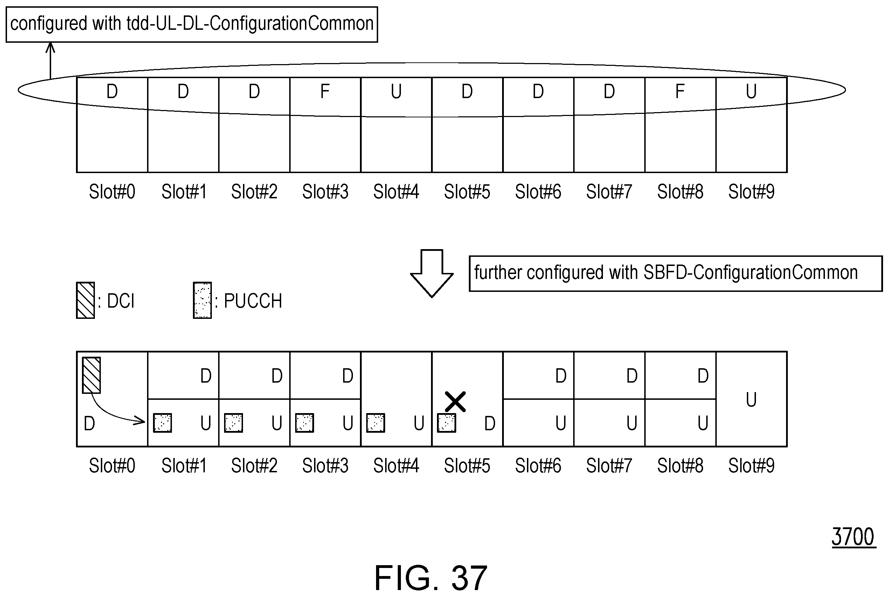

FIG. 37 illustrates a schematic diagram 3700 of PUCCH transmission according to one embodiment of the present disclosure. A UE may be configured with *tdd-UL-DL-ConfigurationCommon,* and the UE may determine the symbol types of the slots accordingly, wherein the symbol types of the slots may include "D" representing a DL symbol type, "U" representing a UL symbol type, and "F" representing a flexible symbol type. The UE may further be configured with *SBFD-ConfigurationCommon,* and the UE may determine the symbol types of the slots accordingly, wherein the symbol types of the slots may include a non-SBFD symbol type and a SBFD symbol type.

Multiple PUSCHs (e.g., 6 PUSCHs) may be scheduled by a single DCI. Slot#1 and slot#2 are configured as a DL slot by *tdd-UL-DL-ConfigurationCommon,* and are further configured as SBFD slots by *SBFD-ConfigurationCommon.* If the PUSCH is within a UL subband, the UE may transmit the PUSCH in slot#1 or slot#2. If the PUSCH is collided with a DL subband, the UE may not transmit the PUSCH in slot#1 or slot#2. Slot#3 is configured as a flexible slot by *tdd-UL-DL-ConfigurationCommon,* and is further configured as a SBFD slot by *SBFD-ConfigurationCommon.* If the PUSCH is within a UL subband, the UE may transmit the PUSCH in slot#3. If the PUSCH is collided with a DL subband, the UE may not transmit the PUSCH in slot#3. Since slot#5 is configured as a DL slot by *tdd-UL-DL-ConfigurationCommon,* the UE may not transmit the PUSCH in slot#5.

In one embodiment, when the UE is scheduled with multiple PUSCHs by a DCI, and the multiple PUSCHs could across SBFD symbol and non-SBFD symbol, the HARQ process ID indicated by this DCI may apply to the first PUSCH not overlapping with a DL symbol, wherein the DL symbol may be indicated by *tdd-UL-DL-ConfigurationCommon* (if provided) or by *tdd-UL-DL-ConfigurationDedicated* (if provided). In one embodiment, the HARQ process ID may apply to the first PUSCH not overlapping (partially overlap or totally overlap) with a symbol of an Synchronization Signal Block (SSB) with index provided by *ssb-PositionsInBurst.* In one embodiment, the HARQ process ID may apply to the first PUSCH not overlapping (partially overlap or totally overlap) with a DL subband indicated by *SBFD-ConfiguraionCommon.*

After applying to the first PUSCH, the HARQ process ID may be incremented by 1 for each subsequent PUSCH in the scheduled order. The HARQ process ID may be updated based on a modulo operation (if needed).

The HARQ process ID may not be incremented for one or more PUSCHs that are not transmitted. In one embodiment, a PUSCH may be considered not transmitted if at least one of the symbols indicated by the indexed row of the used resource allocation table in the slot overlaps with a DL symbol, wherein the DL symbol may be indicated *tdd-UL-DL-ConfigurationCommon* (if provided) or *tdd-UL-DL-ConfigurationDedicated* (if provided). In one embodiment, the PUSCH may be considered not transmitted if at least one of the symbols indicated by the indexed row of the used resource allocation table in the slot overlaps (e.g., partially overlap or totally overlap) with a symbol of an SSB with index provided by *ssb-PositionsInBurst,* or overlaps (e.g., partially overlap or totally overlap )with a DL subband indicated by *SBFD-ConfiguraionCommon.*

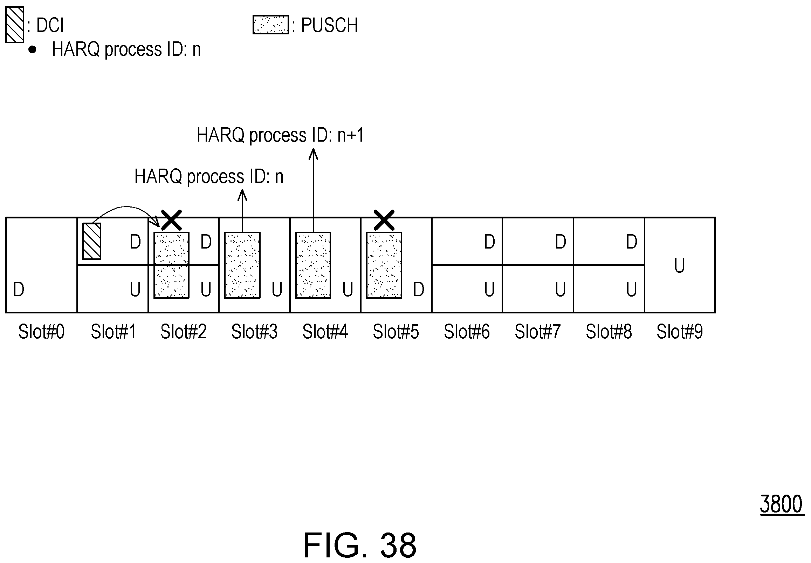

FIG. 38 illustrates a schematic diagram 3800 of the HARQ process ID according to one embodiment of the present disclosure. Multiple PUSCHs (e.g., 4 PUSCHs from slot#2 to slot#5) across SBFD symbols and non-SBFD symbols may be scheduled by a DCI, and the HARQ process ID indicated by the DCI may be n. Since the first PUSCH (e.g., in slot#2) overlaps with a DL subband, the HARQ process ID may not be applied to the first PUSCH. Since the second PUSCH (e.g., in slot#3) is associated with a UL symbol, the HARQ process ID may be applied to the second PUSCH. Since the third PUSCH (e.g., in slot#4) is associated with a UL symbol, the HARQ process ID may be incremented by 1 for the third PUSCH. Since the fourth PUSCH (e.g., in slot#5) is associated with a DL symbol, the HARQ process ID may not be incremented for the fourth PUSCH.

In one embodiment, if a PUSCH among multiple PUSCHs scheduled by a single DCI satisfies at least one of following cases, the HARQ process number increment may be skipped for the PUSCH: Case 1: the PUSCH collides with one or more DL symbols indicated by *tdd-UL-DL-ConfigurationCommon* or *tdd-UL-DL-ConfigurationDedicated*. If the DL symbol further be configured as a SBFD symbol, and the PUSCH is within (e.g., partially within or totally within) a UL subband of the SBFD symbol, the UE may transmit the PUSCH; or Case 2: the PUSCH overlaps (e.g., partially overlap or totally overlap) with a DL subband of SBFD symbols indicated by *SBFD-ConfigurationCommon*.

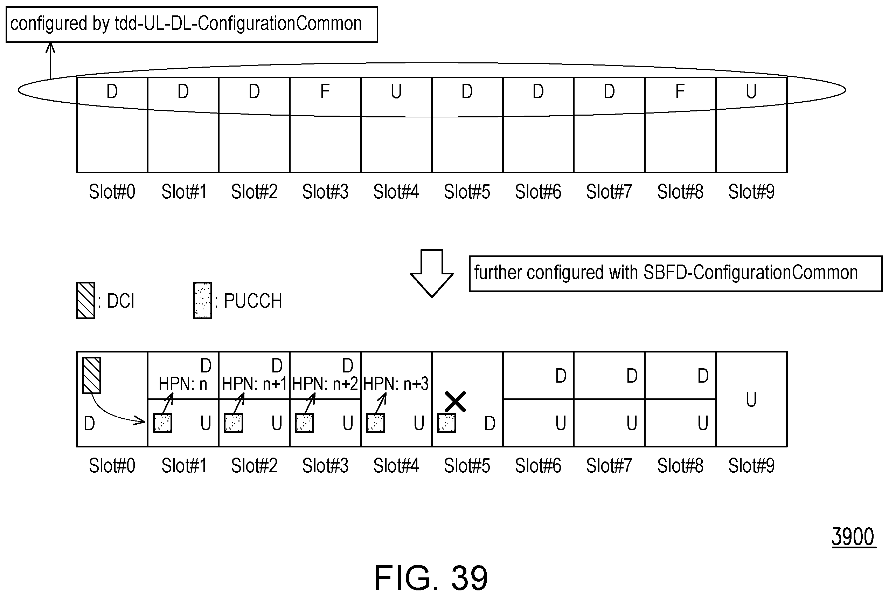

FIG. 39 illustrates a schematic diagram 3900 of PUCCH transmission according to one embodiment of the present disclosure. A UE may be configured with *tdd-UL-DL-ConfigurationCommon,* and the UE may determine the symbol types of the slots accordingly. The UE may further be configured with *SBFD-Configuration-Common,* and the UE may determine the symbol types of the slots accordingly, wherein the symbol types of the slots may include a non-SBFD symbol type and a SBFD symbol type.

Multiple PUSCHs (e.g., 6 PUSCHs) may be scheduled by a single DCI. Slot#1 and slot#2 are configured as DL slots by *tdd-UL-DL-ConfigurationCommon,* and are further configured as SBFD slots by *SBFD-ConfigurationCommon*. If the PUSCH is within a UL subband, the HARQ process number increment may be applied to the PUSCH in slot#1 or slot#2. If the PUSCH is collided with a DL subband, the HARQ process number increment may be skipped for the PUSCH in slot#1 or slot#2. Slot#3 is configured as a flexible slot by *tdd-UL-DL-ConfigurationCommon,* and is further configured as a SBFD slot by *SBFD-ConfigurationCommon*. If the PUSCH is within the UL subband, the HARQ process number increment may be applied to the PUSCH in slot#3. If the PUSCH is collided with a DL subband, the HARQ process number increment may be skipped for the PUSCH in slot#3. Since slot#5 is configured as a DL slot by *tdd-UL-DL-ConfigurationCommon,* the HARQ process number increment may be skipped for the PUSCH in slot#5.

In one embodiment, a UE may be scheduled with multiple PDSCHs reception by a single DCI and the single DCI may indicate a $K_1$ value for one or more HARQ-ACK information bits. Some PDSCHs of the multiple PDSCHs may be associated with a first symbol type (e.g., non-SBFD symbol), and the other PDSCHs of the multiple PDSCHs may be associated with a second symbol type (e.g., SBFD symbol). A first PUCCH transmission occasion may be determined based on the last PDSCH of the first symbol type and the $K_1$ value. The PDSCHs associated with the first symbol type may be jointly operated for one or more first HARQ-ACK information bits, and the first HARQ-ACK information bits may be transmitted on the first PUCCH occasion by the UE. A second PUCCH transmission occasion may be determined based on the last PDSCH of the second symbol type and the $K_1$ value. The PDSCHs associated with the second symbol type may be jointly operated for one or more second HARQ-ACK information bits, and the second HARQ-ACK information bit may be transmitted on the second PUCCH occasion by the UE.

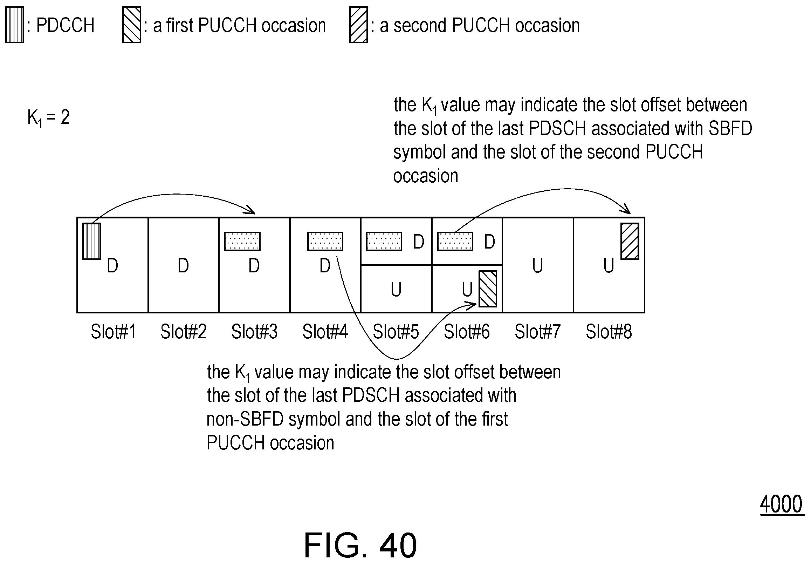

FIG. 40 illustrates a schematic diagram 4000 of separate PUCCH occasions determination according to one embodiment of the present disclosure. The physical downlink control channel (PDCCH) may schedule multiple PDSCHs (e.g., 4 PDSCHs) and indicates a $K_1$ value (e.g., $K_1 = 2$). The $K_1$ value may indicate the slot offset between the slot of the last PDSCH associated with the non-SBFD symbols and the slot of the first PUCCH occasion. The $K_1$ value may indicate the slot offset between the slot of the last PDSCH associated with the SBFD symbols and the slot of the second PUCCH occasion. The HARQ process numbers of PDSCH in slot#3 and PDSCH in slot#4 may be released after slot#6.

Since the PDSCHs in slot#3 and slot#4 may be associated with the non-SBFD symbols, those PDSCHs may be jointly operated to create one or more first HARQ-ACK information bits by the UE. The first HARQ-ACK information bits may be transmitted on the first PUCCH occasion. Since the PDSCHs in slot#5 and slot#6 may be associated with the SBFD symbols, those PDSCHs may be jointly operated to create one or more second HARQ-ACK information bits by the UE. The second HARQ-ACK information bits may be transmitted on the second PUCCH occasion.

In one embodiment, a UE may be scheduled with multiple PDSCHs reception by a single DCI and the single DCI may indicate a first $K_1$ value and a second $K_1$ value for one or more HARQ-ACK information bits. Some PDSCHs of the multiple PDSCHs may be associated with a first symbol type (e.g., non-SBFD symbol), and the other PDSCHs of the multiple PDSCHs may be associated with a second symbol type (e.g., SBFD symbol). A first PUCCH transmission occasion may be determined based on the last PDSCH scheduled by the single DCI and the first $K_1$ value. The PDSCHs associated with the first symbol type may be jointly operated for one or more first HARQ-ACK information bits, and the first HARQ-ACK information bits may be transmitted on the first PUCCH occasion by the UE. A second PUCCH transmission occasion may be determined based on the last PDSCH scheduled by the single DCI and the second $K_1$ value. The PDSCHs associated with the second symbol type may be jointly operated for one or more second HARQ-ACK information bits, and the second HARQ-ACK information bits may be transmitted on the second PUCCH occasion by the UE.

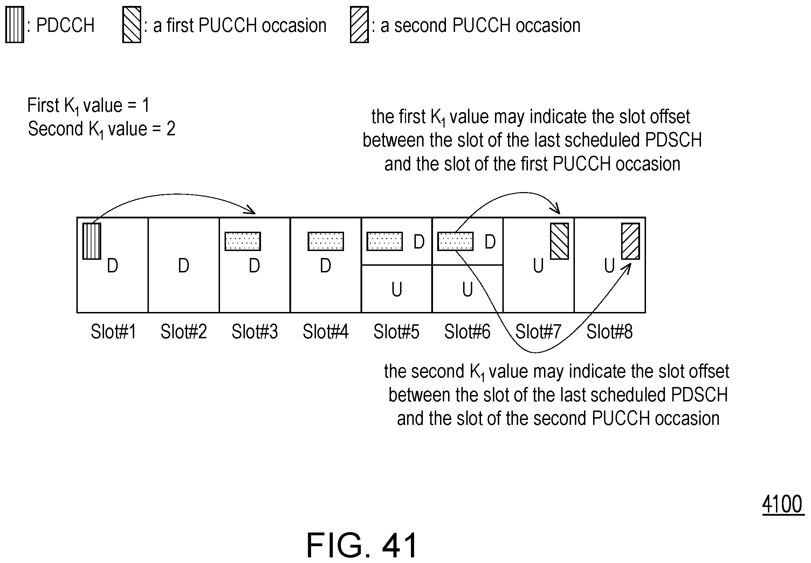

FIG. 41 illustrates a schematic diagram 4100 of PUCCH occasions scheduling according to one embodiment of the present disclosure. The PDCCH may schedule multiple PDSCHs (e.g., 4 PDSCHs) and may indicate multiple $K_1$ values including a first $K_1$ value = 1 and a second $K_1$ value = 2. The first $K_1$ value may indicate the slot offset between the slot of the last scheduled PDSCH and the slot of the first PUCCH occasion. The second $K_1$ value may indicate the slot offset between the slot of the last scheduled PDSCH and the slot of the second PUCCH occasion.

Since the PDSCHs in slot#3 and slot#4 may be associated with the non-SBFD symbols, those PDSCHs may be jointly operated to create one or more first HARQ-ACK information bits by the UE. The first HARQ-ACK information bits may be transmitted on the first PUCCH occasion. Since the PDSCHs in slot#5 and slot#6 may be associated with the SBFD symbols, those PDSCHs may be jointly operated to create one or more second HARQ-ACK information bits by the UE. The second HARQ-ACK information bits may be transmitted on the second PUCCH occasion.

In one embodiment, a UE may be scheduled with multiple PDSCHs reception by a single DCI and the single DCI may indicate a first $K_1$ value and a second $K_1$ value for one or more HARQ-ACK information bits. Some PDSCHs of the multiple PDSCHs may be associated with a first symbol type (e.g., non-SBFD symbol), and the other PDSCHs of the multiple PDSCHs may be associated with a second symbol type (e.g., SBFD symbol). A first PUCCH transmission occasion may be determined based on the last PDSCH associated with the first symbol type and the first $K_1$ value. The PDSCHs associated with the first symbol type may be jointly operated for one or more first HARQ-ACK information bits, and the first HARQ-ACK information bits may be transmitted on the first PUCCH occasion by the UE. A second PUCCH transmission occasion may be determined based on the last PDSCH associated with the second symbol type and the second $K_1$ value. The PDSCHs associated with the second symbol type may be jointly operated for one or more second HARQ-ACK information bits, and the second HARQ-ACK information bits may be transmitted on the second PUCCH occasion by the UE.

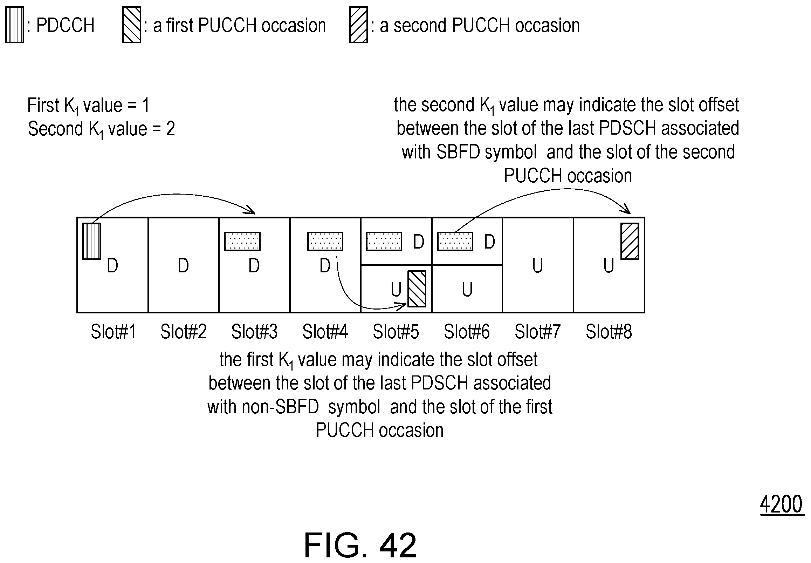

FIG. 42 illustrates a schematic diagram 4200 of PUCCH occasions scheduling according to one embodiment of the present disclosure. The last scheduled PDSCH of the first symbol type (e.g., non-SBFD symbol type) may be a reference point for determining the first PUCCH occasion. The last scheduled PDSCH of the second symbol type (e.g., SBFD symbol type) may be a reference point for determining the second PUCCH occasion. The PDCCH may schedule multiple PDSCHs (e.g., 4 PDSCHs) and may indicate multiple $K_1$ values including a first $K_1$ value = 1 and a second $K_1$ value = 2. The first $K_1$ value may indicate the slot offset between the slot of the last PDSCH associated with the non-SBFD symbol and the slot of the first PUCCH occasion. The second $K_1$ value may indicate the slot offset between the slot of the last PDSCH associated with SBFD symbol and the slot of the second PUCCH occasion. The HARQ process numbers of PDSCH in slot#3 and PDSCH of slot#4 may be released after slot#6.

Since the PDSCHs in slot#3 and slot#4 may be associated with the non-SBFD symbols, those PDSCHs may be jointly operated to create one or more first HARQ-ACK information bits by the UE. The first HARQ-ACK information bits may be transmitted on the first PUCCH occasion. Since the PDSCHs in slot#5 and slot#6 may be associated with the SBFD symbols, those PDSCHs may be jointly operated to create one or more second HARQ-ACK information bits by the UE. The second HARQ-ACK information bits may be transmitted on the second PUCCH occasion.

A pruning procedure may be performed based on the last scheduled PDSCH of the multiple PDSCHs. In one embodiment, a UE may be scheduled with multiple PDSCHs reception by a single DCI and the UE may be configured with type-1 HARQ-ACK codebook report for the multiple PDSCHs. Separate PUCCH resource may be applied for the report. Some PDSCHs of the multiple PDSCHs may be associated with a first symbol type (e.g., non-SBFD symbol), and the other PDSCHs of the multiple PDSCHs may be associated with a second symbol type (e.g., SBFD symbol). A first pruning procedure may be performed based on the last PDSCH associated with the first symbol type, and the related HARQ-ACK information bits of PDSCHs associated with the first symbol type may be transmitted on the first PUCCH resource. A second pruning procedure may be performed based on the last PDSCH associated with the second symbol type, and the related HARQ-ACK information bits of PDSCHs associated with the second symbol type may be transmitted on the second PUCCH resource.

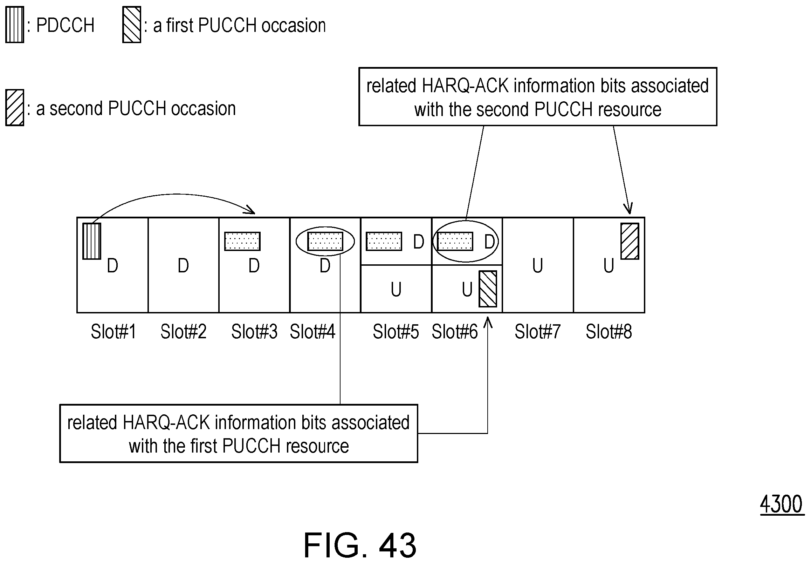

FIG. 43 illustrates a schematic diagram 4300 of type-1 HARQ-ACK codebook report according to one embodiment of the present disclosure. The PUCCH may schedule multiple PDSCHs (e.g., 4 PDSCHs in slot#3 to slot#6). The last PDSCH associated with the non-SBFD symbol type (e.g., PDSCH in slot#4) may be used to jointly operate a first pruning procedure, and one or more related HARQ-ACK information bits may be associated with the first PUCCH resource. The last PDSCH associated with the SBFD symbol type (e.g., PDSCH in slot#6) may be used to jointly operate a second pruning procedure, and one or more related HARQ-ACK information bits may be associated with the second PUCCH resource.

Since the PDSCHs in slot#3 and slot#4 may be associated with the non-SBFD symbols, a logic AND operation may be applied across those PDSCHs to create a first HARQ-ACK bit by the UE. The UE may report the first HARQ-ACK bit on the first PUCCH resource. Since the PDSCHs in slot#5 and slot#6 may be associated with the SBFD symbols, a logic AND operation may be applied across those PDSCHs to create a second HARQ-ACK bit by the UE. The UE may report the second HARQ-ACK bit on the second PUCCH resource.

In one embodiment, a UE may be scheduled with multiple PDSCHs reception by a single DCI and the UE may be configured with type-2 HARQ-ACK codebook report with *numberOfHARQ-BundlingGroups* M for the multiple PDSCHs. Separate PUCCH resources may be applied for the report. Some PDSCHs of the multiple PDSCHs may be associated with a first symbol type (e.g., non-SBFD symbol), and the other PDSCHs of the multiple PDSCHs may be associated with a second symbol type (e.g., SBFD symbol). One or more HARQ-ACK information bits of the PDSCHs associated with the first symbol type may be allocated to a first M group and may be transmitted on the first PUCCH resource. One or more HARQ HARQ-ACK information bits of the PDSCHs associated with the second symbol type may be allocated to a second M group and may be transmitted on the second PUCCH resource.

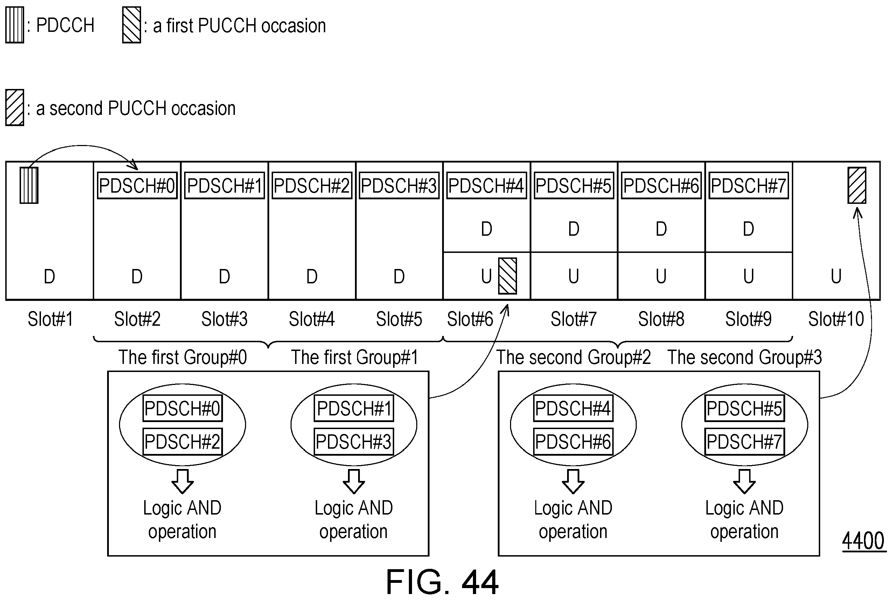

FIG. 44 illustrates a schematic diagram 4400 of type-2 HARQ-ACK codebook report according to one embodiment of the present disclosure. Multiple PDSCHs (e.g., 8 PDSCHs in slot#2 to slot#9) may be scheduled by the PUCCH. Assume that *numberOfHARQ-ACK-BundlingGroups* M = 2, and group#0 and group#1 for each symbol type are created for the type-2 HARQ-ACK codebook. Since PDSCH#0 to PDSCH#3 may be associated with the non-SBFD symbol type, one or more HARQ-ACK information bits of those PDSCHs may be allocated to a first group#0 and a first group#1. Since PDSCH#4 to PDSCH#7 may be associated with the SBFD symbol type, one or more HARQ-ACK information bits of those PDSCHs may be allocated to a second group#2 and a second group#3.

For example, PDSCH#0 and #2 may be allocated to the first group#0. A logic AND operation may be applied to the first group#0 to create a first HARQ-ACK information bit. PDSCH#1 and #3 may be allocated to the first group#1. A logic AND operation may be applied to the first group#1 to create a first HARQ-ACK information bit. The information of the first HARQ-ACK information bits of the first group#0 and the first group#1 may be transmitted to the network on the first PUCCH occasion associated with the non-SBFD symbol type. PDSCH#4 and #6 may be allocated to the second group#2. A logic AND operation may be applied to the second group#2 to create a second HARQ-ACK information bit. PDSCH#5 and #7 may be allocated to the second group#3. A logic AND operation may be applied to the second group#3 to create a second HARQ-ACK information bit. The information of the second HARQ-ACK information bits of the second group#0 and the second group#1 may be transmitted to the network on the second PUCCH occasion associated with the SBFD symbol type.

In one embodiment, a UE may be scheduled with multiple PDSCHs reception by a single DCI and the UE may be configured with type-2 HARQ-ACK codebook report with a first *numberOfHARQ-BundlingGroups* M1 and a second *numberOfHARQ-BundlingGroups* M2 for the multiple PDSCHs. Separate PUCCH resources may be applied for the report. Some PDSCHs of the multiple PDSCHs may be associated with a first symbol type (e.g., non-SBFD symbol), and the other PDSCHs of the multiple PDSCHs may be associated with a second symbol type (e.g., SBFD symbol). One or more HARQ-ACK information bits of the PDSCHs associated with the first symbol type may be allocated to a M1 groups and may be transmitted on the first PUCCH resource. One or more HARQ-ACK information bits of the PDSCHs associated with the second symbol type may be allocated to M2 groups and may be transmitted on the second PUCCH resource.

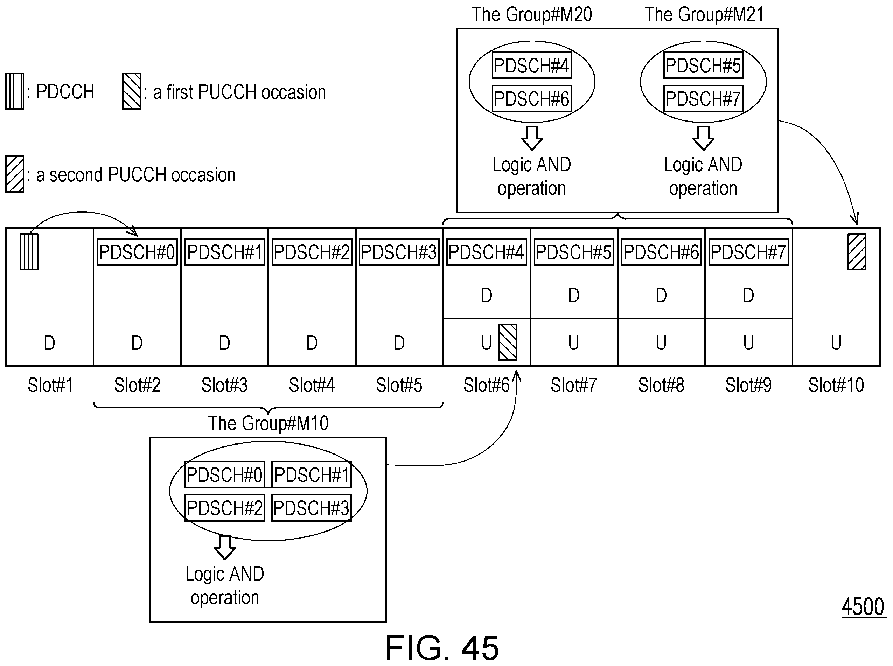

FIG. 45 illustrates a schematic diagram 4500 of type-2 HARQ-ACK codebook report according to one embodiment of the present disclosure. Multiple PDSCHs (e.g., 8 PDSCHs in slot#2 to slot#9) may be scheduled by the PUCCH. Assume that first *numberOfHARQ-ACK-BundlingGroups* M1 = 1, second *numberOfHARQ-ACK-BundlingGroups* M2 = 2, and group#M10 associated with the non-SBFD symbol type is created for the type-2 HARQ-ACK codebook, and group#M20 and group#M21 associated with the SBFD symbol type are created for the type-2 HARQ-ACK codebook. Since PDSCH#0 to PDSCH#3 may be associated with the non-SBFD symbol type, one or more HARQ-ACK information bits of those PDSCHs may be allocated to group#M10. Since PDSCH#4 to PDSCH#7 may be associated with the SBFD symbol type, one or more HARQ-ACK information bits of those PDSCHs may be allocated to group#M20 and group#M21.

For example, PDSCH#0 to #3 may be allocated to the group#M10. A logic AND operation may be applied to the group#M10 to create a first HARQ-ACK information bits. The information of the first HARQ-ACK information bit of the group#M10 may be transmitted to the network on the first PUCCH occasion associated with the non-SBFD symbol type. PDSCH#4 and #6 may be allocated to the group#M20. A logic AND operation may be applied to the group#M20 to create a second HARQ-ACK information bit. PDSCH#5 and #7 may be allocated to the group#M21. A logic AND operation may be applied to the group#M21 to create a second HARQ-ACK information bit. The information of the second HARQ-ACK information bits of the group#M10 and the group#M21 may be transmitted to the network on the second PUCCH occasion associated with the SBFD symbol type.

In one embodiment, a UE may be scheduled with multiple PDSCHs reception by a DCI, and the multiple PDSCHs reception may be restricted to one symbol type (e.g., SBFD symbol) only. The UE may not expect that at least one symbol of each PDSCH time resource derived by a row of a TDRA table indicated by the DCI is associated with the other symbol type (e.g., non-SBFD symbol) or associated with a UL symbol.

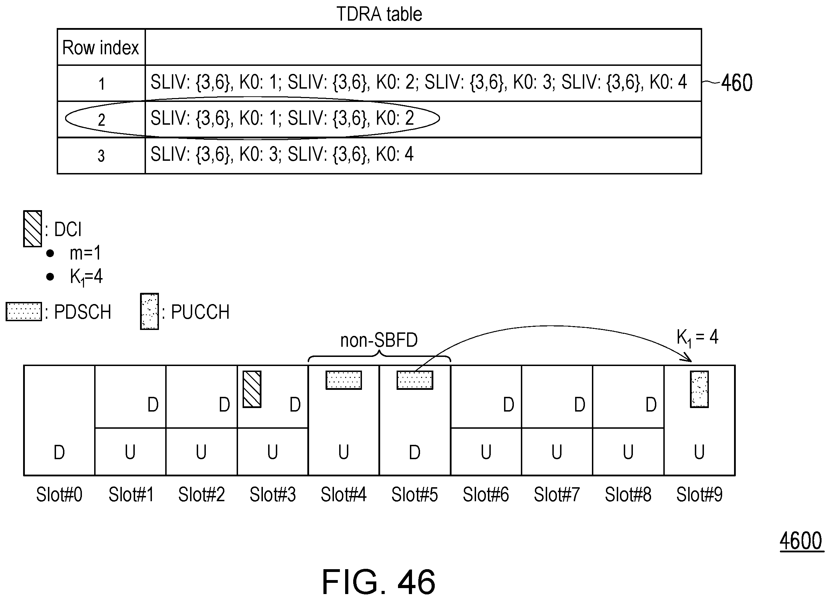

FIG. 46 illustrates a schematic diagram 4600 of HARQ feedback according to one embodiment of the present disclosure. A DCI may schedule multiple PDSCHs (e.g., PDSCHs in slot#4 and slot#5). A time domain resource assignment field in the DCI may indicate a value m (e.g., $m = 1$), wherein m provides a row index (m+1) of a TDRA table, such as the TDRA table 460 configured to the UE by the DCI. The DCI may include a *PDSCH-to-HARQ_feedback* timing indicator field $K_1$

(e.g., $K_1$ = 4). The reception behavior of the UE may be configured to restricted to SBFD symbol only. The UE may not expect that at least one symbol of each PDSCH time resource derived by a row (e.g., row 2) of the TDRA table 460 is associated with the non-SBFD symbol or associated with a UL symbol.

In one embodiment, a UE may be configured with a TDRA table for the reception for one or more PDSCHs, and the reception behavior of the UE may be restricted to one symbol only (e.g., SBFD symbol). If at least one symbol of each PDSCH time resource derived by a row of the TDRA table is associated with a non-SBFD symbol type or a UL symbol type, the row may be deleted (or removed from the TDRA table) before the pruning procedure. If all symbols of each PDSCH time resource derived by a row of the TDRA table is associated with the SBFD symbol type only, the UE may perform binary AND operation on one or more HARQ-ACK information bits corresponding to the PDSCH time resource.

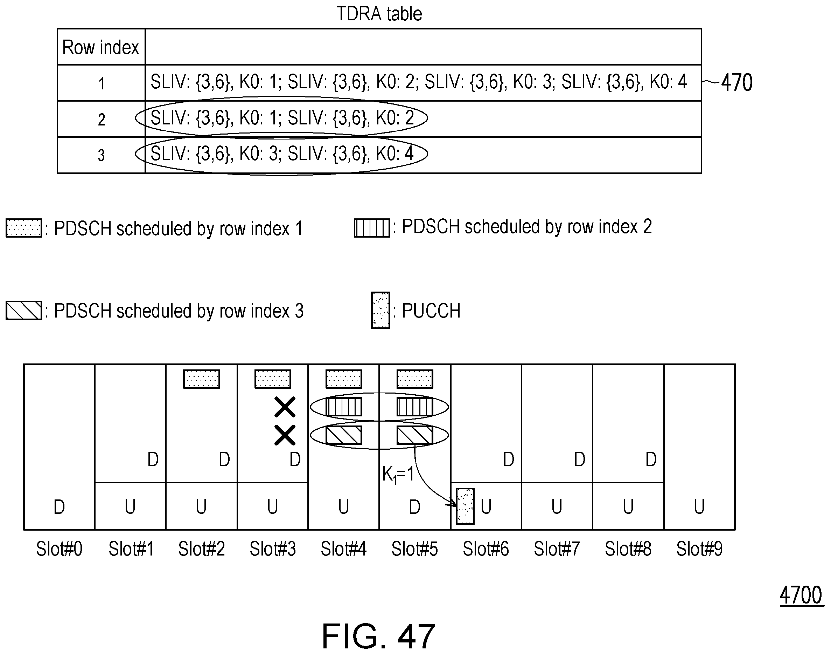

FIG. 47 illustrates a schematic diagram 4700 of HARQ feedback according to one embodiment of the present disclosure. The UE may be configured with the TDRA table 470. For $K_1$ = 1, since the reception behavior of a UE is restricted to the SBFD symbol only, the UE may delete row index 2 and row index 3 of the TDRA table 470 before the pruning procedure.

In one embodiment, a UE may be scheduled with multiple PDSCHs reception by a DCI, and the multiple PDSCHs reception may be restricted to one symbol (e.g., non-SBFD symbol only). The UE may not expect that at least one symbol of each PDSCH time resource derived by a row of a TDRA table indicated by the DCI is associated with the other symbol type (e.g., SBFD symbol) or associated with a UL symbol.

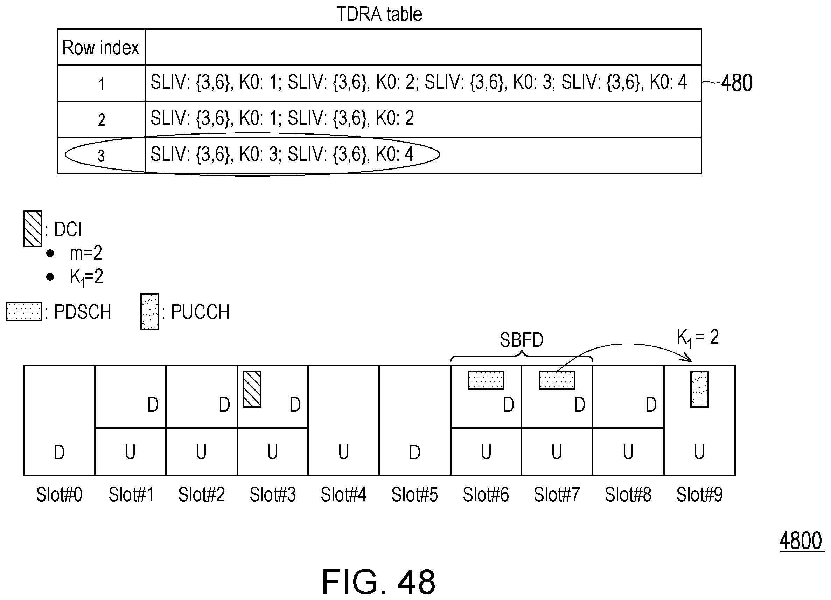

FIG. 48 illustrates a schematic diagram 4800 of HARQ feedback according to one embodiment of the present disclosure. A DCI may schedule multiple PDSCHs (e.g., PDSCHs in slot#6 and slot#7). A time domain resource assignment field in the DCI may indicate a value m (e.g., $m$ = 1), wherein m provides a row index (m+1) of a TDRA table, such as the TDRA table 480 configured to the UE by the DCI. The DCI may include a *PDSCH-to-HARQ_feedback* timing indicator field $K_1$ (e.g., $K_1$ = 2). The reception behavior of the UE may be configured to restricted to non-SBFD symbol only. The UE may not expect that at least one symbol of each PDSCH time resource derived by a row (e.g., row 3) of the TDRA table 480 is associated with the SBFD symbol or associated with a UL symbol.

In one embodiment, a UE may be configured with a TDRA table for the reception for one or more PDSCHs, and the reception behavior of the UE may be restricted to one symbol only (e.g., non-SBFD symbol). If at least one symbol of each PDSCH time resource derived by a row of the TDRA table is associated with a SBFD symbol type or a UL symbol type, the row may be deleted (or removed from the TDRA table) before the pruning procedure. If all symbols of each PDSCH time resource derived by a row of the TDRA table is associated with the non-SBFD symbol type only, the UE may perform binary AND operation on one or more HARQ-ACK information bits corresponding to the PDSCH time resource.

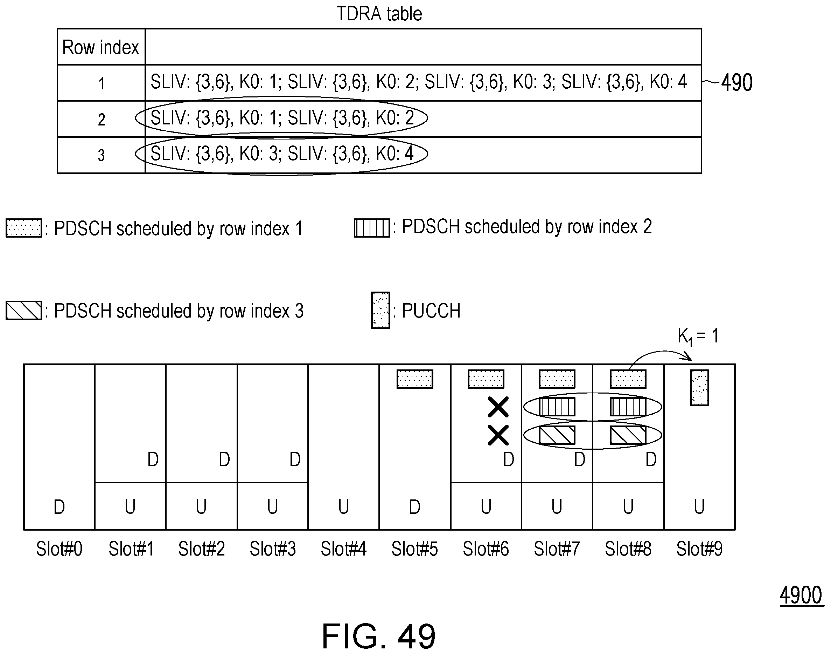

FIG. 49 illustrates a schematic diagram 4900 of HARQ feedback according to one embodiment of the present disclosure. The UE may be configured with the TDRA table 490. For $K_1$ = 1, since the reception behavior of a UE is restricted to the non-SBFD symbol only, the UE may delete row index 2 and row index 3 of the TDRA table 490 before the pruning procedure.

In one embodiment, a UE may be scheduled with multiple PDSCHs reception by a DCI, and the multiple PDSCHs reception may be restricted to one symbol (e.g., SBFD symbol only). A binary AND operation may be applied for one or more HARQ-ACK information bits corresponding to all transport blocks in the PDSCHs, wherein the PDSCHs do not overlap with a UL symbol or a DL symbol indicated by *tdd-UL-DL-Configuration-Common* or *tdd-UL-DL-CondifurationDedicated,* or the PDSCHs do not overlap (e.g., partially overlap or totally overlap) with a UL subband indicated by *SBFD-ConfigurationCommon* scheduled by the DCI.

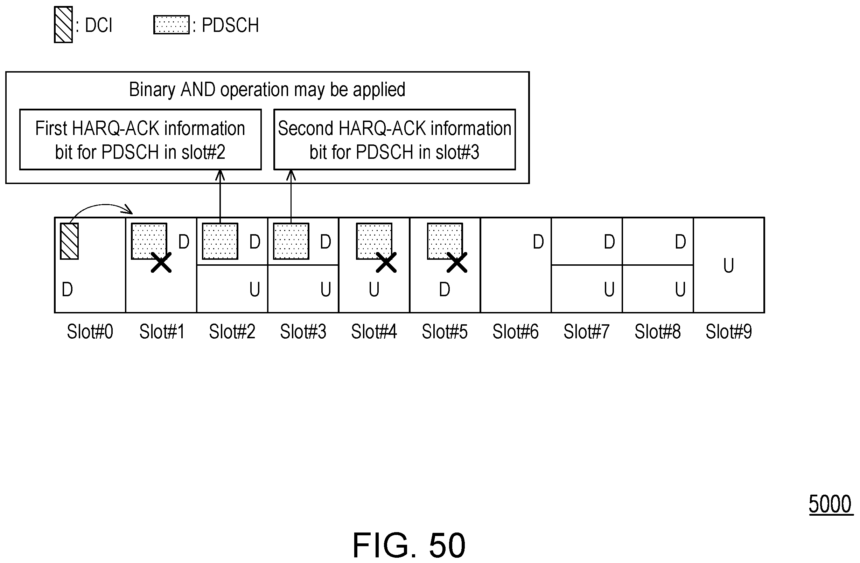

FIG. 50 illustrates a schematic diagram 5000 of HARQ feedback according to one embodiment of the present disclosure. The reception behavior of the UE may be configured to restricted to SBFD symbols only. Multiple PDSCHs (e.g., PDSCHs in slot#1 to slot#5) may be configured to the UE by the DCI. Since PDSCHs in slot#1, slot#4, or slot#5 belong to the non-SBFD symbol, the UE may not apply a binary AND operation to the HARQ-ACK information bits of those PDSCHs. The UE may apply a binary AND operation to a first HARQ-ACK information bit for the PDSCH in slot#2 and a second HARQ-ACK information bit for the PDSCH in slot#3. If the result of the binary AND operation is an ACK, it means that the UE decodes the PDSCHs in slot#2 and slot#3 successfully. If the result of the binary AND operation is a NACK, it means that the UE decodes at least one PDSCH in slot#2 and slot#3 unsuccessfully.

In one embodiment, a UE may be scheduled with multiple PDSCHs reception by a DCI, and the multiple PDSCHs reception may be restricted to one symbol (e.g., non-SBFD symbol) only. A binary AND operation may be applied to the HARQ-ACK information bits corresponding to all transport blocks in PDSCHs, wherein the PDSCHs do not overlap with a UL symbol indicated by *tdd-UL-DL-ConfigurationCommon* or *tdd-UL-DL-CondifurationDedicated,* or do not overlap with the SBFD symbol indicated by *SBFD-ConfigurationCommon* scheduled by the DCI.

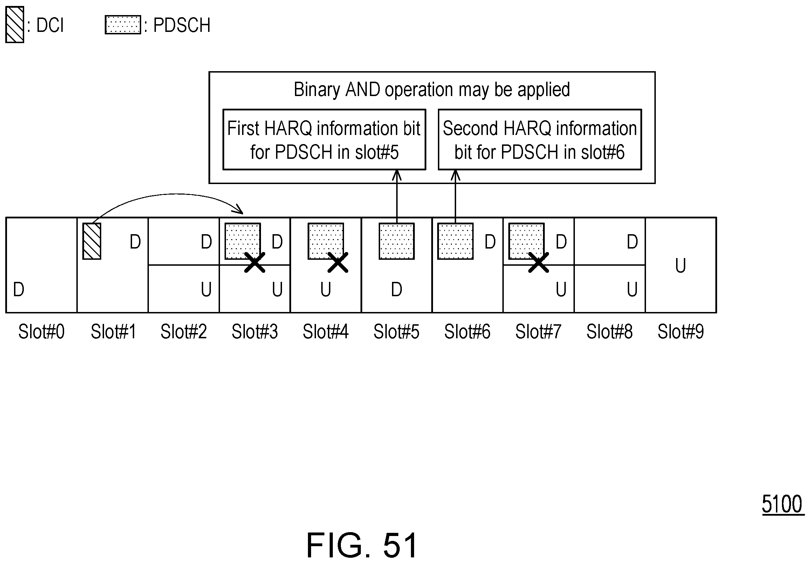

FIG. 51 illustrates a schematic diagram 5100 of HARQ feedback according to one embodiment of the present disclosure. The reception behavior of the UE may be configured to restricted to non-SBFD symbols only. Multiple PDSCHs (e.g., PDSCHs in slot#3 to slot#7) may be configured to the UE by the DCI. Since PDSCHs in slot#3, slot#4, or slot#7 belong to the SBFD symbol, the UE may not apply a binary AND operation to the HARQ-ACK information bits of those PDSCHs. The UE may apply a binary AND operation to a first HARQ-ACK information bit for the PDSCH in slot#5 and a second HARQ-ACK information bit for the PDSCH in slot#6. If the result of the binary AND operation is an ACK, it means that the UE decodes the PDSCHs in slot#5 and slot#6 successfully. If the result of the binary AND operation is a NACK, it means that the UE decodes at least one PDSCH in slot#5 and slot#6 unsuccessfully.

In one embodiment, if a PDSCH among multiple PDSCHs scheduled by a single DCI satisfies at least one of following cases, the UE may not receive the PDSCH: Case 1: if the multiple PDSCHs reception is restricted to SBFD symbols only, the PDSCH collides with one or more DL symbols indicated by *tdd-UL-DL-Configuration-Common,* or the PDSCH overlaps (e.g., partially overlap or total overlap) with a UL subband of one or more SBFD symbols indicated by *SBFD-ConfigurationCommon*; or Case 2: if the multiple PDSCHs reception is restricted to non-SBFD symbols only, the PDSCH collides with one or more UL symbols indicated by *tdd-UL-DL-Configuration-Common* or *tdd-UL-DL-ConfigurationDedicated,* or the PDSCH collides with one or more SBFD symbols indicated by *SBFD-ConfigurationCommon.*

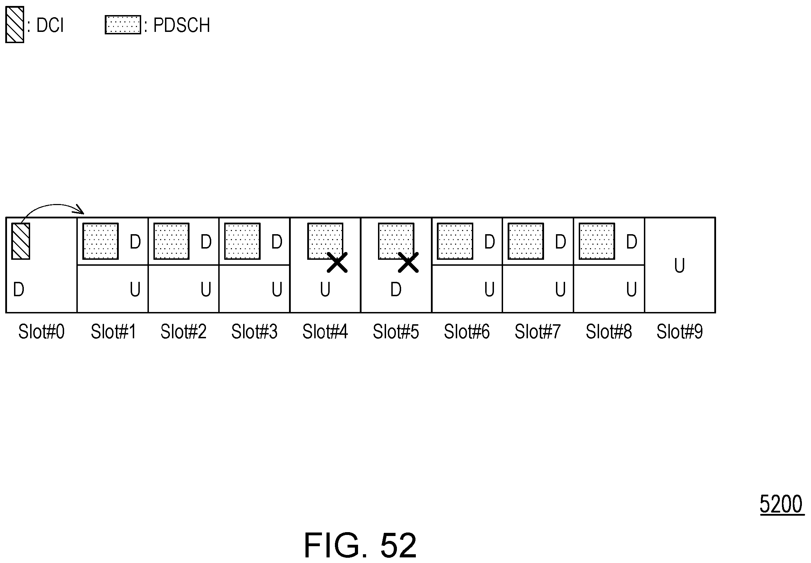

FIG. 52 illustrates a schematic diagram 5200 of HARQ feedback according to one embodiment of the present disclosure. The reception behavior of the UE may be configured to restricted to SBFD symbols only. Multiple PDSCHs (e.g., 8 PDSCHs in slot#1 to slot#8) may be configured to the UE by the DCI. Since the PDSCH in slot#4 is collided with UL symbols, the UE may not receive the PDSCH in slot#4. Since the multiple PDSCHs reception are restricted to SBFD symbol only, the UE may not receive the PDSCH in slot#5.

Assume that the UE is scheduled with multiple PDSCHs by a DCI, and the multiple PDSCHs are restricted to SBFD symbols only. The HARQ process ID indicated by the DCI may apply to the first PDSCH not overlapping with a UL symbol or a DL symbol indicated by *tdd-UL-DL-ConfigurationCommon* or *tdd-UL-DL-ConfigurationDedicated* (if provided), or not overlapping (e.g., partially overlap or totally overlap) with a UL subband indicated by *SBFD-ConfiguraionCommon.* The HARQ process ID may be incremented by 1 for each subsequent PDSCH in the scheduled order. The HARQ process ID may be updated based on a modulo operation (if needed). The HARQ process ID may not be incremented for PDSCHs not received if at least one of the symbols indicated by the indexed row of the used resource allocation table in the slot overlaps with a UL symbol or a DL symbol, wherein the UL symbol or the DL symbol may be indicated by *tdd-UL-DL-ConfigurationCommon* or *tdd-UL-DL-ConfigurationDedicated* (if provided). In one embodiment, the PDSCH may be considered not received if the PDSCH overlaps (e.g., partially overlap or totally overlap) with a UL subband indicated by *SBFD-ConfiguraionCommon.*

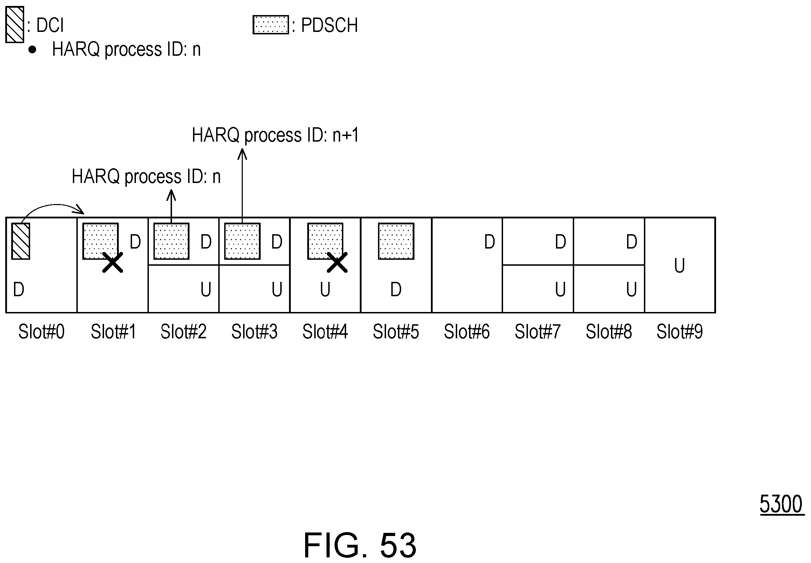

FIG. 53 illustrates a schematic diagram 5300 of HARQ feedback according to one embodiment of the present disclosure. The reception behavior of the UE may be configured to restricted to SBFD symbols only. Multiple PDSCHs (e.g., 5 PDSCHs in slot#1 to slot#5) may be configured to the UE by the DCI, and the HARQ process ID indicated by the DCI may be n. Since the first PDSCH (e.g., in slot#1) is associated with a DL symbol, the HARQ process ID may not be applied to the first PDSCH. Since the second PDSCH (e.g., in slot#2) is associated with a SBFD symbol, the HARQ process ID may be applied to the second PDSCH. Since the third PDSCH (e.g., in slot#3) is associated with a SBFD symbol, the HARQ process ID may be incremented by 1 for the third PDSCH. Since the fourth PDSCH (e.g., in slot#4) is associated with a UL symbol, the HARQ process ID may not be incremented for the fourth PDSCH. Since the fifth PDSCH (e.g., in slot#5) is associated with a DL symbol, the HARQ process ID may not be incremented to the fifth PDSCH.

Assume that the UE is scheduled with multiple PDSCHs by a DCI, and the multiple PDSCHs are restricted to non-SBFD symbols only. The HARQ process ID indicated by the DCI may apply to the first PDSCH not overlapping with a UL symbol or a SBFD symbol, wherein the UL symbol may be indicated by *tdd-UL-DL-ConfigurationCommon* or *tdd-UL-DL-ConfigurationDedicated* (if provided), and the SBFD symbol may be indicated by *SBFD-ConfiguraionCommon.* The HARQ process ID may be incremented by 1 for each subsequent PDSCHs in the scheduled order. The HARQ process ID may be updated based on a modulo operation (if needed). The HARQ process ID may not be incremented for PDSCHs not received if at least one of the symbols indicated by the indexed row of the used resource allocation table in the slot overlaps with a UL symbol or a SBFD symbol, wherein the UL symbol may be indicated by *tdd-UL-DL-ConfigurationCommon* or *tdd-UL-DL-ConfigurationDedicated* (if provided), and the SBFD symbol may be indicated by *SBFD-ConfiguraionCommon.*

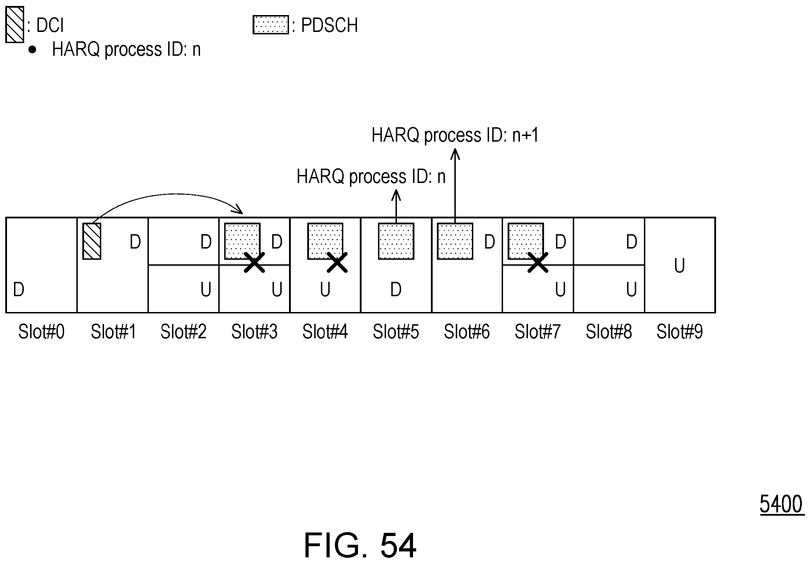

FIG. 54 illustrates a schematic diagram 5400 of HARQ feedback according to one embodiment of the present disclosure. The reception behavior of the UE may be configured to restricted to non-SBFD symbols only. Multiple PDSCHs (e.g., 5 PDSCHs in slot#3 to slot#7) may be configured to the UE by the DCI, and the HARQ process ID indicated by the DCI may be n. Since the first PDSCH (e.g., in slot#3) is associated with SBFD symbol, the HARQ process ID may not be applied to the first PDSCH. Since the second PDSCH (e.g., in slot#4) is associated with a UL symbol, the HARQ process ID may not be applied to the second PDSCH. Since the third PDSCH (e.g., in slot#5) is associated with a DL symbol, the HARQ process ID may be applied to the third PDSCH. Since the fourth PDSCH (e.g., in slot#6) is associated with a DL symbol, the HARQ process ID may be incremented by 1 for the fourth PDSCH. Since the fifth PDSCH (e.g., in slot#7) is associated with a SBFD symbol, the HARQ process ID may not be incremented for the fifth PDSCH.

In one embodiment, if a PDSCH among multiple PDSCHs be scheduled by a single DCI satisfies at least one of following cases, the HARQ process number increment may be skipped for the PDSCH: Case 1: if the multiple PDSCHs reception are restricted to SBFD symbols only, and the PDSCH collides with one or more DL symbols indicated by *tdd-UL-DL-ConfigurationCommon,* or the PDSCH overlaps (e.g., partially overlap or totally overlap) with a UL subband of SBFD symbols indicated by *SBFD-ConfigurationCommon;* or Case 2: if the multiple PDSCHs reception are restricted to non-SBFD symbols only, and the PDSCH collides with one or more UL symbols indicated by *tdd-UL-DL-ConfigurationCommon* or *tdd-UL-DL-ConfigurationDedicated,* or the PDSCH collides with one or more SBFD symbols indicated by *SBFD-ConfigurationCommon.*

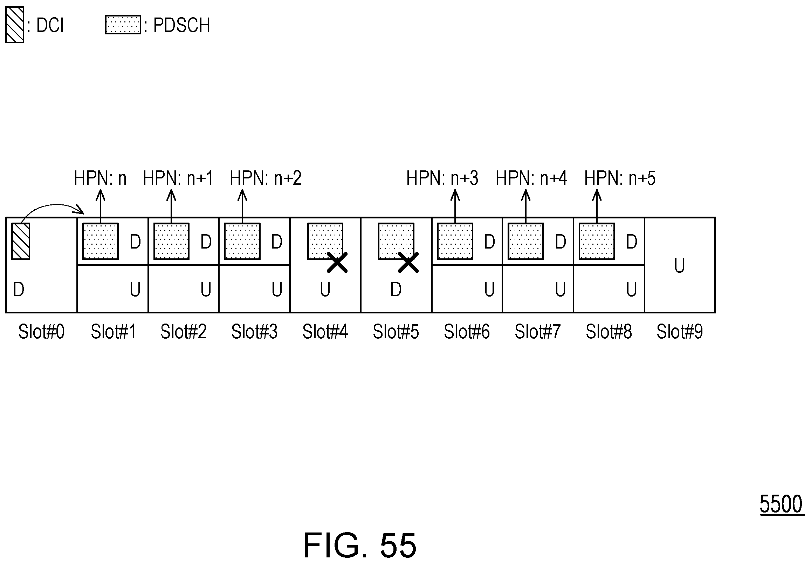

FIG. 55 illustrates a schematic diagram 5500 of HARQ feedback according to one embodiment of the present disclosure. The reception behavior of the UE may be configured to restricted to SBFD symbols only. Multiple PDSCHs (e.g., 8 PDSCHs in slot#1 to slot#8) may be configured to the UE by the DCI, and the HARQ process ID (HPN) indicated by the DCI may be n. Since the PDSCH in slot#4 is collided with UL symbols, the HARQ process number increment may be skipped for the PDSCH in slot#4. Since the multiple PDSCHs reception are restricted to SBFD symbols, the HARQ process number increment may be skipped for the PDSCH in slot#5.

In one embodiment, if a PUSCH among multiple PUSCHs scheduled by a single DCI satisfies at least one of following cases, the UE may not transmit the PUSCH: Case 1: if the multiple PUSCHs is restricted to SBFD symbols only, and the PUSCH collides with one or more UL symbols indicated by *tdd-UL-DL-ConfigurationCommon,* or the PUSCH overlaps (e.g., partially overlap or totally overlap) with a DL subband of one or more SBFD symbols indicated by *SBFD-ConfigurationCommon;* or Case 2: if the multiple PUSCHs is restricted to non-SBFD symbols only, and the PUSCH collides with one or more DL symbols indicated by *tdd-UL-DL-ConfigurationCommon* or *tdd-UL-DL-ConfigurationDedicated,* or the PUSCH collides with one or more SBFD symbols indicated by *SBFD-ConfigurationCommon.*

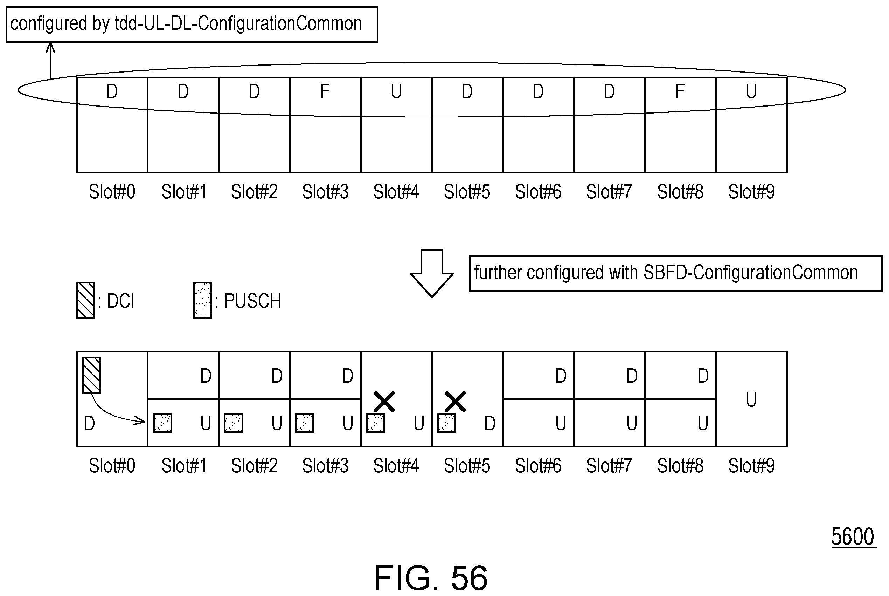

FIG. 56 illustrates a schematic diagram 5600 of PUSCH transmission according to one embodiment of the present disclosure. A UE may be configured with *tdd-UL-DL-ConfigurationCommon,* and the UE may determine the symbol types (e.g., "D", "U", or "F") of the slots accordingly. The UE may further be configured with *SBFD-ConfigurationCommon,* and the UE may determine the symbol types of the slots accordingly, wherein the symbol types of the slots may include a non-SBFD symbol type and a SBFD symbol type. Multiple PUSCHs (e.g., 6 PUSCHs) may be scheduled by a single DCI. The multiple PUSCHs transmission may be restricted to SBFD symbols only.

Slot#1 and slot#2 are configured as a DL slot by *tdd-UL-DL-ConfigurationCommon,* and are further configured as SBFD slots by *SBFD-ConfigurationCommon.* Slot#3 is configured as a flexible slot by *tdd-UL-DL-ConfigurationCommon,* and is further configured as a SBFD slot by *SBFD-ConfigurationCommon.* Slot#4 is configured as a UL slot by *tdd-UL-DL-ConfigurationCommon,* and is further configured as a non-SBFD slot by *SBFD-ConfigurationCommon.* Slot#5 is configured as a DL slot by *tdd-UL-DL-ConfigurationCommon,* and is further configured as a non-SBFD slot by *SBFD-ConfigurationCommon.* Since the multiple PUSCHs is restricted to SBFD symbol only, the PUSCHs in slot#4 or slot#5 may not be transmitted by the UE.

Assume that the UE is scheduled with multiple PUSCHs by a DCI, and the multiple PUSCHs are restricted to non-SBFD symbol only. The HARQ process ID indicated by the DCI may be applied to the first PUSCH not overlapping with a DL symbol, a symbol of an SS/physical broadcast channel (PBCH) block with index provided by *ssb-PositionsInBurst,* or a SBFD symbol indicated by *SBFD-ConfiguraionCommon,* wherein the DL symbol may be indicated by *tdd-UL-DL-ConfigurationCommon* or *tdd-UL-DL-ConfigurationDedicated* (if provided). The HARQ process ID may be incremented by 1 for each subsequent PUSCH in the scheduled order. The HARQ process ID may be updated based on a modulo operation (if needed). The HARQ process ID may not be incremented for one or more PUSCHs not transmitted if at least one of the symbols indicated by the indexed row of the used resource allocation table in the slot overlaps with a DL symbol, a symbol of an SS/PBCH block with index provided by *ssb-PositionsInBurst,* or a SBFD symbol indicated by *SBFD-ConfiguraionCommon,* wherein the DL symbol may be indicated by *tdd-UL-DL-ConfigurationCommon* or *tdd-UL-DL-ConfigurationDedicated* (if provided).

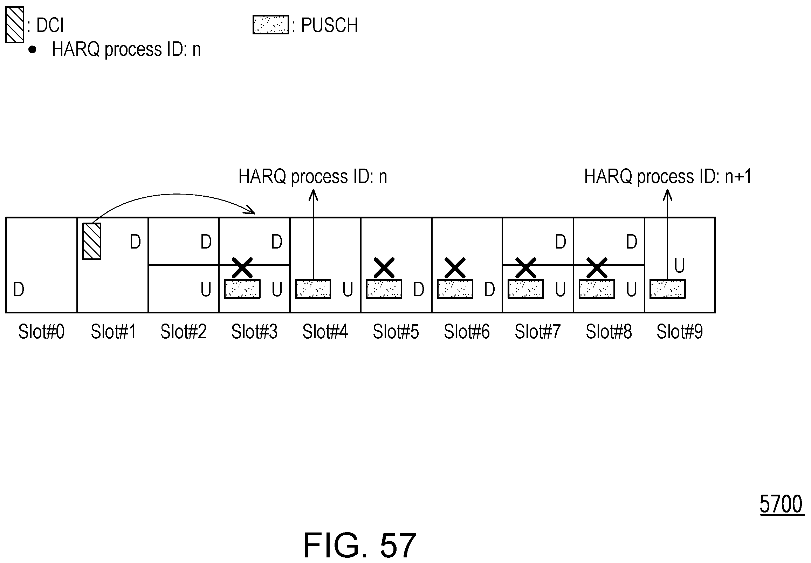

FIG. 57 illustrates a schematic diagram 5700 of HARQ feedback according to one embodiment of the present disclosure. The transmission behavior of the UE may be configured to restricted to non-SBFD symbols only. Multiple PUSCH (e.g., 7 PUSCHs in slot#3 to slot#9) may be configured to the UE by the DCI, and the HARQ process ID (HPN) indicated by the DCI may be n. Since the first PUSCH (e.g., in slot#3) is associated with a SBFD symbol, the HARQ process ID may not be applied to the first PUSCH. Since the second PUSCH (e.g., in slot#4) is associated with a UL symbol, the HARQ process ID may be applied to the second PUSCH. Since the third PUSCH and the fourth PUSCH (e.g., in slot#5 and slot#6) are associated with DL symbols, the HARQ process ID may not be incremented for those PUSCHs. Since the fifth PUSCH and the sixth PUSCH (e.g., in slot#7 and slot#8) are associated with SBFD symbols, the HARQ process ID may not be incremented for those PUSCHs. Since the seventh PUSCH (e.g., in slot#9) is associated with a UL symbol, the HARQ process ID may be incremented by 1 for the seventh PUSCH.

Assume that the UE is scheduled with multiple PUSCHs by a DCI, and the multiple PUSCHs are restricted to SBFD symbol only. The HARQ process ID indicated by the DCI may be applied to the first PUSCH not overlapping with a DL symbol or a UL symbol, or a symbol of an SS/PBCH block with index provided by ssb-PositionsInBurst, or not overlapping with a DL subband indicated by SBFD-ConfiguraionCommon, wherein the DL symbol or the UL symbol may be indicated by *tdd-UL-DL-ConfigurationCommon* or *tdd-UL-DL-Configuration-Dedicated* (if provided). The HARQ process ID is then incremented by 1 for each subsequent PUSCH in the scheduled order. The HARQ process ID may be updated based on a modulo operation (if needed). The HARQ process ID may not be incremented for one or more PUSCHs not transmitted if at least one of the symbols indicated by the indexed row of the used resource allocation table in the slot overlaps with a DL symbol or a UL symbol, or a symbol of an SS/PBCH block with index provided by *ssb-PositionsInBurst,* or overlaps (e.g., partially overlap or totally overlap ) with a DL subband indicated by *SBFD-ConfiguraionCommon,* wherein the DL symbol or the UL symbol may be indicated by *tdd-UL-DL-ConfigurationCommon* or *tdd-UL-DL-Configuration-Dedicated* (if provided).

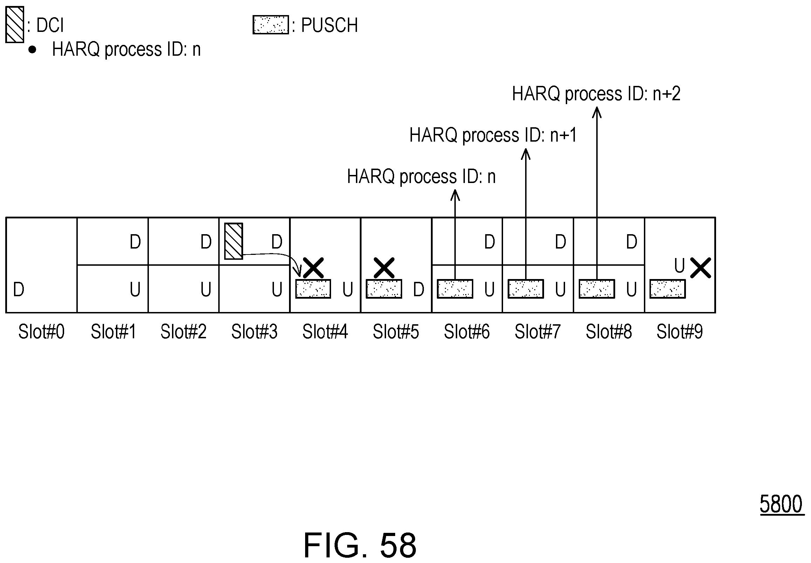

FIG. 58 illustrates a schematic diagram 5800 of HARQ feedback according to one embodiment of the present disclosure. The transmission behavior of the UE may be configured to restricted to SBFD symbols only. Multiple PUSCH (e.g., 6 PUSCHs in slot#4 to slot#9) may be configured to the UE by the DCI, and the HARQ process ID (HPN) indicated by the DCI may be n. Since the first PUSCH (e.g., in slot#4) is associated with a UL symbol, the HARQ process ID may not be applied to the first PUSCH. Since the second PUSCH (e.g., in slot#5) is associated with a DL symbol, the HARQ process ID may not be applied to the second PUSCH. Since the third PUSCH (e.g., in slot#6) is associated with a SBFD symbol, the HARQ process ID may be applied to the third PUSCH. Since the fourth PUSCH (e.g., in slot#7) is associated with a SBFD symbol, the HARQ process ID may be incremented by 1 for the fourth PUSCH. Since the fifth PUSCH (e.g., in slot#8) is associated with a SBFD symbol, the HARQ process ID may be incremented by 1 for the fifth PUSCH. Since the sixth PUSCH (e.g., in slot#9) is associated with a UL symbol, the HARQ process ID may not be incremented for the sixth PUSCH.

In one embodiment, if a PUSCH among multiple PUSCHs scheduled by a single DCI satisfies at least one of following cases, the HARQ process number increment may be skipped for the PUSCH: Case 1: if the multiple PUSCHs is restricted to SBFD symbols only, and the PUSCH collides with one or more UL symbols indicated by *tdd-UL-DL-ConfigurationCommon,* or the PUSCH overlaps (e.g., partially overlap or totally overlap) with a DL subband of one or more SBFD symbols indicated by *SBFD-ConfigurationCommon*; or Case 2: if the multiple PDSCHs is restricted to non-SBFD symbols only, and the PUSCH collides with one or more DL symbols indicated by *tdd-UL-DL-ConfigurationCommon* or *tdd-UL-DL-ConfigurationDedicated,* or the PUSCH collides with one or more SBFD symbols indicated by *SBFD-ConfigurationCommon.*

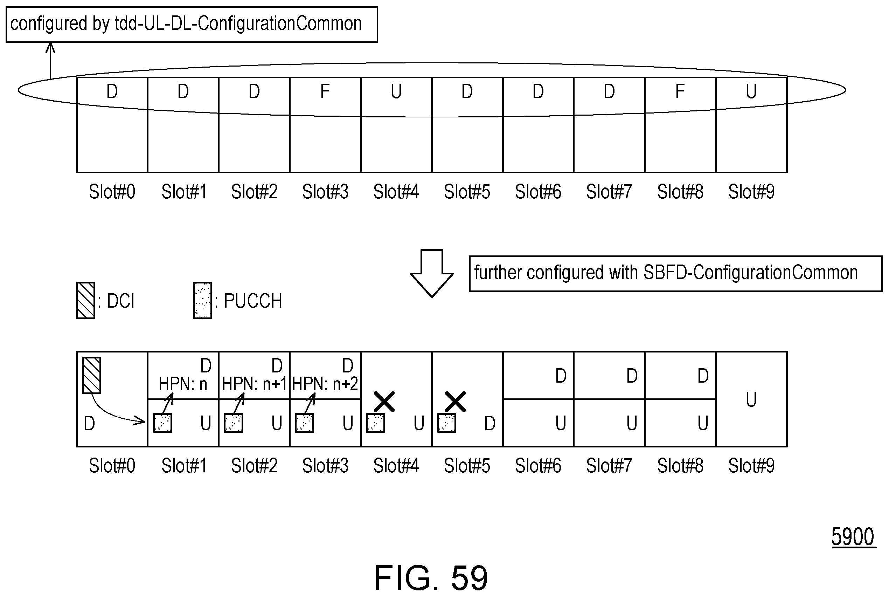

FIG. 59 illustrates a schematic diagram 5900 of PUSCH transmission according to one embodiment of the present disclosure. A UE may be configured with *tdd-UL-DL-ConfigurationCommon,* and the UE may determine the symbol types (e.g., "D", "U", or "F") of the slots accordingly. The UE may further be configured with *SBFD-ConfigurationCommon,* and the UE may determine the symbol types of the slots accordingly, wherein the symbol types of the slots may include a non-SBFD symbol type and a SBFD symbol type. Multiple PUSCHs (e.g., 5 PUSCHs) may be scheduled by a single DCI. The multiple PUSCHs transmission may be restricted to SBFD symbols only.

Slot#1 and slot#2 are configured as a DL slot by *tdd-UL-DL-ConfigurationCommon,* and are further configured as SBFD slots by *SBFD-ConfigurationCommon.* Slot#3 is configured as a flexible slot by *tdd-UL-DL-ConfigurationCommon,* and is further configured as a SBFD slot by *SBFD-ConfigurationCommon.* Slot#4 is configured as a UL slot by *tdd-UL-DL-ConfigurationCommon,* and is further configured as a non-SBFD slot by *SBFD-ConfigurationCommon.* Slot#5 is configured as a DL slot by *tdd-UL-DL-ConfigurationCommon,* and is further configured as a non-SBFD slot by *SBFD-ConfigurationCommon.* Since the multiple PUSCHs is restricted to SBFD symbol only, the HARQ process number increment may be skipped for the PUSCHs in slot#4 or slot#5.

In one embodiment, the UE may be configured with a type-1 HARQ-ACK codebook. For a DCI scheduling multi-PDSCHs reception, a first set of PDSCHs of the multi-PDSCHs may be associated with a first symbol type and a second set of PDSCHs of the multi-PDSCHs may be associated with a second symbol type. HARQ-ACK information bit(s) corresponding to multi-PDSCHs scheduled by the DCI may be transmitted with a single PUCCH in a slot that is determined based on $K_1$, where $K_1$ (indicated by the *PDSCH-to-HARQ_feedback* timing indicator field in the DCI or provided by *dl-DataToUL-ACK* if the *PDSCH-to-HARQ_feedback* timing indicator field is not present in the DCI) may indicate the slot offset between the slot of the last PDSCH scheduled by the DCI and the slot carrying the HARQ-ACK information corresponding to the scheduled multi-PDSCHs. If the last PDSCH is associated with the first symbol type, the quasi co-location (QCL) assumption indicated by the DCI may be used to receive the first set of PDSCHs, and the UE may not receive the second set of PDSCHs. If the last PDSCH is associated with the second symbol type, the QCL assumption indicated by the DCI may be used to receive the second set of PDSCHs, and the UE may not receive the first set of PDSCHs.

In one embodiment, if the DCI does not include the transmission configuration indicator (TCI) field, the UE may use the QCL assumption of the DCI reception or default beam to perform DL reception, instead of using the QCL assumption indicated by the DCI.

In one embodiment, the PDSCH scheduling offset for the first set of PDSCHs and the second set of PDSCHs may be larger than or equal to *timeDuration-ForQCL.*

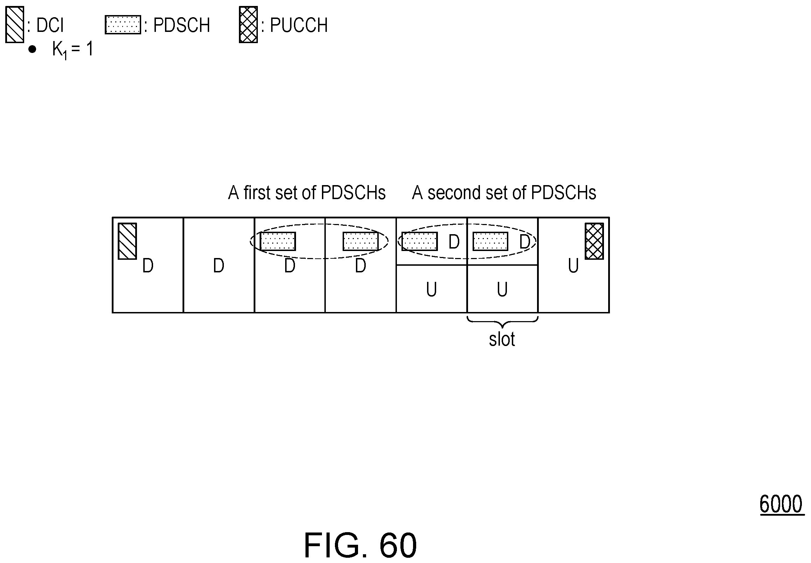

FIG. 60 illustrates a schematic diagram 6000 of determining QCL assumption according to one embodiment of the present disclosure. The UE may be configured with a type-1 HARQ-ACK codebook. A DCI may schedule multiple PDSCHs (e.g., 4 PDSCHs) for the UE, and the DCI may include a *PDSCH-to-HARQ_feedback* timing indicator field indicating $K_1 = 1$. Since the last PDSCH scheduled by the DCI is associated with the SBFD symbol type, the UE may use the QCL assumption indicated by the DCI to receive the second set of PDSCHs associated with the SBFD symbol type, and the UE may not receive the first set of PDSCHs associated with the non-SBFD symbol type.

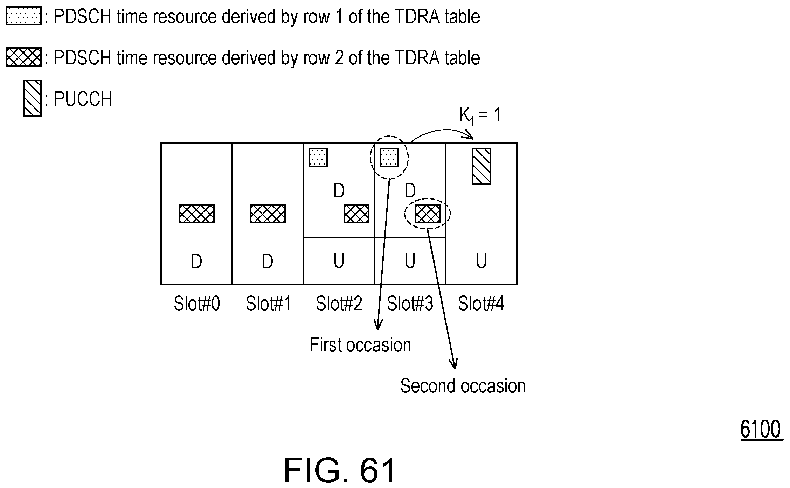

In one embodiment, if one or more unexpected rows of a TDRA table are processed the pruning procedure, the occasion corresponding to the unexpected rows may be considered as a redundant occasion. FIG. 61 illustrates a schematic diagram 6100 of redundant occasion according to one embodiment of the present disclosure. A TDRA table and a $K_1$ value (e.g., $K_1 = 1$) may be configured to the UE, wherein the TDRA table may include row 1 and row 2. Assume that the unexpected row 1 is processed by the pruning procedure, the first occasion corresponding to row 1 may be considered as a redundant occasion for the second occasion corresponding to row 2.

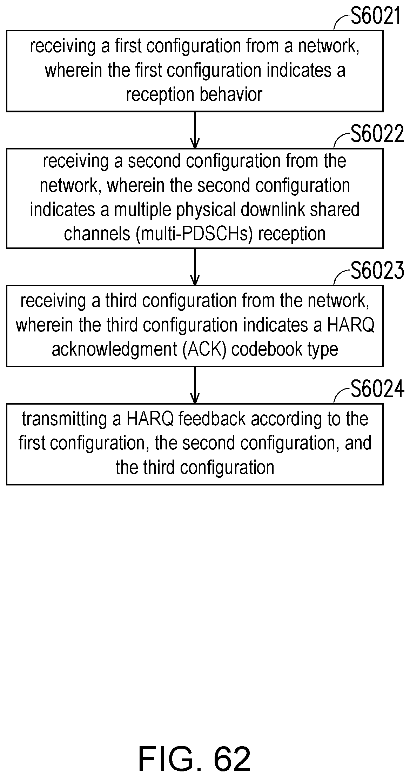

FIG. 62 illustrates a flowchart of a method of HARQ feedback according to one embodiment of the present disclosure, wherein the method may be implemented by a UE. In step S6021, receiving a first configuration from a network, wherein the first configuration indicates a reception behavior. In step S6022, receiving a second configuration from the network, wherein the second configuration indicates a multiple physical downlink shared channels (multi-PDSCHs) reception. In step S6023, receiving a third configuration from the network, wherein the third configuration indicates a HARQ acknowledgment (ACK) codebook type. In step S6024, transmitting a HARQ feedback according to the first configuration, the second configuration, and the third configuration.

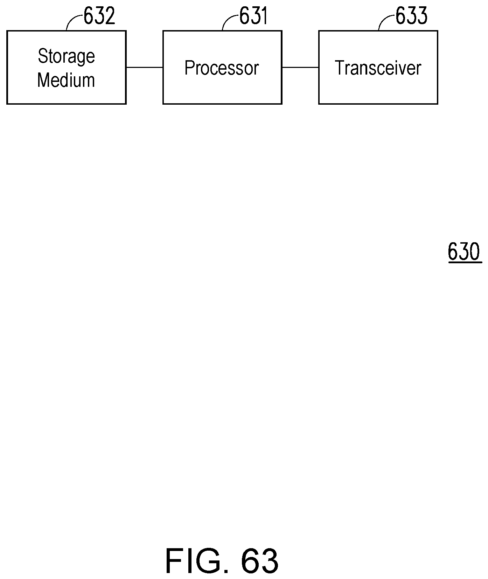

FIG. 63 illustrates a schematic diagram of a UE 630 according to one embodiment of the present disclosure, wherein the UE 630 may implement the methods described in figures 1-62 as well as their exemplary embodiments and alternative variations. The UE 630 may include a processor 631, a storage medium 632, and a transceiver 633. The processor 631 is coupled to the storage medium 632 and the transceiver 633.

The processor 631 could be implemented by using programmable units such as a microprocessor, a micro-controller, a digital signal processor (DSP), a field programmable gate array (FPGA), etc. the functions of the processor 631 may also be implemented with separate electronic devices or ICs. It should be noted that the functions of processor 631 may be implemented with either hardware or software.

The storage medium 632 may be, for example, any type of fixed or removable random access memory (RAM), a read-only memory (ROM), a flash memory, a hard disc drive (HDD), a solid state drive (SSD) or similar element, or a combination thereof, configured to record a plurality of modules or various applications executable by the processor 631.

The transceiver 633 may be configured to transmit and receive signals respectively in the radio frequency. The transceiver 633 may also perform operations such as low noise amplifying, impedance matching, frequency mixing, up or down frequency conversion, filtering, amplifying, and so forth. The transceiver 633 may include one or more digital-to-analog (D/A) converters or analog-to-digital (A/D) converters which are configured to convert from an analog signal format to a digital signal format during uplink signal processing and from a digital signal format to an analog signal format during downlink signal processing. The transceiver 633 may include an antenna array which may include one or more antennas to transmit and receive omnidirectional antenna beams or directional antenna beams.

In one embodiment, a UE may perform a DL reception, and the DL reception may across M symbol types. The UE may create more than one HARQ-ACK bit (e.g., M HARQ-ACK bits) for the DL reception.

The concept of "different symbol types" may apply to: ISAC (e.g., first symbol type for communication only and second symbol type for both communication and sensing).

The concept of "different symbol types" may apply to: network energy saving (NES). For example, different symbol types may include a first symbol type in power saving mode and a second symbol type in normal mode.

The concept of "different symbol types" may apply to: a first SBFD symbol type and a second SBFD symbol type, wherein different subband frequency resources may across the first SBFD symbol type and the second SBFD symbol type.

The concept of "different symbol types" may apply to: a first symbol with a first interference level and a second symbol with a second interference level.

A gNodeB (e.g., next Generation Node B) in the present disclosure may be a cell, a serving cell, a transmission reception point (TRP), an unlicensed cell, an unlicensed serving cell, an unlicensed TRP, a gNB, an evolved NodeB (eNodeB), an eNB, ..., but not limited herein.

Combinations of embodiments disclosed in the present disclosure is not precluded.

Based on the above, the present disclosure provides enhancements for the HARQ feedback scheme. If time resources of multi-PDSCHs reception are allocated across different symbol types (e.g., SBFD symbol type or non-SBFD symbol type), separate HARQ-ACK bits may be allocated for the different symbol types based on the configuration. The UE may determine whether to perform binary AND operation on the HARQ-ACK bit based on the corresponding symbol type, and determine the value of the HARQ-ACK bit accordingly. Due to separate bit allocations for the different symbol types, if the decoding result of PDSCHs of a specific symbol type fails, the HARQ-NACK information for the PDSCHs of the specific symbol type may not affect the transmission efficiency of the other symbol type.

**Claims**

1. A method of hybrid automatic repeat request, HARQ, feedback, used by a user equipment (630), comprising:

   receiving a first configuration from a network, wherein the first configuration indicates a reception behavior;
   receiving a second configuration from the network, wherein the second configuration indicates a multiple physical downlink shared channels, multi-PDSCHs, reception;
   receiving a third configuration from the network, wherein the third configuration indicates a HARQ acknowledgment, ACK, codebook type; and
   transmitting a HARQ feedback according to the first configuration, the second configuration, and the third configuration.

2. The method according to claim 1, further comprising:

   determining whether the reception behavior is restricted to a first symbol type only;
   in response to the reception behavior being restricted to the first symbol type only, not receiving a first physical downlink shared channel (PDSCH) associated with a second symbol type, or determining whether a frequency domain resource of a second PDSCH associated with the first symbol type is overlapped with an uplink resource; and
   in response to the frequency domain resource being overlapped with the uplink resource, not receiving the second PDSCH.

3. The method according to claim 1, further comprising: receiving an offset set and a time domain resource allocation, TDRA, table (410, 460, 470, 480, 490), wherein the reception behavior is associated with a first symbol type and a second symbol type, and the HARQ ACK codebook type is a type 1 HARQ-ACK codebook type.

4. The method according to claim 3, further comprising: allocating two bits for an occasion for a candidate physical downlink shared channel (PDSCH) reception, wherein the occasion is associated with a type-1 HARQ-ACK codebook.

5. The method according to claim 4, further comprising:

   determining whether at least one physical downlink shared channel (PDSCH) of the multi-PDSCHs reception is associated with the first symbol type or the second symbol type;
   in response to at least one first PDSCH being associated with the first symbol type, performing binary AND operation on at least one first HARQ-ACK information bit corresponding to the at least one first PDSCH to determine a first bit of the two bits;
   in response to no PDSCH being associated with the first symbol type, setting the first bit as a negative-acknowledgment (NACK);
   in response to at least one second PDSCH being associated with the second symbol type, performing binary AND operation on at least one second HARQ-ACK information bit corresponding to the at least one second PDSCH to determine a second bit of the two bits; and
   in response to no PDSCH being associated with the second symbol type, setting the second bit as a NACK.

6. The method according to claim 3, further comprising:

   determining whether time resources of the multi-PDSCHs reception are allocated across the first symbol type and the second symbol type, wherein the time resources are derived according to an offset of the offset set and at least one row of the TDRA table (410, 460, 470, 480, 490);
   in response to the time resources being allocated across the first symbol type and the second symbol type, allocating two bits for an occasion for a candidate physical downlink shared channel (PDSCH) reception associated with a type-1 HARQ-ACK codebook; and
   in response to the time resources not being allocated across the first symbol type and the second symbol type, allocating one bit for the occasion for the candidate PDSCH reception associated with the type-1 HARQ-ACK codebook.

**7.** The method according to claim 3, further comprising:

for an occasion for at least one candidate physical downlink shared channel (PDSCH) reception associated with a type-1 HARQ-ACK codebook, determining whether time resources of the multi-PDSCHs reception are allocated across the first symbol type and the second symbol type, wherein the time resources are derived by at least one row of the TDRA table (410, 460, 470, 480, 490), wherein the at least one row corresponds to at least one PDSCH associated with the occasion;
in response to the time resources being allocated across the first symbol type and the second symbol type, allocating two bits for the occasion; and
in response to the time resources not being allocated across the first symbol type and the second symbol type, allocating one bit for the occasion.

**8.** The method according to claim 1, further comprising: receiving a first offset set, a second offset set, a first time domain resource allocation (TDRA) table (410, 460, 470, 480, 490), and a second TDRA table (410, 460, 470, 480, 490), wherein the reception behavior is associated with a first symbol type and a second symbol type, and the HARQ ACK codebook type is a type-1 HARQ-ACK codebook type.

**9.** The method according to claim 8, further comprising:

determining a first sub-codebook according to the first offset set and the first TDRA table (410, 460, 470, 480, 490); and
determining a second sub-codebook according to the second offset and the second TDRA table (410, 460, 470, 480, 490).

**10.** The method according to claim 9, further comprising: concatenating the first sub-codebook and the second sub-codebook to generate the type-1 HARQ-ACK codebook.

**11.** The method according to claim 1, further comprising: receiving a number of bundling groups and a value N, wherein the reception behavior is associated with a first symbol type and a second symbol type, and the HARQ ACK codebook type is a type-2 HARQ-ACK codebook type, wherein N is a positive integer.

**12.** The method according to claim 11, wherein N bits of the HARQ feedback is used for at least one physical downlink shared channel, PDSCH, associated with the first symbol type of the multi-PDSCHs reception, and M-N bits of the HARQ feedback is used for at least one PDSCH associated with the second symbol type of the multi-PDSCHs reception, wherein M is the number of bundling groups.

**13.** The method according to claim 1, further comprising: receiving a first number of bundling groups and a second number of bundling groups, wherein the reception behavior is associated with a first symbol type and a second symbol type, and the HARQ ACK codebook type is a type-2 HARQ-ACK codebook type.

**14.** The method according to claim 13, wherein M1 bits of the HARQ feedback is used for at least one physical downlink shared channel, PDSCH, associated with the first symbol type of the multi-PDSCHs reception, and M2 bits of the HARQ feedback is used for at least one PDSCH associated with the second symbol type of the multi-PDSCHs reception, wherein M1 is the first number of bundling groups, and M2 is the second number of bundling groups.

**15.** A user equipment (630) for hybrid automatic repeat request, HARQ, feedback, comprising:

a transceiver (633); and
a processor (631), coupled to the transceiver (633), wherein the processor (631) is configured to:

receive a first configuration from a network via the transceiver (633), wherein the first configuration indicates a reception behavior;
receive a second configuration from the network via the transceiver (633), wherein the second configuration indicates a multiple physical downlink shared channels, multi-PDSCHs, reception;
receive a third configuration from the network via the transceiver (633), wherein the third configuration indicates a HARQ acknowledgment, ACK, codebook type; and
transmitting a HARQ feedback via the transceiver (633) according to the first configuration, the second configuration, and the third configuration.

⊞ : DCI    ⊠ : PUCCH

▦ : PDSCH received by UE1    ▨ : UL transmission by UE2

Binary AND operation may be applied to HARQ-ACK information bits corresponding to those PDSCHs

interference

Slot#1    Slot#2    Slot#3    Slot#4

Non-SBFD    SBFD

100

FIG. 1

EP 4 693 984 A1

EP 4 693 984 A1

FIG. 2

EP 4 693 984 A1

▨ : DCI ▨ : PDSCH ▨ : PUCCH

$K_1 = 2$

The 4 PDSCHs scheduled
by a single DCI

| Slot#1 | Slot#2 | Slot#3 | Slot#4 | Slot#5 | Slot#6 | Slot#7 | Slot#8 |

D   D   D   D   F   F

300

FIG. 3

FIG. 4

```
                          ┌─────────────────────────┐
                          │   For an PUCCH occasion  │
                          └─────────────────────────┘
                                      │
                                      ▼
                    ┌──────────────────────────────────────┐
                    │ Set C ( K₁ ) to the cardinality of set K₁ │  S501
                    │ Set k = 0, index of slot timing values K₁,ₖ │
                    └──────────────────────────────────────┘
                                      │
                                      ▼
                              ╱─────────────╲   S502
                      Y      ╱  while k < C ( K₁ )  ╲   N    ┌─────┐
                   ┌────────◇                        ◇──────│ END │
                   │         ╲                      ╱        └─────┘
                   │          ╲─────────────╱
                   ▼
        S503  ┌──────────────────────────────┐
              │    Set R to the set of rows    │
              │  Set C ( R ) to the cardinality of R │
              │   Set r = 0, index of row in set R  │
              └──────────────────────────────┘
```

Set C ( $K_1$ ) to the cardinality of set $K_1$
Set k = 0, index of slot timing values $K_{1,k}$ — S501

while k < C ( $K_1$ ) — S502

Set R to the set of rows
Set C ( R ) to the cardinality of R
Set r = 0, index of row in set R — S503

while r < C ( R ) — S504

Whether each PDSCH time resource derived by the row r associated with UL symbol ? — S505

r = r + 1

R = R / r

Set C ( R ) to the cardinality of R — S506

Pruning procedure — S507

create $m_k$ occasions for candidate PDSCH reception; one bit for each occasion — S508

k = k + 1

END

For SBFD operation
• Valid PDSCH
• HARQ process number

For SBFD operation, multiple HARQ-ACK information bits corresponding to different symbol types may be needed

FIG. 5

#x : PDSCH

**The first round**

Grouping {#1,#2} of the first round, then remove #1 and #2 from the TDRA table

slot

| #2 | | #4 | #8 |

| #1 | #3 | | #5 | #6 | #7 |

The smallest index of the first round, save it as Reference Index#0

**The second round**

Grouping {#3,#4} of the second round, then remove #3 and #4 from the TDRA table

slot

| #2 | | #4 | #8 |

| #1 | #3 | | #5 | #6 | #7 |

The smallest index of the second round, save it as Reference Index#1

**The third round**

Grouping {#5,#8} of the third round, then remove #5 and #8 from the TDRA table

slot

| #2 | | #4 | #8 |

| #1 | #3 | | #5 | #6 | #7 |

The smallest index of the third round, save it as Reference Index#2

**The forth round**

Grouping {#6} of the forth round, then remove #6 from the TDRA table

slot

| #2 | | #4 | #8 |

| #1 | #3 | | #5 | #6 | #7 |

The smallest index of the forth round, save it as Reference Index#3

**The fifth round**

Grouping {#7} of the fifth round, then remove #1 and #2 from the TDRA table

slot

| #2 | | #4 | #8 |

| #1 | #3 | | #5 | #6 | #7 |

The smallest index of the fifth round, save it as Reference Index#4

600

FIG. 6

EP 4 693 984 A1

#x : PDSCH

slot

#2 #4 #8

#1 #3 #5 #6 #7

Reference Index#0
Reference Index#1
Reference Index#2
Reference Index#3
Reference Index#4

HARQ-ACK occasion#0

HARQ-ACK occasion#1

HARQ-ACK occasion#2

HARQ-ACK occasion#3

HARQ-ACK occasion#4

slot

#2 #4 #8

#1 #3 #5 #6 #7

HARQ-ACK occasion#0, ACK

HARQ-ACK occasion#1, NACK

HARQ-ACK occasion#2, ACK

HARQ-ACK occasion#3, NACK

HARQ-ACK occasion#4, NACK

UE may report {ACK, NACK, ACK, NACK, NACK} as HARQ-ACK information bits for the slot, e.g., for a $K_1$ value.

700

FIG. 7

▥ : DCI

| PDSCH#0 | PDSCH#1 | PDSCH#2 | PDSCH#3 | PDSCH#4 | PDSCH#5 | PDSCH#6 | PDSCH#7 |

Binary AND operation

800

FIG. 8

⫴ : DCI

| PDSCH#0 | PDSCH#1 | PDSCH#2 | PDSCH#3 | PDSCH#4 | PDSCH#5 | PDSCH#6 | PDSCH#7 |

Group#0

( PDSCH#0 / PDSCH#4 )

Binary AND operation

Group#1

( PDSCH#1 / PDSCH#5 )

Binary AND operation

Group#2

( PDSCH#2 / PDSCH#6 )

Binary AND operation

Group#3

( PDSCH#3 / PDSCH#7 )

Binary AND operation

900

FIG. 9

1000

|          | Slot#1 | Slot#2 | Slot#3 | Slot#4 |
|----------|--------|--------|--------|--------|
| Slot#0   | D      | D      | D      | D      |
|          |        |        | U      | U      |

Non-SBFD | SBFD

□ : DCI

FIG. 10

FIG. 11

1100

Frequency range

First symbol type

second symbol type

time

▨ : DCI

Slot#0   Slot#1   Slot#2   Slot#3   Slot#4

Both of communication
and sensing

Communication only

1200

FIG. 12

EP 4 693 984 A1

FIG. 13

1300

FIG. 14

1400

EP 4 693 984 A1

FIG. 15

1500

```
                    ┌─────────────────────────────┐
                    │  UE is configured with type-1│ ─S1601
                    │     HARQ-ACK codebook        │
                    └─────────────────────────────┘
                                  │
                                  ▼
                    ┌─────────────────────────────┐
                    │   For an PUCCH occasion:     │ ─S1602
                    │ Set k =0, index of slot      │
                    │   timing values K_{1,k}      │
                    └─────────────────────────────┘
```

For an PUCCH occasion:
Set k =0, index of slot timing values $K_{1,k}$

while k < C ( $K_1$ )

END

After processing type-1 HARQ-ACK codebook pseudocode, there may have $m_k$ occasions for candidate PDSCH reception

Condition A

Each occasion has 2 bits

Each occasion has 1 bit

k = k + 1

FIG. 16

: PUCCH

PDSCH time resource derived by a first row of the TDRA table

For $K_1 = 2$

| D | D | U | U | D | D | D | D | U | U |
| Slot#1 | Slot#2 | Slot#3 | Slot#4 | Slot#5 | Slot#6 | Slot#7 | Slot#8 | Slot#9 | Slot#10 |

PDSCH time resource derived by a second row of the TDRA table

1700

FIG. 17

EP 4 693 984 A1

: DCI    : PUCCH

$K_1 = 2$

Binary AND operation to create a first HARQ-ACK bit

PUCCH occasion for those 4 PDSCHs

| D | D | D<br>U | D<br>U | D | D | D | D | U | U |
|---|---|---|---|---|---|---|---|---|---|
| Slot#1 | Slot#2 | Slot#3 | Slot#4 | Slot#5 | Slot#6 | Slot#7 | Slot#8 | Slot#9 | Slot#10 |

<u>1800</u>

FIG. 18

FIG. 19

Legend:
▦ : DCI     ▨ : PUCCH

$K_1 = 2$

create a first HARQ-ACK bit

create a second HARQ-ACK bit

PUCCH occasion for those 4 PDSCHs

| | | D | D | | | | | | |
|---|---|---|---|---|---|---|---|---|---|
| D | D | U | U | D | D | D | D | U | U |
| Slot#1 | Slot#2 | Slot#3 | Slot#4 | Slot#5 | Slot#6 | Slot#7 | Slot#8 | Slot#9 | Slot#10 |

2000

# FIG. 20

▦ : PDSCH time resource derived by row 1 of the TDRA table

▧ : PDSCH time resource derived by row 2 of the TDRA table

▨ : PUCCH

$K_1 = 1$

| | | | D | |
| D | D | D | D ▨ | |

D | U | U | U | U

Slot#0 | Slot#1 | Slot#2 | Slot#3 | Slot#4

An occasion for candidate PDSCH reception

One bit

2100

FIG. 21

EP 4 693 984 A1

▒: PDSCH time resource derived by row 1 of the TDRA table

▨: PDSCH time resource derived by row 2 of the TDRA table

▨: PUCCH

$K_1 = 2$

PDSCH time resource derived by row 2 of the TDRA table across two symbol types

| | D | D | D | ▨ |
|---|---|---|---|---|
| D | U | U | U | U |

Slot#0  Slot#1  Slot#2  Slot#3  Slot#4

An occasion for candidate PDSCH reception

Two bits

2200

FIG. 22

EP 4 693 984 A1

FIG. 23

▒ : PDSCH time resource derived by row 1 of the TDRA table    ▨ : PUCCH

▦ : PDSCH time resource derived by row 2 of the TDRA table

▨ : PDSCH time resource derived by row 3 of the TDRA table

An occasion associated with the 2 PDSCHs derived by row 1 and row 2

| | | | | |
|---|---|---|---|---|
| D | U | U | U | U |
| Slot#0 | Slot#1 | Slot#2 | Slot#3 | Slot#4 |

2400

# FIG. 24

EP 4 693 984 A1

▦ : PDSCH time resource derived by row 1 of the TDRA table      ▨ : PUCCH

▦ : PDSCH time resource derived by row 2 of the TDRA table

▨ : PDSCH time resource derived by row 3 of the TDRA table

An occasion associated with one
PDSCH derived by row 3

| Slot#0 | Slot#1 | Slot#2 | Slot#3 | Slot#4 |
| D | U | U | U | U |

2500

# FIG. 25

UE is configured with type-1 HARQ-ACK codebook — S2601

For an PUCCH occasion

Set k =0, index of slot timing values $K_{1,k}$ — S2602

while k < C ($K_1$)

N → END

Y → After processing type-1 HARQ-ACK codebook pseudocode, there may have $m_k$ occasions for candidate PDSCH reception — S2604

For an occasion for candidate PDSCH reception, there is one bit for the occasion — S2605

Condition A

N → For an occasion for candidate PDSCH reception, there is one bit for the occasion

Y → Set m =0, index of occasions $m_{k,m}$ — S2606

while m < C ($m_k$) — S2607

N → k = k + 1

Y → Condition B

Y → Occasion $m_{k,m}$ has 2 bits — S2608

N → Occasion $m_{k,m}$ has 1 bits — S2609

m = m +1

FIG. 26

FIG. 27

2700

slot

PDSCH#1

PDSCH#2

PDSCH#3

First occasion for candidate PDSCH reception

Second occasion for candidate PDSCH reception

Two bits

Two bits

2800

FIG. 28

EP 4 693 984 A1

```
┌─────────────────────────────────────────────────────────────────────┐
│  UE is configured with type-1 HARQ-ACK codebook, SBFD-ConfigurationCommon and │  ~S2901
│              pdsch-TimeDomainAllocationListForMultiPDSCH              │
└─────────────────────────────────────────────────────────────────────┘
```

S2902~
Determine a first $K_1$ set and a first row index not be associated with pdsch-TimeDomainAllocationListForMultiPDSCH

Determine a second $K_1$ set and a second row index associated with pdsch-TimeDomainAllocationListForMultiPDSCH
~S2905

S2903~
Apply the first $K_1$ set and the first row index to type-1 HARQ-ACK codebook pseudo code

Apply the second $K_1$ set and the second row index to type-1 HARQ-ACK codebook pseudo code
~S2906

S2904~
Prepare one bit for an occasion for candidate PDSCH reception to obtain a first sub-codebook

Prepare more than one bit, for an occasion for candidate PDSCH reception to obtain a second sub-codebook
~S2907

concatenate the first and the second Type-1 HARQ-ACK sub-codebooks to obtain the Type-1 HARQ-ACK codebook
~S2908

FIG. 29

EP 4 693 984 A1

▥ : DCI    ▨ : PUCCH

$K_1 = 1$

| ▥ | | PDSCH#0 | PDSCH#1 | PDSCH#2 | PDSCH#3 | PDSCH#4 | PDSCH#5 | PDSCH#6 | PDSCH#7 | | ▨ |
|---|---|---|---|---|---|---|---|---|---|---|---|
| | | | | | | D | D | D | D | | |
| D | D | D | D | D | | U | U | U | U | | U |

Slot#1  Slot#2  Slot#3  Slot#4  Slot#5  Slot#6  Slot#7  Slot#8  Slot#9  Slot#10

Group#0             Group#1             Group#2             Group#3

PDSCH#0             PDSCH#1             PDSCH#4             PDSCH#5
PDSCH#2             PDSCH#3             PDSCH#6             PDSCH#7

⇩                   ⇩                   ⇩                   ⇩

Binary AND          Binary AND          Binary AND          Binary AND
operation           operation           operation           operation

3000

FIG. 30

FIG. 31

EP 4 693 984 A1

FIG. 32

EP 4 693 984 A1

FIG. 33

EP 4 693 984 A1

: DCI     : PDSCH

slot

3400

## FIG. 34

EP 4 693 984 A1

FIG. 35

3500

: DCI    : PDSCH

HPN: n    HPN: n+1

| | D | | | | D | D | |
|---|---|---|---|---|---|---|---|---|
| | U | U | D | D | ✕ U | U | U |

slot

3600

# FIG. 36

configured with tdd-UL-DL-ConfigurationCommon

| D | D | F | D | D | U | F | D | D | U |
|---|---|---|---|---|---|---|---|---|---|
| Slot#0 | Slot#1 | Slot#2 | Slot#3 | Slot#4 | Slot#5 | Slot#6 | Slot#7 | Slot#8 | Slot#9 |

further configured with SBFD-ConfigurationCommon

: DCI

: PUCCH

FIG. 37

3700

FIG. 38

3800

EP 4 693 984 A1

configured by tdd-UL-DL-ConfigurationCommon

| D | D | D | F | U | D | D | D | F | U |
|---|---|---|---|---|---|---|---|---|---|
| Slot#0 | Slot#1 | Slot#2 | Slot#3 | Slot#4 | Slot#5 | Slot#6 | Slot#7 | Slot#8 | Slot#9 |

▨ : DCI          ▦ : PUCCH

further configured with SBFD-ConfigurationCommon

| D | D HPN: n | D HPN: n+1 | D HPN: n+2 | D HPN: n+3 | ✕ | D | D | D | U |
|---|---|---|---|---|---|---|---|---|---|
| | U | U | U | U | D | U | U | U | |
| Slot#0 | Slot#1 | Slot#2 | Slot#3 | Slot#4 | Slot#5 | Slot#6 | Slot#7 | Slot#8 | Slot#9 |

3900

FIG. 39

▥ : PDCCH    ▨ : a first PUCCH occasion    ▨ : a second PUCCH occasion

$K_1 = 2$

the $K_1$ value may indicate the slot offset between the slot of the last PDSCH associated with SBFD symbol and the slot of the second PUCCH occasion

| Slot#1 | Slot#2 | Slot#3 | Slot#4 | Slot#5 | Slot#6 | Slot#7 | Slot#8 |

the $K_1$ value may indicate the slot offset between the slot of the last PDSCH associated with non-SBFD symbol and the slot of the first PUCCH occasion

4000

FIG. 40

: PDCCH    : a first PUCCH occasion    : a second PUCCH occasion

First K$_1$ value = 1
Second K$_1$ value = 2

the first K$_1$ value may indicate the slot offset between the slot of the last scheduled PDSCH and the slot of the first PUCCH occasion

| Slot#1 | Slot#2 | Slot#3 | Slot#4 | Slot#5 | Slot#6 | Slot#7 | Slot#8 |

the second K$_1$ value may indicate the slot offset between the slot of the last scheduled PDSCH and the slot of the second PUCCH occasion

4100

FIG. 41

EP 4 693 984 A1

⫴ : PDCCH   ▨ : a first PUCCH occasion   ▧ : a second PUCCH occasion

First $K_1$ value = 1
Second $K_1$ value = 2

the second $K_1$ value may indicate the slot offset between the slot of the last PDSCH associated with SBFD symbol and the slot of the second PUCCH occasion

| D | D | D | D | D | D | U | U |
|---|---|---|---|---|---|---|---|

Slot#1  Slot#2  Slot#3  Slot#4  Slot#5  Slot#6  Slot#7  Slot#8

the first $K_1$ value may indicate the slot offset between the slot of the last PDSCH associated with non-SBFD symbol and the slot of the first PUCCH occasion

4200

FIG. 42

FIG. 43

4300

EP 4 693 984 A1

: PDCCH    : a first PUCCH occasion

: a second PUCCH occasion

| | PDSCH#0 | PDSCH#1 | PDSCH#2 | PDSCH#3 | PDSCH#4 | PDSCH#5 | PDSCH#6 | PDSCH#7 | |
|---|---|---|---|---|---|---|---|---|---|
| | | | | | D | D | D | D | |
| D | D | D | D | D | U | U | U | U | U |
| Slot#1 | Slot#2 | Slot#3 | Slot#4 | Slot#5 | Slot#6 | Slot#7 | Slot#8 | Slot#9 | Slot#10 |

The first Group#0    The first Group#1    The second Group#2    The second Group#3

PDSCH#0
PDSCH#2

Logic AND
operation

PDSCH#1
PDSCH#3

Logic AND
operation

PDSCH#4
PDSCH#6

Logic AND
operation

PDSCH#5
PDSCH#7

Logic AND
operation

4400

# FIG. 44

EP 4 693 984 A1

FIG. 45

TDRA table

| Row index | |
|---|---|
| 1 | SLIV: {3,6}, K0: 1; SLIV: {3,6}, K0: 2; SLIV: {3,6}, K0: 3; SLIV: {3,6}, K0: 4 |
| 2 | SLIV: {3,6}, K0: 1; SLIV: {3,6}, K0: 2 |
| 3 | SLIV: {3,6}, K0: 3; SLIV: {3,6}, K0: 4 |

~460

⊠ : DCI
- $m=1$
- $K_1=4$

▦ : PDSCH     ▤ : PUCCH

non-SBFD

$K_1 = 4$

| | D | D | D | | | D | D | D | |
| D | U | U | U | U | D | U | U | U | U |
| Slot#0 | Slot#1 | Slot#2 | Slot#3 | Slot#4 | Slot#5 | Slot#6 | Slot#7 | Slot#8 | Slot#9 |

4600

FIG. 46

EP 4 693 984 A1

TDRA table

| Row index | |
|---|---|
| 1 | SLIV: {3,6}, K0: 1; SLIV: {3,6}, K0: 2; SLIV: {3,6}, K0: 3; SLIV: {3,6}, K0: 4 | ~470 |
| 2 | SLIV: {3,6}, K0: 1; SLIV: {3,6}, K0: 2 |
| 3 | SLIV: {3,6}, K0: 3; SLIV: {3,6}, K0: 4 |

▨ : PDSCH scheduled by row index 1          ▥ : PDSCH scheduled by row index 2

▨ : PDSCH scheduled by row index 3          ▨ : PUCCH

4700

# FIG. 47

EP 4 693 984 A1

## TDRA table

| Row index | |
|---|---|
| 1 | SLIV: {3,6}, K0: 1; SLIV: {3,6}, K0: 2; SLIV: {3,6}, K0: 3; SLIV: {3,6}, K0: 4 |
| 2 | SLIV: {3,6}, K0: 1; SLIV: {3,6}, K0: 2 |
| 3 | SLIV: {3,6}, K0: 3; SLIV: {3,6}, K0: 4 |

~480

: DCI
- m=2
- $K_1$=2

: PDSCH          : PUCCH

SBFD          $K_1 = 2$

Slot#0  Slot#1  Slot#2  Slot#3  Slot#4  Slot#5  Slot#6  Slot#7  Slot#8  Slot#9

4800

## FIG. 48

EP 4 693 984 A1

EP 4 693 984 A1

TDRA table

| Row index | |
|---|---|
| 1 | SLIV: {3,6}, K0: 1; SLIV: {3,6}, K0: 2; SLIV: {3,6}, K0: 3; SLIV: {3,6}, K0: 4 |
| 2 | SLIV: {3,6}, K0: 1; SLIV: {3,6}, K0: 2 |
| 3 | SLIV: {3,6}, K0: 3; SLIV: {3,6}, K0: 4 |

~490

▒ : PDSCH scheduled by row index 1          ▥ : PDSCH scheduled by row index 2

▨ : PDSCH scheduled by row index 3          ▦ : PUCCH

$K_1 = 1$

| | | | | | | | | | |
|---|---|---|---|---|---|---|---|---|---|
| | D | D | D | | | X X<br>D | D | D | |
| D | U | U | U | U | D | U | U | U | U |
| Slot#0 | Slot#1 | Slot#2 | Slot#3 | Slot#4 | Slot#5 | Slot#6 | Slot#7 | Slot#8 | Slot#9 |

4900

FIG. 49

EP 4 693 984 A1

FIG. 50

5000

FIG. 51

EP 4 693 984 A1

FIG. 52

5200

FIG. 53

5300

5400

: DCI

: PDSCH

● HARQ process ID: n

HARQ process ID: n

HARQ process ID: n+1

| Slot#0 | Slot#1 | Slot#2 | Slot#3 | Slot#4 | Slot#5 | Slot#6 | Slot#7 | Slot#8 | Slot#9 |
|--------|--------|--------|--------|--------|--------|--------|--------|--------|--------|
| D | D | D / U | D / U | U | D | D | D / U | D / U | U |

FIG. 54

EP 4 693 984 A1

FIG. 55

5500

configured by tdd-UL-DL-ConfigurationCommon

| D | D | D | F | U | D | D | D | F | U |
|---|---|---|---|---|---|---|---|---|---|
| Slot#0 | Slot#1 | Slot#2 | Slot#3 | Slot#4 | Slot#5 | Slot#6 | Slot#7 | Slot#8 | Slot#9 |

further configured with SBFD-ConfigurationCommon

▨ : DCI        ▨ : PUSCH

| D |   | D | D | D | × | × |   | D | D | D | U |
|---|---|---|---|---|---|---|---|---|---|---|---|
|   | ▨ U | ▨ U | ▨ U | ▨ U | ▨ D | U | U | U |   |

| Slot#0 | Slot#1 | Slot#2 | Slot#3 | Slot#4 | Slot#5 | Slot#6 | Slot#7 | Slot#8 | Slot#9 |

5600

# FIG. 56

EP 4 693 984 A1

**FIG. 57**

5700

EP 4 693 984 A1

▨ : DCI        ▨ : PUSCH

• HARQ process ID: n

HARQ process ID: n+2

HARQ process ID: n+1

HARQ process ID: n

| | | D | D | ▨ | D | ✕ | ✕ | | D | | D | | D | | ✕ |
|---|---|---|---|---|---|---|---|---|---|---|---|---|---|---|---|
| D | | U | | U | | U | ▨ U | ▨ D | ▨ U | ▨ U | ▨ U | ▨ U |  | U | ▨ |

Slot#0   Slot#1   Slot#2   Slot#3   Slot#4   Slot#5   Slot#6   Slot#7   Slot#8   Slot#9

5800

FIG. 58

configured by tdd-UL-DL-ConfigurationCommon

| D | D | D | F | U | D | D | D | F | U |
|---|---|---|---|---|---|---|---|---|---|
| | | | | | | | | | |

Slot#0 | Slot#1 | Slot#2 | Slot#3 | Slot#4 | Slot#5 | Slot#6 | Slot#7 | Slot#8 | Slot#9

further configured with SBFD-ConfigurationCommon

▨ : DCI     ▦ : PUCCH

| | D HPN: n | D HPN: n+1 | D HPN: n+2 | ✕ | ✕ | D | D | D | |
|---|---|---|---|---|---|---|---|---|---|
| D | ▦ U | ▦ U | ▦ U | ▦ U | ▦ D | U | U | U | U |

Slot#0 | Slot#1 | Slot#2 | Slot#3 | Slot#4 | Slot#5 | Slot#6 | Slot#7 | Slot#8 | Slot#9

5900

FIG. 59

EP 4 693 984 A1

⬛ : DCI    ▦ : PDSCH    ▨ : PUCCH
● $K_1 = 1$

A first set of PDSCHs    A second set of PDSCHs

slot

6000

FIG. 60

EP 4 693 984 A1

▨ : PDSCH time resource derived by row 1 of the TDRA table

▧ : PDSCH time resource derived by row 2 of the TDRA table

▨ : PUCCH

$K_1 = 1$

D    D

D    D    U    U    U

Slot#0    Slot#1    Slot#2    Slot#3    Slot#4

First occasion

Second occasion

6100

FIG. 61

S6021

receiving a first configuration from a network,
wherein the first configuration indicates a
reception behavior

S6022

receiving a second configuration from the
network, wherein the second configuration
indicates a multiple physical downlink shared
channels (multi-PDSCHs) reception

S6023

receiving a third configuration from the network,
wherein the third configuration indicates a HARQ
acknowledgment (ACK) codebook type

S6024

transmitting a HARQ feedback according to the
first configuration, the second configuration, and
the third configuration

# FIG. 62

FIG. 63

Europäisches
Patentamt

European
Patent Office

Office européen
des brevets

**EUROPEAN SEARCH REPORT**

Application Number

EP 25 19 4524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/048295 A1 (CHOI KYUNGJUN [KR] ET AL) 8 February 2024 (2024-02-08) * paragraph [0074] - paragraph [0340] * ----- | 1-4,8-15 | INV. H04L1/1829 |
| X | US 2024/259143 A1 (NOH MINSEOK [KR] ET AL) 1 August 2024 (2024-08-01) * paragraph [0142] - paragraph [0373] * ----- | 1-3, 11-15 | |
| X | US 2024/032031 A1 (YI YUNJUNG [US] ET AL) 25 January 2024 (2024-01-25) * paragraph [0323] - paragraph [0674] * ----- | 1,3,4,15 | |
| X | US 2022/346104 A1 (YI YUNJUNG [US] ET AL) 27 October 2022 (2022-10-27) * paragraph [0367] - paragraph [1073] * ----- | 1,3,4,15 | |

**TECHNICAL FIELDS SEARCHED (IPC)**

H04L

The present search report has been drawn up for all claims

| Place of search | Date of completion of the search | Examiner |
|---|---|---|
| The Hague | 18 September 2025 | Papantoniou, Antonis |

EPO FORM 1503 03.82 (P04C01)

## ANNEX TO THE EUROPEAN SEARCH REPORT
## ON EUROPEAN PATENT APPLICATION NO.

EP 25 19 4524

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2025

| Patent document cited in search report | Publication date | Patent family member(s) | | Publication date |
|---|---|---|---|---|
| US 2024048295 A1 | 08-02-2024 | EP | 4319004 A1 | 07-02-2024 |
| | | EP | 4598193 A2 | 06-08-2025 |
| | | EP | 4601228 A1 | 13-08-2025 |
| | | JP | 7586554 B2 | 19-11-2024 |
| | | JP | 2024512745 A | 19-03-2024 |
| | | JP | 2025010252 A | 20-01-2025 |
| | | JP | 2025010269 A | 20-01-2025 |
| | | KR | 20230156836 A | 14-11-2023 |
| | | US | 2024048295 A1 | 08-02-2024 |
| | | US | 2024275529 A1 | 15-08-2024 |
| | | US | 2024275530 A1 | 15-08-2024 |
| | | WO | 2022211557 A1 | 06-10-2022 |
| US 2024259143 A1 | 01-08-2024 | EP | 4412123 A1 | 07-08-2024 |
| | | JP | 2024538138 A | 18-10-2024 |
| | | KR | 20230052842 A | 20-04-2023 |
| | | KR | 20230142423 A | 11-10-2023 |
| | | KR | 20230142424 A | 11-10-2023 |
| | | KR | 20230142683 A | 11-10-2023 |
| | | US | 2024259143 A1 | 01-08-2024 |
| | | US | 2025167931 A1 | 22-05-2025 |
| | | WO | 2023063760 A1 | 20-04-2023 |
| US 2024032031 A1 | 25-01-2024 | US | 2024032031 A1 | 25-01-2024 |
| | | WO | 2022212387 A1 | 06-10-2022 |
| US 2022346104 A1 | 27-10-2022 | NONE | | |

EPO FORM P0459

For more details about this annex : see Official Journal of the European Patent Office, No. 12/82